# EUROPEAN PATENT SPECIFICATION

(11) **EP 2 392 096 B1**
(45) Date of publication and mention of the grant of the patent: **19.05.2021**
(21) Application number: 10735555.4
(22) Date of filing: 29.01.2010
(51) Int. Cl.: H04L 9/32, H04L 29/06, G06F 21/32, G06F 21/33, G07F 17/32, G06F 21/36

(54) **IMPROVEMENTS RELATING TO MULTIFUNCTION AUTHENTICATION SYSTEMS**
VERBESSERUNGEN IM ZUSAMMENHANG MIT MULTIFUNKTIONSAUTHENTIFIZIERUNGSSYSTEMEN
AMÉLIORATIONS CONCERNANT DES SYSTÈMES D'AUTHENTIFICATION MULTIFONCTIONS

(30) Priority: 30.01.2009 GB 0901589
(43) Date of publication of application: 07.12.2011
(73) Proprietor: Omarco Network Solutions Limited, Douglas IM2 4RW (GB)
(72) Inventor: Omar, Ralph Mahmoud, London SW1W 8EE (GB)
(74) Representative: Brand Murray Fuller LLP
(86) International application number: PCT/IB2010/050413
(87) International publication number: WO 2010/086827

(56) References cited:
- US-A- 5 754 654
- US-A1- 2002 099 652
- US-A1- 2004 019 518
- US-A1- 2005 262 348
- US-A1- 2006 149 843
- US-A1- 2008 002 882
- US-B1- 6 612 576
- US-B1- 7 093 130
- US-B1- 7 266 693
- US-B2- 7 263 205
- US-B2- 7 351 142

## Description

### Field of the Invention

The present invention concerns improvements relating to multifunction authentication systems and more particularly, though not exclusively, to a system for and a method of authenticating users in a secure and robust manner but utilising a low-cost network of data input and authentication terminals, such as gaming (lottery) terminals and/or Automated Teller Machines ATM's. The present invention can be used for authenticating functions, which require the user to have an account set up and those, which do not (namely anonymous functions). The present invention can be used to support authorisation and authentication of multiple diverse functions such as money transfer, gaming, prize incentive bonds, savings for the unbanked, insurance, advance insurance payments, payroll and/or cheque payment functions, utility payments and other investments on a common low-cost authentication system.

### Background of the Invention

Various different authentication systems exist for different types of function. The functions dictate the level of security required in the authentication and in the process steps required to satisfy that level of security. Also the particular type of function also dictates ease-of-use criteria, which need to be complied with to make any authentication procedure practical to implement. For example, in the case of authentication of a lottery ticket, the key criteria to be applied are ease of use in purchasing a ticket, speed of authentication and relatively low cost of generating an authenticated ticket. The need for authentication of the user is low as tickets can typically be sold anonymously without requiring the user's identity to be disclosed, such that only the ticket is authenticated and the bearer of the authentic ticket becomes entitled to any potential winnings.

Conversely, other functions require user identification. A series of examples follow: the identification and barring of problem gamblers, the sale of a financial instrument, for example a premium bond or money transfer. All these functions typically require the user's personal details to be provided and registered against that instrument to meet regulatory requirements including anti-money laundering and anti-terrorism legislation. The sale of such financial instruments, is typically carried out in secure environments where these details can be obtained confidentially and recorded at a central location for the lifetime of the instrument. Typically, the process of purchasing these types of instruments takes a considerable amount of time as not only do many details have to be provided but also supporting documentation to prove the user's identity and place of residence; such verification documents can be birth certificates, passports, identity cards, and utility bills.

A further problem with providing personal details, for example a user's name and initial and possible address, is that these details whilst useful for registration purposes, are commonly available (sometimes outside the country of issue/residence) and are susceptible to change. Thus, users typically change address over a long period of time such as 20 years. Similarly, users can change their name by deed pole at any time. This can lead to a fraud opportunity of an unscrupulous person changing their name by deed poll to the name of the valid user who purchased the ticket, for example and thereafter seeking to redeem the value of the ticket on maturity. There is, of course, also the common and prevalent problem with forged documents being used by such unscrupulous people to 'prove' their stolen identity and thereby obtain access to an account and funds. This problem stems from the reliance upon the proof of identity documents to validate a person's identity with out any further cross-check with for example a central authority being required.

The timescale for the function is also important and this has a direct bearing upon security issues and cost. Some functions have a relatively short timescale and so the quality and longevity of the ticket is designed to meet this relative timescale. Lower timescales enable the cost of the ticket and ticket issuing system to be lowered as the ticket only needs to have a subsistence (operative life) for the relatively short timescale. Higher timescales require more robust tickets and ticket-issuing systems in order to provide tickets which will have a subsistence matching that of the function. Therefore, a lottery ticket typically can be printed cheaply on thermographic paper, which degrades on average within a year because the lottery ticket will only have a functional validity life for around six months.

Also, in one but not all aspects, the required level of security for a short timescale function is lower than that for a longer timescale function. This is because the short timescale function gives less time and opportunity for an unscrupulous hacker to break into the system and attempt to overcome the security associated with the stored data. Therefore, a long-term investment bond (say for 20 years) may be more open to fraudulent hacking than a short term bond (say for one year) as it is stored for a long time in a database awaiting redemption. In this latter case, a greater amount of security is needed to address this fraud opportunity.

Many prior art authentication systems use numeric Personal Identity Numbers (PINs) or alphanumeric passwords to authenticate the user. The difficulty with these types of authentication is that their users often forget the PIN or password particularly when there is a need to remember several different PINs and passwords for different systems. In view of this difficulty, users commonly, despite warnings, try to generate the PIN or password as a memorable item such as a birth date, or a variation of a name with a limited amount of character entry for a terminal. As such, either the authentication requires a secure password/PIN carrier e.g. credit card/debit card that stores the password/PIN in an encrypted format for use with a complimentary password/PIN reader terminal and which carrier and terminal are highly expensive, or the PIN or password can be guessed through trial and error and as such the security can be compromised. This can in particular lead to long-term financial instruments being more vulnerable to bulk system hacking.

Furthermore, existing authentication systems and methods are typically not well suited to the blind or illiterate. In particular there are many countries, which have a high illiteracy rate and for such people, there is no system or method of authentication which is directed to making it easier for them to authenticate themselves to a system. Also even for literate people, some of them may not be able to or desire to have a bank account and this can cause difficulties in some authentication systems and methods when seeking to acquire a financial instrument or take part in a financial transaction.

Finally, authentication systems and methods are typically related to a single language use, mostly based on Latin-derived script. However, a significant proportion, if not the majority of the world's population, do not have a mother tongue which is based on Latin script and so use of current authentication systems is either not useable or requires assistance (which may compromise security). Often, there will be a mix between Latin script being used on the central server authentication system and local scripts being used at the terminal interface in such a way that transliteration errors can and do occur.

Some known authentication/transaction security systems are described below: US 2007-0288394 relates to a secure payment system for use in e-commerce in which customer information, such as a customer credit card number and personal information, is stored in encrypted form on a customer computer as a customer code. The encrypted customer code may be supplied to a merchant website in order to make a transaction. The merchant then forwards the customer code to an appropriate financial institution for verification. The merchant website is not provided with the customer's information in unencrypted form, thereby improving security for the customer. This document is one of many which are directed to improving security of a transaction.

US 2003-0220132 describes a system for buying lottery tickets at a point-of-sale (POS) terminal in a shop which obviates the need for a dedicated device for issuing lottery tickets and for speeding up the process of buying a lottery ticket. The POS terminal is configured to print a combined receipt and lottery ticket. The lottery data processing system is arranged to generate an authentication code, and this code is encrypted before being transmitted to the POS terminal. This document relates to improving conventional security of data transmissions between a lottery terminal and a central server.

Neither of the above known prior art documents describe anything about use of a symbol key or of a method of generating a personal authenticated transaction ticket without registering the user.

WO 2007-087352 relates to a method of encrypting and decrypting data, such as passwords, for use in transactions on the internet. The method provides a user interface capable of encrypting user authentication credentials at the point of data entry. The method also provides encryption and decryption, on computer-implemented networks, of virtually any data that may be represented by symbols such as alphanumeric, other symbols, which are typically provided by word processing or other software, and any other symbols capable of being processed on or over such networks. This allows a user to authenticate the identity of the server being accessed. This also provides protection against a user submitting sensitive personal data to fraudulent entities masquerading as a legitimate service provider (prevents phishing). This document has nothing to do with generating a personal authenticated transaction ticket by providing personal user information, which is encrypted and transmitted such that a unique transaction number is provided to the user as part of the transaction ticket itself.

US 2006-0020559 describes a uniquely punched or printed key, often in the form of a card, that is used to identify and authenticates a user during online transactions. This document relates only to authenticating online transactions through the use of one-time passwords which the user obtains through viewing portions of a matrix through the punched key. Nothing is described about use of a symbol key or of a method of generating a personal authenticated transaction ticket without registering the user. Further prior art solutions are disclosed in documents US 093 130 B1 and US 2006/149843 A1.

As criminals, and those that oppose them, have long recognised the economic cost/benefit nature of crime, it is desired to establish a level of security appropriate to the monetary value of a transaction. This level of appropriate security will shift according to the economic conditions and will dictate which transaction a criminal will attach value to, sufficient to spend time, money, and ingenuity and expose themselves to risk of getting caught. This security versus criminal efficacy and effort trade off has long been known by the cash industry where currency security devices decline in complexity and expense as the monetary value of the individual note or coin decreases. There is needed a cheap, reliable secure system based on paper which fills the gap between cash and secure pay-as-you-go systems and cheques and higher-value security documents. Such a system needs to be able to be linked into various transactional products, media and distribution channels including ATMs, central systems servers and terminals, personal PCs, automated and unmanned terminals, for a given common level security approach that will provide products that are near cash in their bearer status and near secure documents in their registered status at different times in their life cycle which will represent a new way of providing services to the banked and unbanked alike. These include Premium Bonds that resemble bearer bonds as part of their life cycle and cheques for the unbanked and cheap forms and store value cards that represent a less complex and expensive approach than high-cost manufacturing of Radio Frequency IDs (RFIDs), Chip and Pin and other like magnetic strip cards that perforce had to be supplied under highly secure conditions or from secure points of distribution.

In all these approaches, it must be born in mind that some of the methods, media and points of distribution will be carried out at and/or effected through unsecured arenas.Therefore it is highly desirable to have a unified system of security that makes it uneconomic, impractical or impossible for insiders or outsiders to fraudulently access an otherwise secure system via the weakest link of an insecure and relatively permeable backdoor.

It is desired to overcome or substantially reduce at least some of the above-described problems with existing methods of authentication and authentication systems. More particularly, what is needed is a method of authentication and an authentication system that address the above problems and limitations in a manner which makes it suitable for multiple uses which require difference often conflicting characteristics of at least low cost and relatively high security.

### Summary of Invention

Aspects of the invention are defined in the accompanying claims.

According to one aspect of the present invention there is provided a method of generating a personal authenticated transaction ticket with a registered-user redemption functionality, the method being implemented using a remote transaction information device and a central authentication system, the method comprising: receiving data at the remote transaction information device from a user, the data including: i. a symbol key comprising at least one symbol selected from a plurality of symbols; and ii. personal information identifying the user, the personal information including at least the user name; digitising and encrypting the symbol key and the personal information; transmitting the encrypted data to the central server; receiving a unique transaction number associated with the symbol key and personal information; and providing the unique transaction number to the user as part of the transaction ticket, the unique transaction number confirming the registration of the user and the authentication of the transaction ticket with the central server.

This process enables enough information to be provided by the terminal in relation to the user transaction to meet the demands of many different functions (including legal requirements) and also without taking too much time at the terminal. For example, those functions requiring a user account to be set up, such as a long-term bond, are accommodated because the user account can at least initially be set up on the basic information provided. For most functions, this level of information is sufficient. If a function dictates that further identifying information is required, then a second part of the registration procedure can be carried out in a secure location not at the same terminal, thereby preventing slowing down of the number of transactions being processed by the terminal. In some cases, this second stage of registration can be carried out at as part of the redemption stage.

The above described steps set out a first stage of the authentication process (a validation of the ticket). The second stage of the authentication process (a redemption stage) is when the holder of the transaction ticket comes to redeem that ticket. This two-stage authentication process involves, in the first stage, authentication for validation of an issued ticket being carried out and in the second stage, implemented at a later point in time, authentication for redemption of the ticket and/or the user claiming legitimate entitlement to the ticket being carried out. The ability to carry out authentication in a two-stage process and with the specific elements recited above, such as the use of a symbol key and a personal data item, enables the present invention to be applied to a wide scope of functions having a varied set of requirements. For example, the present invention can be used to provide an instrument having the dual functionality of a short-term event opportunity as well as a long-term event opportunity. Such an instrument can be a prize incentive bond having a short-term prize event and well as a long-term investment opportunity as has been described in our co-pending patent applications identified below.

Also the present invention is able to be administered using an existing plurality of low-cost networked terminals, for example gaming terminals such as lottery terminals. This enables the present invention to reach a very wide audience of people and also enables it to be operable over large geographic areas including different countries.

The encryption step may comprise applying a scrambling algorithm the data to transform the data into a form where each data element can only be understood by knowledge of the function of the scrambling algorithm.

The encrypting step may also comprise encrypting the scrambled data using a one-time encryption key, wherein the encryption process applied to the scrambled data changed each time it is used.

The personal information may comprise a minimum of surname only. This is the minimum as it enables some form of independent identity check to be carried out on the user without requiring the user to provide identity verification documents at the POS. If further personal information is required this can always be asked for and entered by the user to the terminal.

Preferably the personal information comprises surname, initial and birth date. This combination of personal information is highly advantageous as it presents an optimum balance between the need for the amount of data to be sufficient to recognise a person from a user population of millions of people for money laundering and government requirements and the need to minimise the amount of information which needs to be entered at a terminal such that total user time at the terminal can be minimised and the length of the symbol key (which typically has to be remembered) can be minimised.

For example, in the UK the most popular surname is 'SMITH' with a 0.94% occurrence in a population of 61.4 Million, namely 577,160 people. The use of this together with initial reduces the number of possible people down on average to 22,198. This coupled with birth date reduces the number down further to 61 people on average (reducing the original population down by at least a factor of 1,000,000). However, not all of these people will partake in the process as some will be children and others will be too elderly or infirm to use the service which reduces the number of names down by a factor of 3 to 20. Accordingly, this worst case scenario is greatly reduced in practice and represents a correct level of uniqueness for the functionality required. In another example, SMITH is the most popular surname in the USA with a 0.88% occurrence in a population of 304 Million. Using surname and initial and date of birth (DOB), this can be reduced down to a worst case possible 282 people, which then with the natural reduction due to exclusion of people not able to partake, reduces by a factor of 3 to 94 which represents a sufficiently small enough group to provide the required level of uniqueness. Furthermore, this personal information will almost always be known to the user without difficulty anywhere in the world and can be verified at a later date for authentication if required.

The above represents the worst-case scenario of the most popular names. However, a system embodying the present invention does not have to use the same procedure for all cases. For example, by using surname alone it may be possible to get down to a level of uniqueness for the symbol key to be effective. If the surname is not common it may provide the required level of uniqueness for the system to work. However, if the surname is common as has been expressed in the above examples, then they system can always ask the user to enter in further personal details such as initial and date of birth or require a longer symbol key to be created for that user. In this regard, by using more symbols in a symbol key, a lower level of uniqueness is required in the name. For example, using a symbol key with two symbols selected from a possible 100 gives a uniqueness level of 100 x 100 = 10,000 (assuming correct input order is maintained). Adding another symbol to the symbol key takes this to 1,000,000.

Personal information about a user can also include other information only specifically applicable to a single person, namely hair colour, eye colour, blood type or information which is more uniquely applicable for example personal genome sequence or DNA reference numbers of a user (if known).

According another aspect of the present invention there is provided a method of registering a personal transaction ticket with a registered user redemption functionality, the method being implemented using a remote device and a central authentication system, the method comprising: receiving data in an encrypted format from the remote device, the data including: i. a symbol key comprising at least one symbol selected by a user from a plurality of symbols; and ii. personal information identifying the user, the personal information comprising at least the user's name; decrypting the symbol key and the personal information; storing the received data in a user-specific account file; generating a unique transaction number corresponding to received data in the account file, the unique transaction number confirming the registration of the user and the authentication of the transaction ticket with the central server; and sending the unique transaction number associated with the account file to the remote device for provision to the user as part of the personal transaction ticket.

The decryption step may comprise applying an unscrambling algorithm to the received data to transform the data into a form where each data element can be understood. The unscrambling algorithm utilising knowledge of the function applied to the data to scramble the data initially.

The decrypting step may also comprise decrypting the received data using a one-time decryption key which utilises knowledge of the function applied to the data to encrypt it, wherein the decryption process applied to the received data changed each time it is used.

The present invention can also be used to provide advantages in implementation of a bearer type ticket where the user can remain anonymous to the system. Authentication in these cases needs to be of the ticket itself as well as the person who validated the ticket without knowledge of their identity.

According to another aspect of the present invention, there is provided a method of generating a personal authenticated transaction ticket with a registered-user redemption functionality, the method being implemented using a remote transaction information device or devices and a central authentication system, the method comprising: a) a first stage of generating an non-registered ticket, comprising: receiving at a first remote transaction information device a unique transaction number from the central server which is to be associated with a symbol key and personal information identifying a user; and providing the unique transaction number to the user as part of the non-registered transaction ticket, the unique transaction number providing the potential to identify the personal authenticated transaction ticket; and b) a second stage of registering the transaction ticket, comprising: receiving data at a second remote transaction information device from a user, the data including: i. the unique transaction number; ii. a symbol key comprising at least one symbol selected from a plurality of symbols; and iii. personal information identifying the user, the personal information including at least the user name; digitising and encrypting the transaction number, the symbol key and the personal information; and transmitting the encrypted data to the central server for creation of a registered account.

According to another aspect of the present invention, there is provided a method of securely authenticating a remote second user in order to provide access for the remote second user to a resource transmission service, using two remote transaction devices operating in different countries over a multi-national communications network and a central authentication system connectable to both remote transaction devices, the method comprising: generating a unique transaction number for a first user at a first remote transaction device by: receiving data at the first remote transaction information device from a first user, the data including: i. a symbol key relating to the second user comprising at least one symbol selected from a plurality of symbols; ii. personal information identifying the second user, the personal information including at least the second user's name; and iii. the amount of resource to be transmitted from the first user to the second user; transmitting the received data to the central server; receiving, at the first remote transaction device, a unique transaction number generated by the central server, which is associated with the symbol key and personal information; and providing the unique transaction number to the user, the unique transaction number confirming the registration of the second user and the associated symbol key with the central server; validating the second user at the second remote transaction device by: inputting at the second transaction device the unique transaction number and the symbol key by a second remote user; transmitting the input data to the central server; receiving, access to the resource transmitted from the first user to the second user if the input symbol key and the input unique transaction number correspond and are authorised by the central server.

According to another aspect of the present invention, there is provided a system for securely authenticating a remote second user in order to provide access for the remote second user to a resource transmission service, the system comprising two remote transaction devices operating in different countries over a multi-national communications network and a central authentication system connectable to both remote transaction devices, wherein the central server comprises: receiving means for receiving data from the first remote transaction information device from a first user, the data including: i. a symbol key relating to the second user comprising at least one symbol selected from a plurality of symbols; ii. personal information identifying the second user, the personal information including at least the second user's name; and iii. the amount of resource to be transmitted from the first user to the second user; a data store for storing the received data in a user-specific account file; generating means for generating a unique transaction number corresponding to received data in the account file, the unique transaction number confirming the registration of the second user personal information and the second user's symbol key and the authentication of resource transmission service with the central server; and sending means for sending the unique transaction number associated with the account file to the first remote device for provision to the first user; wherein the receiving means are also arranged to receive from a second remote transaction information device the second user's symbol key and the second user's personal information identifying the second user; and the central server further comprises validating means for validating the second user at the second remote transaction device by comparing the received information and on validation providing access to the resource transmitted from the first user to the second user.

According to another aspect of the present invention, there is provided a central authentication system arranged to be operable with a remote transaction information device to generate a personal authenticated transaction ticket with a registered-user redemption functionality, the system comprising: receiving means for receiving data in an encrypted format from the remote device, the data including: i. a symbol key comprising at least one symbol selected by a user from a plurality of symbols; and ii. personal information identifying the user, the personal information comprising at least the user's name; decrypting means for decrypting the symbol key and the personal information; a data store for storing the received data in a user-specific account file; generating means for generating a unique transaction number corresponding to received data in the account file, the unique transaction number confirming the registration of the user and the authentication of the transaction ticket with the central server; and sending means for sending the unique transaction number associated with the account file to the remote device for provision to the user as part of the personal transaction ticket.

According to another aspect of the present invention, there is provided a method of generating an anonymous validated transaction ticket with a bearer redemption functionality, the method being implemented using a remote device and a central authentication system, the method comprising: receiving at the remote device from a user, user-selected transaction-specific information relating to the transaction and an unregistered symbol key comprising at least one symbol selected by a user from a plurality of symbols; transmitting an encrypted version of the unregistered symbol key and the transaction information to the central server; receiving a unique transaction number associated with the symbol key and the transaction information; and providing the unique transaction number to the user as part of the transaction ticket, the unique transaction number confirming the association of the transaction ticket with the symbol key such that any subsequent redemption of the transaction ticket requires authentication of the user by expression of the associated symbol key.

According to another aspect of the present invention there is provided a method of generating a unique authentication identifier for authentication of an anonymous transaction ticket with a bearer redemption functionality, the method being implemented using a remote device and a central authentication system, the method comprising: receiving data in an encrypted format from the remote device, the data including: i. user-selected transaction-specific information relating to the transaction; and ii. a symbol key comprising at least one symbol selected by a user from a plurality of symbols; decrypting the transaction information and the symbol key; generating a unique authentication identifier corresponding to the received data, the authentication identifier enabling confirmation of the authentication of the transaction ticket and the user with the central server; and sending the unique authentication identifier to the remote device for provision to the user as part of the transaction ticket, the unique authentication identifier confirming the association of the transaction ticket with the symbol key such that any subsequent redemption of the transaction ticket requires authentication of the user by expression of the associated symbol key.

In one particular aspect, the present invention links a user's personal information at least surname, with a user self-generated identity process based on selection of a pre-printed symbol that is capable of being tendered cheaply, quickly and easily (without swamping present low-cost authentication systems) yet maintaining security, legal accountability and longevity across a multiplicity of languages, multiplicity of characters (e.g. Arabic and Asiatic characters from Thai/Japanese/ Chinese) and multiplicity of systems (mobile phone, Internet and terminal based central server systems). This process allows for partial (basic) registration of the user in an authentication process and then later reconciliation with the actual purchase as well as a pre-purchase registration method. Such a process can be embodied in a cheaply-generated terminal or a remote vending system user identity card. The process also allows for the purchase or free provision of a replacement card following the loss of the original card as well as the re-issuance of the card, all under secure accounting and control systems that would allow also for sufficient customer verification to satisfy anti-money-laundering and anti-terrorist legislation.

According to another aspect of the present invention, there is provided a central authentication system arranged to be operable with a remote transaction information device to generate an anonymous transaction ticket with a bearer redemption functionality, the system comprising: receiving means for receiving data in an encrypted format from the remote device, the data including: i. user-selected transaction-specific information relating to the transaction; and ii. a symbol key comprising at least one symbol selected by a user from a plurality of symbols; and decrypting means for decrypting the transaction information and the symbol key; generating means for generating a unique authentication identifier corresponding to the received data, the authentication identifier enabling confirmation of the authentication of the transaction ticket and the user with the central server; and sending means for sending the unique authentication identifier to the remote device for provision to the user as part of the transaction ticket, the unique authentication identifier confirming the association of the transaction ticket with the symbol key such that any subsequent redemption of the transaction ticket requires authentication of the user by expression of the associated symbol key.

According to another aspect of the present invention, there is provided a remote transaction information device arranged to be operable with a central authentication system to generate an anonymous validated transaction ticket with a bearer redemption functionality, the device comprising: input means for inputting into the remote transaction information device, user-selected transaction-specific information relating to the transaction and a symbol key comprising at least one symbol selected by a user from a plurality of symbols; transmitting means for transmitting an encrypted version of the symbol key and the transaction information to the central server; receiving means for receiving a unique transaction number associated with the symbol key and the transaction information; and providing means for providing the unique transaction number to the user as part of the transaction ticket, the unique transaction number confirming the association of the transaction ticket with the symbol key such that any subsequent redemption of the transaction ticket requires authentication of the user by expression of the associated symbol key.

According to another aspect of the present invention, there is provided a remote transaction information device arranged to be operable with a central authentication system to generate a personal authenticated transaction ticket with a registered-user redemption functionality, the device comprising: inputting means for inputting data to the remote transaction information device, the data including: i. a symbol key comprising at least one symbol selected from a plurality of symbols; and ii. personal information identifying the user, the personal information including at least the user name; digitising and encrypting means for digitising and encrypting the symbol key and the personal information; transmitting means for transmitting the encrypted data to the central server; receiving means for receiving a unique transaction number associated with the symbol key and personal information; and outputting means for outputting the unique transaction number to the user as part of the transaction ticket, the unique transaction number confirming the registration of the user and the authentication of the transaction ticket with the central server.

Also the present invention in one of its aspects addresses problems rising from the legal and operational complications caused by attempting to offer a multi-jurisdictional, multi-functional and multi-product ticket not only over a central server based terminal system, but also by combining this central terminal based system with complimentary and secondary offerings via mobile phones and Internet sites often to the unbanked, illiterate or nationals whose mother tongue is written in non-Latin script.

There are many advantages to use of at least one symbol for the authentication key rather than a PIN or password and some of these are described below.

The use of a symbol which can be printed in intaglio or thermo-graphic raised printing on a transaction slip advantageously creates a security mechanism that is inexpensive and common to the blind, illiterate, sighted and literate. The symbol can be incorporated into an inexpensive vendor-generated security card.

The use of a symbol key, unlike a PIN or a letter-based password, advantageously offers a greater degree of mathematical complex functions per entry. Numbers offer 0-9 functions per entry and letters offer 1-26 permutations per entry, whereas the symbol offers 'x' functions per entry where 'x' is the number of different symbols presented to the user from which the user selects the actual symbol. Typically x > 26 e.g. x= 100 such that a greater number of functions per entry are possible thereby minimising the length of any authentication key as compared to a conventional authentication key based on alphanumeric Latin-script keys (passwords/PINs). Furthermore, by having say 100 possible symbols to choose from overcomes any problems with the most common surname and date of birth overlap in a given country described previously.

Symbols can be an image of any recognisable object, a character, a character in a language which is used as a symbol for example a Greek Character such as µ (Mu) or π (Pi). Also a Chinese character such as 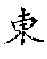 , which is the Chinese character for East. The definition of a symbol as determined by the present invention is an image or a mark which by itself means something and is not reliant upon another symbol to determine its meaning. This distinguishes a 'symbol' from the use of characters or letters in a language, which in combination have given meaning and which is not intended to be covered by the term 'symbol'. The definition is also a local one. Namely, a Symbol is different from the pictogram language of the country where it is used. So for example it is possible to use a Chinese (Mandarin) character in any country where Chinese is not a national language. Furthermore, the symbol can be an image of a famous sports personality, a political figure, a historical figure, an animal, and even a distorted public figure (for example Tiger Woods without teeth (altered attribute), or Bugs Bunny with an axe in his head (added attribute)!) The user can also or alternatively select the attribute to be added and/or subtracted from the symbol/image such that at a later redemption and or verification stage he need only refer either directly or indirectly to the attribute subtracted or added from a vendor displayed symbol/image to validate his/her identity.

The use of a symbol-based key advantageously increases the security of the key. This is because PINs based on numbers or letters are usually, despite warnings, generated as a birth date, or a variation of a name in order to be easy to remember. As such, without the presence of a highly-expensive security-card system e.g. a credit/debit card system, the security can be compromised and would be if financial instruments of, for example a 20-year duration, are accessible by bulk-system hacking. Conversely, symbols-based keys can be re-rendered on an algorithmic and encrypted basis cheaply in a relatively insecure environment and using an insecure vendor-generated card. This allows for sales across ATM systems without expensive security-based card systems (that could be separately money loaded) that can allow a bank to provide transaction system for unbanked/unbankable persons.

A symbol-based authentication key provides a multi-language capability both in a keyboard and a transaction slip. Also this eases teller entry across various language groups and across various degrees of literacy. Furthermore, the use of symbols overcomes transliteration errors that can occur in the reconcilement of user-generated initials and surnames when they are reconciled occasionally across borders against a multiplicity of databases that may have a multiplicity of transliteration systems.

Symbol keys combined with name, initial and birth date, can advantageously allow for errors that would ordinarily cause a rejection of the authentication. Errors in user/reader name, initial or birth date can readily be overcome within a prescribed predetermined range of error between name, initial, birth date and symbol (described in detail later). The symbol is used to crosscheck against minor input errors or variations caused by one of several factors.

Unlike a PIN, a symbol key is advantageously very easy to remember and only represents a small extra step of memory to a purchaser in addition to his name, initial and birth date. However, the symbol key represents a very high degree of security when scrambled through a scrambling algorithm, as has been taught by our co-pending US patent application no US 12/184686 (published as US 2009037311) and International patent application no PCT/IB2008/002424 (published as WO2009019602 ) with respect to prize bond information.

A symbol key provides advantages when used in conjunction with a foreigner buying a product in a foreign land, e.g. a semi-Latin script illiterate Chinese user purchasing a money transfer function in Germany to remit to an Arabic-script illiterate Chinese cousin living in Bahrain and vice-versa. This is obviously functional both from a customer and terminal point of view which would otherwise have to offer multiple scripts within the same jurisdiction.

In our co-pending applications, US 2009037311 and WO2009019602, the concept of Sharia'h compliant prize incentive bonds (PBs) have been described. The present invention can advantageously be used in conjunction with the PBs described therein.

In this regard, the PB is both bearer in the ticket form (to collect your prize if a winning ticket) and registrable as a long-term bond to the purchaser should he so wish to redeem the purchase price at a future long-term date. It is registrable to sufficient degree by using the symbol key to satisfy money-laundering regulations to tie a financial transaction to a real person without having to present ID at the time of purchase. Or tie to an existing form of identity document at the time of purchase (remember the vendor generated ID card can be generated after purchase and back tied to the customer). This also avoids lengthy ID validation processes at the point of sale (POS) terminal which would provide a bottleneck for users and which would removes the whole benefit of using a fast lottery style terminal and central server system for example.

In the case of the PB, the purchaser can demonstrate his unique connection to the ticket beyond the ticket itself and his proof of name and date of birth by his production of the symbol key.

The present invention also enables the provision of multifunction products using the same system for authorisation. For example in the lottery industry the transaction slip, which is sometimes referred to as a 'betting slip', can now include a multiple different products such that a multi-product ticket can be issued which has multiple functions. This ticket however, has one central unifying security identifier that can overcome the issues that could occur over a long term for changes of address and even name changes which are allowable by deed pole in some jurisdictions leaving birth date which can be common to a multiplicity of persons. Fraud could thus be avoided by people of the same birth date being incentivised to change names etc to acquire long-term rights.

The ability to provide a multi-product ticket allows governments (always keen for example to encourage money transfer by their ex-pat nationals back into their economies by regulated means) directly and inexpensively to attach a multiplicity of incentive products to the ticket. These products range from lottery tickets to shares and other financial incentives and these can be tied in as an incentive benefit to a money transfer for example. This is especially useful for some governments which try to encourage ex-patriot transfer by their nationals of small amounts of money that are normally sent by informal means of transfer. This is because the amounts transferred, which for example in the Arabian Gulf have an average of USD 200, would be swamped by the money transit companies whose systems require a charge in the range of 10 % to 15% of the value of the transfer as opposed to the 1 % to 2% charge normally charged by undesirable informal systems, such as the so called Hawallah system which notoriously cannot be regulated and is open to exploitation by terrorists and money launderers.

Returning to the prize incentive bonds (PBs) described in our earlier referenced pending patent applications, there are some security problems associated with providing a system for providing PBs which require a more robust solution and a newer approach to the solutions previously described. These problems are described below and some aspects of the present invention which address these problems in combination with the PBs are also described thereafter.

The root of the problem with PBs is twofold and firstly lies in the desire to issue financial instruments on a system that is primarily designed to be used to support a non-account creation function, for example to issue lottery tickets. Secondly, it lies in the desire to sell prize-bearing instruments attached to financial instruments in countries that religious or other reasons ban gaming. This creates a multipurpose ticket that is, on the one hand allowable as a non-user registered ticket and on the other hand, needs to be securely registered because of its financial instrument function due to money laundering rules and regulations. These problems are expanded on below.

The traditional definition of gaming, which looks at the four elements prize, consideration, chance and skill and says that if the skill element is not sufficient to render chance negligible, or is absent then the transaction is a gaming one can be overcome if consideration is removed. In order to remove consideration from the transaction then that transaction has to be directed towards the attached financial element and this can increase the pressure to move the instrument from a bearer one to a registered one.

The first problem is that there are only two ways to remove consideration. The first could be referred to as an attachment method and the second as an abstraction method (both of which have been previously described in our co-pending applications mentioned above). With the attachment method, the prize winning opportunity is attached to a good or service such that the consideration for the prize winning opportunity is paid for out of the marketing budget of the good or service or as a straight percentage of the purchase price of the good or service such that it comes out of the profit margin of the supplier. With the abstraction method a percentage of the purchase price of the prize winning opportunity is abstracted and put into a financial instrument which either guarantees the return of the purchase price or has a reasonable chance of returning the purchase price at some point in the future together with any profits accruing to the financial instrument if there have been any. The abstraction method differs to a premium bond in that a premium bond pays its prize out of the interest pool and can, in theory, return the consideration within the short to medium term. The abstraction method, in legal construct, is closest to that of a premium bond in that the consideration is returnable in full at some point in the future. The difference is that as the consideration for the prize comes immediately out of the purchase price for the bond and the balance is invested to return the purchase price consideration and any profits at some point in the future. This abstraction form of premium bond can only be redeemed in the medium to long term at full value, i.e. par and in the short term at some discount to its par value. The abstraction to fund the prize element can also be from the vendor's present or future profit share rather than the purchaser's capital which is then later refunded.

A further problem is added by the fact that this abstraction method of premium bond generation can also carry an attachment variation such that the purchase of the premium bond with its prize-winning opportunity, can also contain the right to a good or service for no extra consideration. The construct would be that there would be a special transaction code attached to the purchase of the abstraction method premium bond, which could be traded in on an Internet site or with a vendor for a good or service.

The above products raise a whole host of problems if the intent is to sell them over a terminal and central server system best suited to lotteries or to have a mixed selling method including mobile phones, Internet sites (for secondary sales) as well as terminal and central server systems. These problems arise not only from the conflict between the requirements of the three system selling methods, Internet, mobile phone and lottery terminal systems, but also from the legal requirements as well as the accountability and security requirements for the selling of financial instruments such as bonds.

Some of these can be seen when one looks at the normal requirements for a premium bond. A normal premium bond normally requires at least one of the following four features and sometimes a combination of all four:
Firstly, a secure point-of-sale (POS) whereby the retailer itself has some security features, i.e. is a bank, providing cash services and handling point-of-sale, Post Office, financial institution or some other secure location that will give confidence to the premium bond issuer that this retailer will sell the premium bond under secure conditions. Premium bonds cannot be sold from points-of-sale with only nominal security, i.e. the normal lottery systems easy point-of-sale cash register ability to sell things and bank the money at the end of the day.

Secondly, security features in the actual premium bond to enable a validation at various points in the premium bonds life cycle to whether the premium bond is real or a forgery. Such security features will be expensive and long lasting according to the degree, value and expected life of the bond. At present lottery systems are precluded from selling short medium term or even long-term abstraction premium bonds whose life can be up to 20 or 30 years as they use cheap thermographic paper that has a short operative life typically lasting only six months to a year.

Thirdly, both money-laundering, anti-terrorism legislation and normal internal security and accounting requirements necessitate the registration of the bonds in the books of the issuer by the retailer acting as agent involving an identification process at the point-of-sale whereby the premium bond is assigned to the name of a person (normally that has been validated using either a common identity item validation process i.e. passport, or a previous account opening process and specific identity validation i.e. account number/card entry/specific customer number) and recorded in a general register of some kind. Often the register will be linked to a file containing a signature requiring a fallible human signature validation process. In some cases premium bonds are live money and if they go out of the control of the retailer in an unwarranted fashion this represents a loss for the issuer. Ideally, which is not possible at present, a lottery system would have to have a registration that can occur before, after or during the sale according to the wishes of the purchaser as a result of which impulse buying is possible and the purchaser need only carry cash to make the purchase. However, such a formal registration would not meet the requirements of lottery systems that necessitate a fast flow through at normally crowded point-of-sale such as newsagents or kiosks that cannot handle the time-consuming nature of registration process.

Fourthly, at present premium bonds can also be purchased by phone or by the Internet but only for the cardholder using the cardholder's credit or debit card over the Internet or phone. This allows for secure registration and assignment to the debit/credit cardholder. At present, there is a need for a seeming bearer purchase process that allows for an anonymous cash purchase from a wide distribution network by the purchaser on his own behalf or another's behalf or even a change of mind and a later assignment to another person if the purchaser so wishes. This could be possibly after the prize draw, i.e. the purchaser buys for himself to win this week's prize but leaves the bond redemption to his relatives. Normally, and prior to inventions described in our co-pending patent applications, buying a premium bond for another person, (i.e. a child or someone else) means applying by post or at a secure location able to handle the transaction using a secure registration process.

A premium bond is thus normally a registered bond whereas; a system described in detail later embodying the present invention, renders it capable of being sold with all the ease of a bearer bond. The embodiment of the present invention also retains the registration that is required by law and remains fully secure for purchaser and issuer for part of its lifecycle. In addition, the premium bond can become registered and even change ownership legally and securely prior to or after registration.

Purchase by phone and or Internet of a conventional premium bond requires detailed personal confidential information to be given. The present invention enables a system to be provided that can allow for secure bearer only registration on a widely distributed terminal network, or phone or Internet purchase without the transmission of private information which the purchaser may be unwilling to provide at the time of purchase but would be willing to do so later. By contrast, the conventional premium bond purchaser doesn't have immediate security of purchase on a phone or Internet purchase, i.e. the details will be subject to a time-delayed purchaser-provided details validation process, i.e. an online site/telephone centre takes time to compare all details e.g. address, birth date, credit card number against available records (this is often done post sale) e.g. if the purchaser's credit card number and address provided to the online premium bond site doesn't match his credit card address previously provided to his credit card supplier, the sale will be voided. This is the case even if the error was innocent or as harmless as a wrong spacing in the post code held on record by the credit card supplier with the post code provided to the website. This problem is overcome by the present invention which provides a different secure bearer style registration process that doesn't involve the supply of full detailed registration information at the POS, that can still be cheaply manufactured in a supplier-provided identity card or tied to the purchaser at some point in the future so as to satisfy accountability, internal security and money-laundering/anti terrorist legislation.

Due to security and registration issues (), premium bonds normally have a fixed prize. The total sales to a given moment of a normal premium bond due to its security features are not accounted for on a live basis showing the issuer in real-time how many premium bonds have been sold and therefore technically issued. Prizes, therefore, are usually a fixed defined amount rather than a percentage of the prize pool designated on a real-time basis. For these reasons there is at present no present system which allows for on-line real-time accounting for sales that would allow for a calculation of funds available for prizes as a percentage of actual sales and an actual updating of prize size as ongoing sales took place. This means that conventional premium bond purchases are not exposed to the marketing phenomenon caused by the prize pool growing with purchases during the sales period, which in turn, causes an increase in the propensity to buy, incremental with the increase in the price pool. This problem of lack of real-time accounting for the total sales and, therefore, the total available prize pool, is addressed by the present invention by the provision of a computer-based real-time book-entry system which allows for a dramatic shortening of the accounting cycle.

Rollover prizes also require a correlation between the serial numbers on the premium bonds issued to be made with the serial number of the prize draw, such that if there is a discrepancy, a rollover has occurred. This means that with a premium bond, normally in the period between the end of the prize draw date and the commencement of a new set of sales, there isn't sufficient time to examine the records of all bonds sold up to the prize draw period and calculate whether or not the prize draw number corresponds with the serial number of a bond sold. A real-time full accounted system, which is enabled by the present invention, allows for this calculation on an immediate basis between the end of one prize draw period and the commencement of a new prize draw/sales period. The discovery that there is a possibility of no winning number allows for what is known as a 'rollover' whereby a previous sales period's prize is added to a new sales period's prize. This doubling of potential prize can mean a huge increase in sales propensity in the new sales period where there is a rollover.

Rollovers can also occur unintentionally as an unavoidable product of a security feature rather than an intentional sales device. This security feature is having the numbers for the prize draw attributable to the prize draw instrument, here the premium bond, unknown to the prize draw mechanism which typically would be a random selection from the combination of numbers available for customer selection as opposed to from the numbers actually selected by the totality of customers. The security feature of having two random events totally divorced from each other and incapable of linkage would be to avoid organisational fraud on an insider basis on a large scale. Otherwise organisations involved in the draw function who could know the customer actual draw numbers could preselect who they want to win form a list of favourites or even intentionally rig the process so no one outsider would actually be winning, only insiders.

In addition, a further security feature may be added to the draw function whereby a customer picks his or her draw numbers from a known series of numbers but this number for reference to the prize draw is rendered by a terminal scrambling algorithm into a separate draw number. This differs from the user's self-pick lottery number process and the alternative of the terminal rendered draw number (so called lucky pick) by having a personal choice element combined with a randomised machine generated prize draw number, which of course still remains unknown to the prize draw number selection process. In this embodiment, the security process is being used when the prize fund supplier has an incentive to not pay prizes, i.e. where the vendor/premium bond issuer is funding present prizes from future profit receipts. Here, it is necessary to both create a system that can result in rollovers and also make sure that the rollovers go to future customers/purchasers as opposed to recognised bodies or charities from whom favourable covert/potentially fraudulent terms could be negotiated with in advance by the vendor/premium bond issuer that return the situation to giving prizes to favoured insiders.

There are other problems associated with selling financial, currencies or abstraction method financial instruments on a lottery system or a combined system of mobile phone Internet and central server lottery systems, which certain aspects of the present invention address and overcome. These problems are listed below: -
1. If the abstraction method premium bond were to be sold on a lottery system, it would create a multifunction ticket, one part of which is legally allowed to be a bearer instrument and one part of which would legally be required to be a registered instrument. The prize-winning opportunity which is, in essence, similar in operational aspects and terms (but not in religious or legal aspects due to different funds flow) to that of a lottery prize-winning opportunity, could be sold on a bearer basis. The premium bond or financial instrument or currency transfer would need to be registered in some form. With a currency transfer, both ends of the transaction would need to be registered i.e. the sender and a receiver would have to be registered both for internal security and money-laundering legal requirements. Including the bearer instrument with registered instrument could potentially tie up points of sale and neglect all the benefits of the high-speed bearer-style lottery ticket sales system. Registration would not only cause expense in the bottlenecks and new labour intensive procedures but could potentially require some form of security devices, which are themselves expensive, in order to allow for the long-term survivability of the financial instrument. Typically, security devices in a premium bond become more expensive as the length of time in which the bond is to be outstanding increases. Thus, even a registered system for a bearer instrument that all costs and the inconvenience of registration of a name and address and identity card to a bearer instrument at purchase built in, , may have to have extra expense built in to be able to allow for the changes that occur in addresses, identity card numbers and identity card security systems over a period that can stretch theoretically from 15 to 30 years or more with an abstraction method long-term premium bond. For example, the UK premium bond system which allows the purchase over the Internet by credit card would run into problems if the period was stretched up to 20 years and the purchaser to turn up and ask for redemption after 20 years when their credit card, their address and conceptually even their name could have changed. The present invention enables a low-cost flexible solution to this problem.
2. Simply designating a code number through phone, Internet or lottery central system connected terminals would still suffer from drawbacks as users notoriously lose registration papers including the code number and forget security code numbers. The present invention addresses this through the use of a symbol-based authentication and provides a solution that is secure, capable of both being used on turn-up pay-and-go lottery systems as well as being included in a standalone identity card generated by a secure method by the user themselves. Such a solution is easily reproduced or remembered by the user themselves without compromising the internal security requirements of accountability and control or the registration requirements of money-laundering.
3. No solution should compromise the time throughput of the new instrument or a currency transfer or the sale of existing financial instruments in comparison to the present speedy sale of a lottery ticket. If such a compromise is created, then either vendors will be unwilling to service lottery-style terminals for these new instruments or will require such high payments to allow for the user bunching that would occur at the POS as to make the whole process unfeasible from both an economic and a practical point of view. The present invention enables the ticketing to be carried out without compromising the existing speed of operation of a lottery terminal.
4. A potential solution is available in the form of a partial registration (as described in our co-pending patent application WO2009019602) which in a first stage is speedy at the POS but can in a second stage, take time and be done fully at a further better-equipped POS. However, this creates a problem of how to reconcile the partial registration with a full registration in such a way as to cover not only internal security control and accountability requirements but also money-laundering legislation, such that the user of the first stage can be verified as the same registering user of the second stage. The further problem occurs with a partial registration of having to have some method of voiding the transaction and returning the money to the purchaser, if further registration is not completed. At the same time, the process needs to allow for the bearer element of the prize-winning opportunity to be completed and, ensure that the purchase has still been quick and easy without compromising the ability to void the transaction and return the money to the right customer. Care has to be taken to ensure that the second long-term function of the multifunction ticket is able to be implemented on the basis of the partial registration. This means that the partial registration has to include sufficient detail so that the user can be considered to have registered in sufficient detail to either complete registration at maturity of the bond, i.e. in 20 or more years time, or to simply have decided to give up his rights to redeem his purchase price in full as a voluntary act, whereby the purchase price could then be donated to charity or otherwise disposed of under some legal method that wouldn't compromise the non-gaming identity of the transaction. Present laws require the purchaser and his identity to be reconcilable to a degree not possible under present technical systems. Furthermore, partial registration combined with checks or marrying up with present identity databases allow for too many errors to occur due to variations in the identity card systems which are magnified when one central server attempts to service products sold across several borders and therefore interacts with different identity card systems that may be constructing with different parameters. The present invention addresses and overcomes these problems.
5. Identity checks against existing identity card systems are themselves problematic when products are sold through central systems over various borders and various language groups by the conflict between Latin characters and foreign characters that may have different transliteration systems. Even if at purchase people are to fill out their names, these names may not directly correspond with that which is entered on their own identity documents or there can be scanning errors that cause small variations that trip up an identity card system with a genuine purchaser. The present invention addresses and overcomes these problems by avoiding the reliance upon identity cards as a proof of identity and rather moving to symbol-based authentication for proof of identity.
   A small example is provided by reference to a person's name of'Ralph Mahmoud Omar' and that person's father's name of 'Mohammed Mahmoud Mohammed Ahmad Omar'. In addition, in a purported relative of that person's case, who has both a different Muslim surname and a Christian surname (as can happen with dual nationals or those claiming relation to more than one religious grouping or tradition affecting naming policies) there is a variation between the passports caused by the different methods of treating birth certificates between countries that recognize a Christian (given) name as a partial first name or a Christian maternal surname and countries that do not. Here, the following example shows how a number of different spellings of both names can lead to potential problems that would occur for the minority of dual nationals as well as the majority of nationals whose names transliterate differently across different scripts (as would occur with Arabic and Asiatic scripts such as Thai, Chinese, Japanese etc.
   Possible renditions of the first name are 'Ralph':'Ralf', 'Relf'. Possible renditions of the second name are 'Mahmoud': 'Mahmood', 'Mahmmoud', 'Mahmud' etc. Possible renditions of third name are 'Mohammed': 'Mohamed', 'Muhamed', 'Muhammed', 'Mohamid'. Possible renditions of the fourth name are 'Ahmad': 'Ahmed', 'Ahmmad', 'Ahmmed' etc. Possible renditions of the surname are 'Omar': 'Omer', 'Omyr' 'Omir', 'Amr', 'Umar'. Thus the father's name in this example of 'Mohammed Mahmoud Mohammed Ahmad Omar' all of which are common names like 'John Smith', is capable of a number of errors caused by transliteration from Arabic to Latin scripts where there is no one absolute accepted standard of transliteration. A cross-border customer or a foreigner in a non-Latin script country could have a myriad of problems with pre-printed multi-language character entry slips, teller errors, identity system standard deviations and the like.
   The present invention provides, more specifically, a system that links a user's personal information such as surname, birth date with a user-generated identity process that is capable of being tendered across a multiplicity of systems (mobile phone, Internet and terminal-based central server systems). The system of the present invention allows for partial registration and later reconciliation with the actual purchase as well as a pre-purchase registration method. The system uses cheaply-generated user identity cards provided by lottery-type terminals or a remote vending system. The system of an embodiment of the present invention advantageously also allows for purchase, in the absence of the card following the loss of the card, as well as the re-issuance of the card all under secure accounting and control systems that would allow also for sufficient user verification to satisfy anti-money-laundering and anti-terrorist requirements.
6. There is a further problem in that user-supplied name details may have errors because identity cards can sometimes include or exclude a multiplicity of names. This is because there are in-built standards which are not obvious from the identity card itself which would cause a multiplicity of errors in attaching verification systems to extra national central server systems. A person's Egyptian name for example of 'Zacharia Abdul Aziz Fahmy Omar' which is different from the Chilean name of 'Zacaria Omar Avilez' carries with it in the Egyptian version the attached name of 'Zacharia Abdul Aziz Fahmy Mahmoud Ahmad Omar' as by Egyptian name standards an Egyptian carries his first given name and no other first given name then followed by his father's name his grandfather's name and his great-grandfather's name. In addition, some identity card systems will include mother's name and mother's maiden name whilst other identity card systems will include other details. Users can normally quickly generate a surname and one or more initials. This needs to be done in such a way as to allow for marrying up with identity documents, account for errors in such a way that the errors would not eliminate genuine purchasers but would preclude false purchasers being married up with a partial registration or registering after a grace period. The present invention addresses and overcomes these problems through the use of minimal personal information in combination with a personally selected secret symbol key for personal validation purposes.
7. The system would have to be secured (by method as well as manufacturing capability) from fraudulent acts that would become far more viable as the bearer-based lottery ticket-style system moved to a financial instrument or currency transfer system. These fraudulent acts will not only include insider fraud from within the supplier network, but also conceptually include a new type of fraud, that of reproduction fraud. Reproduction fraud would be attempted because the instrument stripped of its prize-winning opportunity (because the user failed to win a prize) nonetheless, has value for a period conceptually up to 30 years, possibly even more. Lottery systems have the advantage that the ticket is tied to the terminal and a series of algorithm generated code numbers that are linked to a machine-generated or a user-selected winning number which is itself publicly drawn. Crucially, all entries close before the number is drawn, therefore a fraudster either from the inside or from the outside cannot know the link between the winning number and the terminal purchase details both in which are recorded under secure and encrypted systems. However, it is possible that the recording of a financial instrument could, in time, be broken into by sophisticated bulk hacking on a central server or the ticket details themselves as they refer to a live financial instrument for 20 years could be replicated and a number of false attempts at discounted or full redemption could be attempted by fraudsters who had obtained the details with or without the connivance of the purchaser. One solution to this is to tie the process to the use of expensive security devices in the ticket itself designed to last for up to 20 years to validate that the ticket is real or very expensive identity card verification methods to achieve the same purpose. However this approach has clear disadvantages. The present invention solves this problem by use of symbol authentication which provides a process which is unique to the purchaser. The process can be generated repeatedly on a bearer basis without a specifically generated cheap identity card or can be inculcated into a cheap identity card that has security devices that by definition are cheap to render and so are accessible by a fraudster but still deny the fraudster sufficient tools to complete the fraud.
8. The system by its nature of being a supply system for a financial instrument which may have different values over time, must be capable of numerous and repeated valuation and validation exercises. These are conventionally expensive and technically challenging using existing technology. However, the present invention's use of symbol-based authentication overcomes this problem by enabling valuation and validation exercises that are themselves technically achievable and inexpensive.
9. A further problem is occasioned by the fact that in countries where gaming is prevented by Islamic law, i.e. under Sharia'h law, all players for a given prize draw would have to be treated equally so as to remove consideration as an issue such that the prize draw would not be regarded as gaming. If registration failed or was not correctly completed, then the consideration generated by the transaction and which has been placed into a financial instrument for return to the purchaser, would have to be retained for return in 20 years or more to a charity rather than to a purchaser. This would have to be carried out in such a way that the purchaser could be regarded under Islamic law as having received his money back and then donated it to a charity in a separate transaction, rather than a failed registration and transfer of the proceeds under escheatment laws. This means that there has to have been sufficient partial registration at purchase to deem that the purchase has been made distinct to the customer rather than a partial registration which is only made distinct to the customer at final registration. Thus partial registrations where a name (surname), initial and birth date is confirmed by the details being compared by a central server to an external or internal pre-existing identity system within a given country such as an identity card, passport, tourist tracking or some such other governmental legal generated secure identity system would not be sufficient to overcome this problem.

Apart from the issues that there may be errors in the name due to transliteration errors or user-generated errors, there may also be people of a similar name and similar initials with a similar birth date. The present invention enables the purchase to be tied to the purchaser in such a unique way (using symbol authentication), that arguably only he could claim specific identity of that purchase. The requirement to generate this in such a way that it does not slow up the purchase process using a lottery system is met. This process is capable of manufacture in a cheaply-generated identity card which may be created at first purchase, repeat generated at purchase, or generated from a remote vending machine and still be secure enough that the purchaser's identity with regard to the purchase cannot be fraudulently replicated by another. This purchaser-generated specific secure item is included in the manufacturing process and sales process across a several different systems including mobile phones, Internet sites, central systems and paper-generated purchase dockets all with ease of use, convenience and speed.

Another problem particularly with PBs is that they cannot be sold as traditional instant scratch-card bearer-type instruments. This is because of two reasons: Firstly, scratch cards typically have a very short life span because they have an instantaneous prize nature and this conflicts with requirement for the PB card/ticket to last a long time over ten years. Secondly, you can't make a scratch card secure for a long period of time. It is a live bond, which can't be left lying around an insecure environments such as a newsagents' retail outlet. It is a bank bond, it has value and as such it is normally sold through a secure outlet.

In the domain of scratch cards, the key problem is this lack of security. That is why they are not used. However, the present inventor has realised that introducing the inventive concept of using a symbol key as a security aspect in conjunction with a scratch card is inventive, as it solves the issue of making a scratch card a secure way of selling a long-term financial instrument such as a long-term bond. Furthermore, scratch cards with long-term financial instruments, can be sold in insecure outlets, by making the scratch card only become 'live' when the symbol key plus the registration number are communicated to the central server.

The scratch card is now secure because it isn't live. The newsagent would be unable to scratch the cards himself because of the depository process, he would have to pay for the cards upfront so it would not be in his best interests to use the cards himself. A further advantage of this is that it is subsequently possible to leave the scratch card market open to all different types of new games etc.

Advantageously, the present invention can be implemented on a scratch card. More specifically the present invention extends to a low-cost mass-produced transaction ticket for use in providing entry into an instantaneous prize event and a longer term event, the transaction ticket comprising: a first portion relating to the instantaneous prize event, the portion having a plurality of scratch-off portions for selection and removal in order to take part in the instantaneous prize event; a second portion relating to a user-selectable symbol key, the portion displaying a plurality of different symbols, each symbol having a corresponding machine enterable data element which is exposed by the removal of the corresponding symbol, and a unique serial number; wherein, in use, the second portion enables a symbol key to be selected and linked to the serial number such that the transaction ticket can be securely linked to the user and registered by communication of the user-selected symbol key and the serial number to an authentication system and the symbol key can be used to verify the authenticity of the user in any action regarding the long-term event.

The present invention may also be realised as a terminal-generated reminder ticket for use with the above described method, the reminder ticket comprising: a first portion providing a set of possible symbols from some of which the symbol key is composed; a second portion providing a key for number translation onto a blank key pad of a terminal; and a third portion providing a key for letter translation onto a blank key pad of a terminal, wherein the keys replicate the format of the key pad of the terminal.

The solution to the above-described problems associated with selling financial, currencies or abstraction method financial instruments on a lottery system or a combined system of mobile phone, Internet and central server lottery systems as addressed by the present invention, is described in greater detail in the detailed description of presently preferred embodiments described later.

### Brief Description of the Drawings

Figure 1 is a schematic block diagram showing a terminal based system according to an embodiment of the present invention;
Figure 2 is a schematic diagram showing a first part of a data entry slip having a machine-readable portion for entry of name, initial and date of birth of a user in accordance with a first embodiment of the present invention;
Figure 3 is a schematic diagram showing a second part of the data entry slip of Figure 2 having a machine-readable portion for entry of symbol key selection and lottery number selection;
Figure 4 is a schematic diagram showing a key symbol chart for use at a point of sale lottery terminal enabling the user to determine the numerical codes representing their selected symbols for entry into the symbol key data-entry portion shown in Figure 2;
Figure 5 is a flow diagram showing the method involved in implementing the present embodiment when providing purchase of a bearer ticket;
Figure 5a is a schematic diagram showing the steps of the method of Figure 5;
Figure 6 is a flow diagram showing the method involved in implementing the present embodiment when providing purchase of a part-registered ticket;
Figure 6a is a is a schematic diagram showing the steps of the method of Figure 6;
Figure 7 is a schematic diagram showing the steps involved in implementing the present embodiment when providing registration/validation/redemption of a bearer ticket;
Figure 8 is a schematic diagram showing the steps involved in implementing the present embodiment when providing registration/validation/redemption of a part-registered ticket;
Figure 9 is a schematic diagram showing the steps involved in implementing another embodiment of the present invention when providing purchase of a part-registered ticket;
Figure 10a and Figure 10b are schematic diagrams showing a scratch card embodiment of the present invention;
Figure 11 is a schematic block diagram showing a terminal-based system according to another embodiment of the present invention;

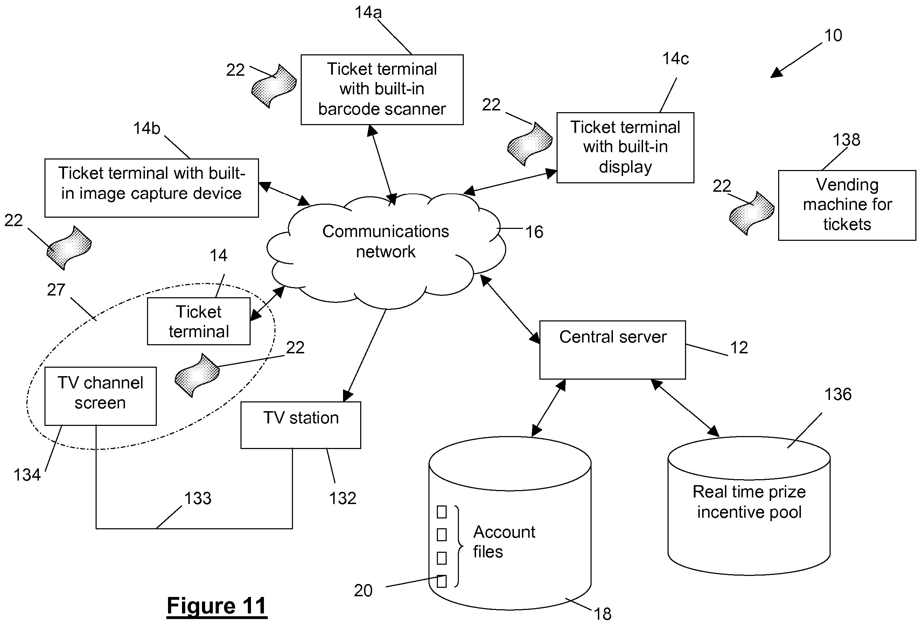

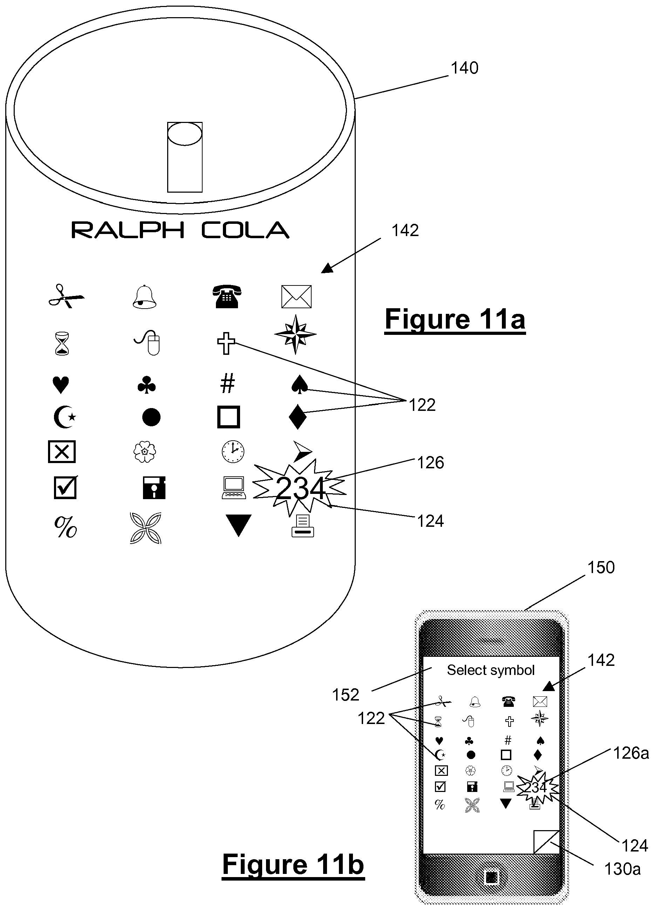

Figure 11 a is a schematic diagram of a can of cola showing a scratch card embodiment of the present invention;
Figure 11b is a schematic diagram of a mobile phone showing a virtual scratch card embodiment of the present invention;

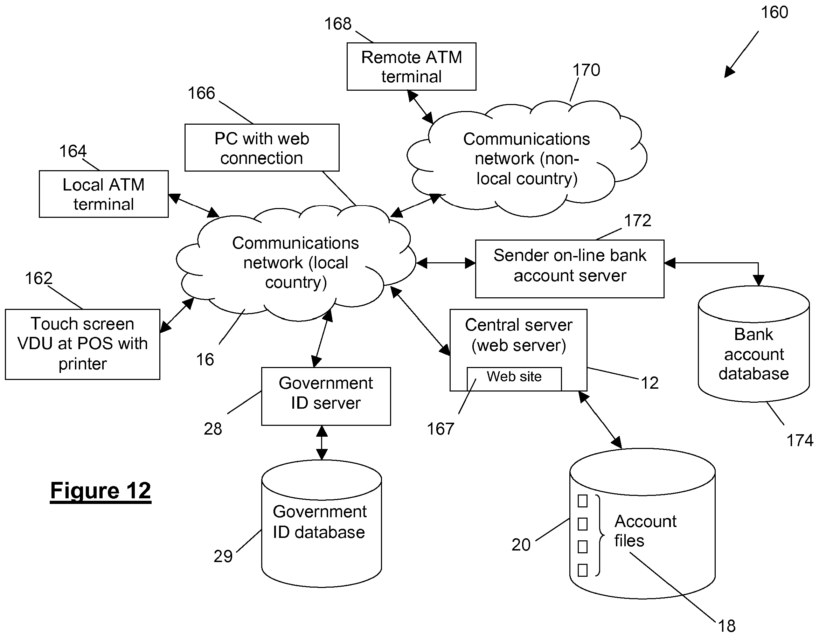

Figure 12 is a schematic block diagram showing a money transfer system according to another embodiment of the present invention;

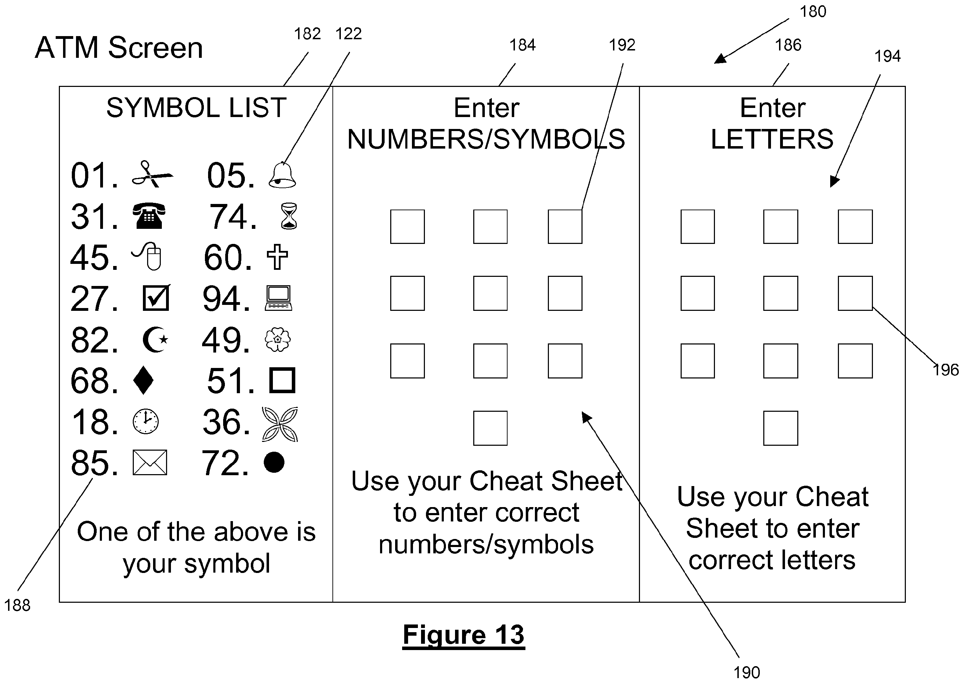

Figure 13 is a schematic screen shot of an ATM screen provided to a user for interaction in the system shown in Figure 12; and

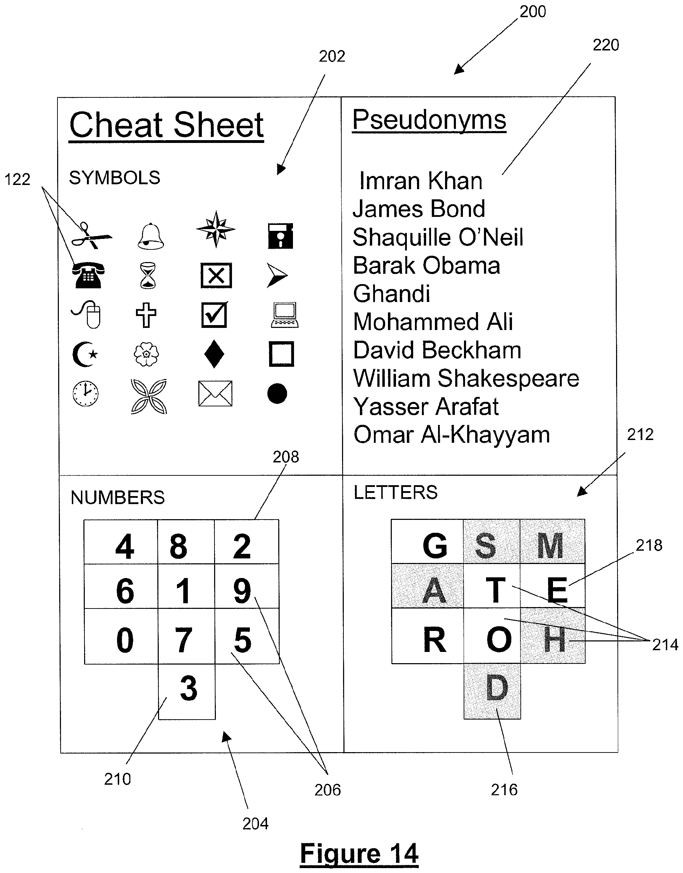

Figure 14 is a schematic diagram of a cheat sheet used by users to prevent shoulder surfing fraud when using public computers or ATMs, when implementing an embodiment of the present invetion.

### Detailed Description of Exemplary Embodiments of the Present Invention

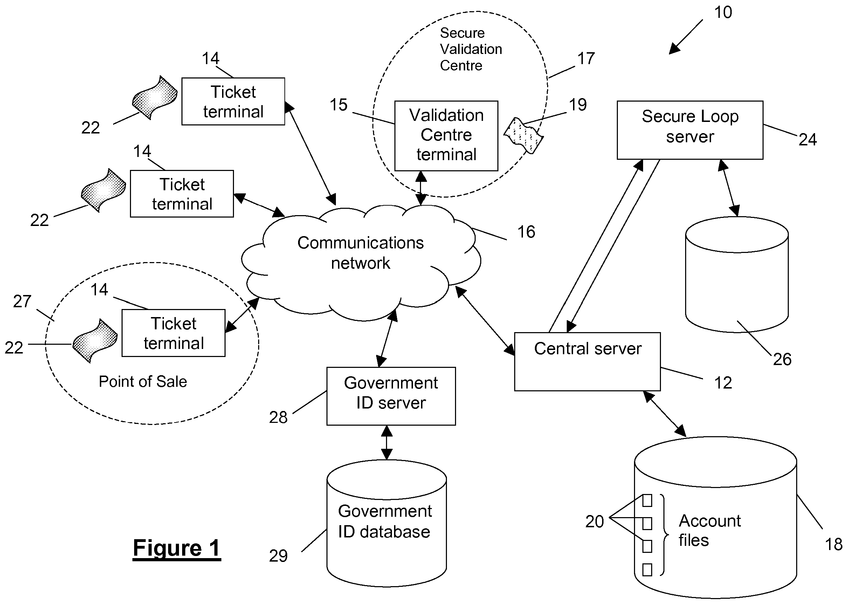

A first embodiment of the present invention is implemented on a terminal-based system 10 as shown in **Figure 1****.** The system 10 comprises a central server 12 and multiple lottery ticket terminals 14 in communication via a communications network 16 with the central server 12. The central server 12 has associated with it a central data store 18 in which are stored account files 20 relating to each of the authorised tickets 22 the ticket terminals 14 have issued. The account files 20 can be linked to a lottery or other form of prize draw event which is to take place at a given date and time. However, there are also other uses for the account files 20 which will become evident from the following description. The system also comprises a symbolic secure loop server 24 together with a corresponding local data store 26 which is used to further enhance the security of the decryption and encryption functionality of the central server (as will be explained in greater detail later).

The terminals 14 are provided at points of sale 27 (POS) though only one is shown in **Figure 1** and users (customers/purchasers) purchase transaction tickets 22. The tickets 22 can be multifunction tickets 22 which represent both a entry into a prize incentive event, such as a lottery or other form of prize draw event, and also a long-term financial investment which on expiry will return the full purchase price of the ticket. However, the present system has a multitude of other different uses, which are explained in detail hereinafter. The terminals 14 are standard lottery terminals in this embodiment but are enhanced (as will be explained in greater detail later) by specifically provided programs (not shown) to change their mode of operation to implement the methodology of the present invention. More specifically, the terminals 14 are configured to operate to be able to record personal user details (name, initial and date of birth) and a user-selected symbol key. This process is described in greater detail later. The terminals 14 also have the ability to provide the standard selection of numbers for a lottery, thought this functionality is only used for some but not all embodiments of the present invention.

The server 12 acts to validate requests and stores records of tickets which have been issued by the ticket terminals 14. The central server 12 also cooperates with the secure loop server 24 to implement ticket authentication and validation. **Figure 1** also shows a Government ID server 28 and a corresponding Government ID database 29. The operation of this server and database in helping to establish the identity of a person has previously been described in our co-pending International application published as WO2009019602 and is further described later.

A detailed explanation of the structure of the system and how it operates is not required herein as this will generally be known to the skilled person through their knowledge of conventional lottery systems. However, the actual mode of operation of the system 10 to support the particular new functions which it implements is described below as is the different user interaction and the transaction ticket 22 used with the terminal 14.

Other embodiments of the present invention are capable of being incorporated in a card generated at first purchase by a lottery terminal 22 or by a vending machine or by being incorporated into software supplied on a mobile phone once an initial purchase has been made, or being accessible by an SMS or a central server/terminal-based system.

A description of how a multifunction ticket 22 is issued to a user using one of the ticket terminals 14 which is configured to issue prize draw and long term investment tickets is now described. In this embodiment, it is assumed that the user will be required to provide surname, initial and date of birth as personal information. However, as has been explained before, the minimum personal information required to make this embodiment work would be just the user's surname.

The purchaser goes to a point of sale (POS) equipped with a standard lottery style terminal and central server connected system 10. His selection of unique numbers for the prize draw, which can include a terminal-generated number or a self-selected number is generated by a standard lottery style transaction slip which incorporates new features.

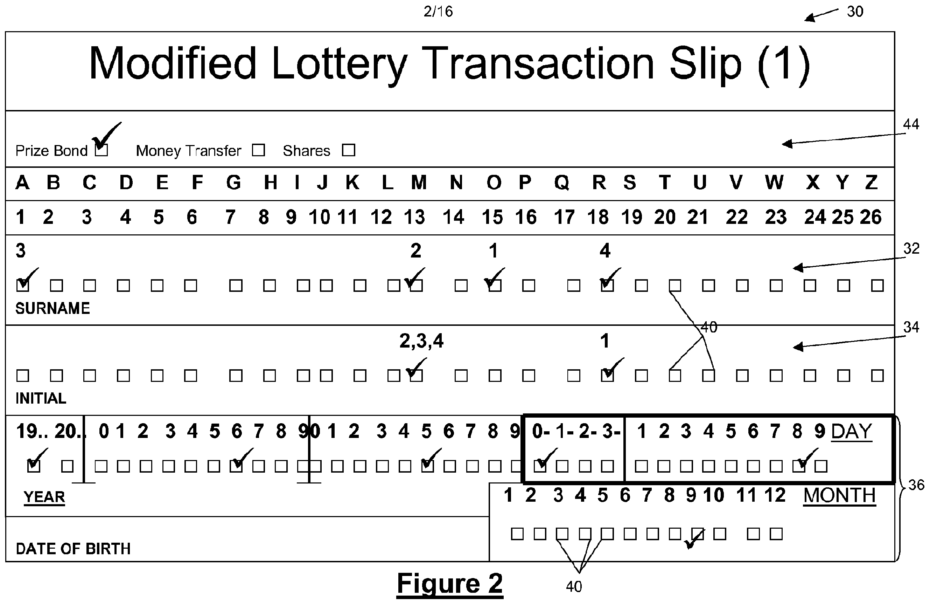

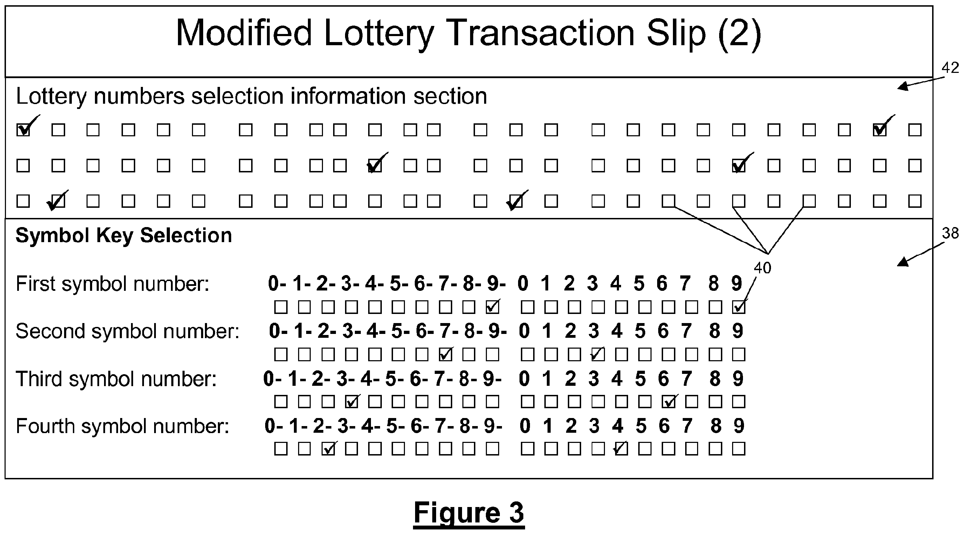

Such a new type of machine-readable multifunction transaction slip 30 is shown in **Figure 2** and **Figure 3****.** As can be seen, the user is given at least four new panels 32, 34, 36, 38 to fill in, two of the panels 32, 34 which have the letters of the requisite alphabet such that the user puts in numerals in the first panel for letters 32 which lists surname next to the requisite letters such that he generates a name, this being his surname. For example, the surname 'Omar' in a list of letters from A-Z is written as follows with the user writing in the numerals to reflect the order. In descending order, or in vertical or horizontal layout, the following numerals will be written next to the letters rendered alphabetically A3 M 2 O1 R4 whereby the user would have just entered 3 2 1 and 4 in order to generate the surname 'Omar' quickly and easily. Handwriting the surname may generate scanning errors (misinterpretation of the letters), whereas numerals tend to be easier to scan without errors and by ticking boxes 40 at least identify, in a machine-readable way, the correct letter.

In the second panel 34 for letters, the user fills in his or her initials again according to the order of occurrence of the letters. The user is invited to fill in as many or as few initials as he wishes, so long as at least one initial is filled in. In this example, the initials are R, M, M, and M. However, it is also possible to simply provide a single initial as the minimum data input (for the fastest data entry time at the POS).

The date of birth is expressed in the third panel 36 which consists of a table of numerals with month, date and year as subdivisions of the table so that the user simply ticks the box 40 adjacent the numeral corresponding to day, month and year as shown. In **Figure 2****,** the date of birth recorded is 8 September 1965. A variation of this, in a further embodiment, would be to have two tables for letters, in which the user simply circles the letters of his surname in one table and his initials in another. The central server 12 would have the capacity to compare the initials, scrambled in whatever order, to a surname as long as the user inputs the correct number of letters.

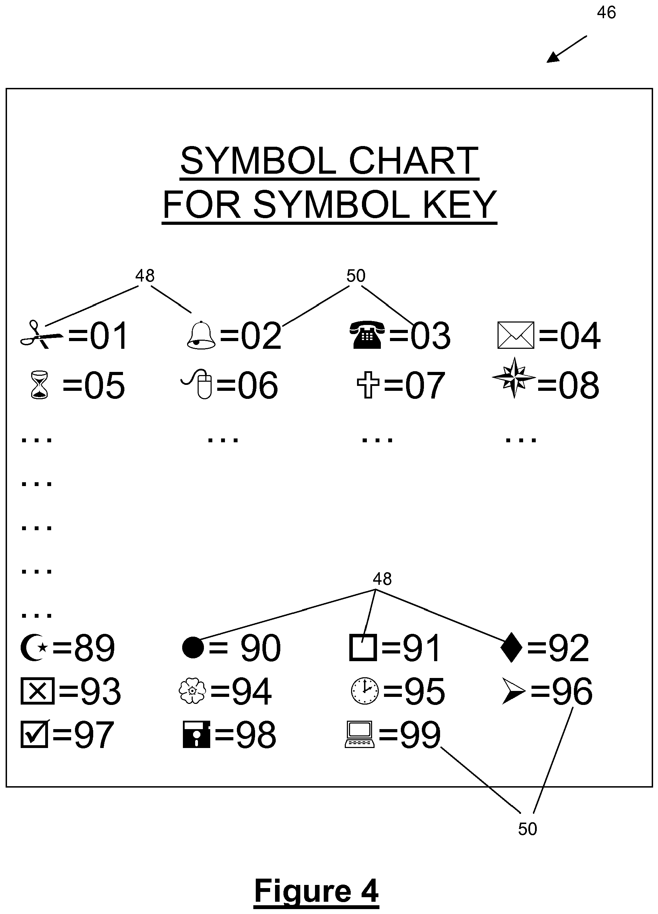

A fourth panel 38 is offered for the user as shown in **Figure 3** to either tick or circle in order to create a completed machine-readable slip 30 which can be scanned quickly by the terminal to digitise the information for transmission. This fourth panel 38 is the key combination (symbol key) that creates security. The user is offered a plurality of symbols which are geometric, pictorial, or in the form of animals or objects. The user then picks a minimum of one symbol, but preferably two to four symbols to make up his or her symbol key. The symbols are either provided on a chart 46 presented at the retailer's location where the transaction ticket terminal 14 resides or on the back and/or front of the transaction slip 30 so the user can make his selection and then input the number code representation of that symbol key. An example of such a symbol chart 46 is shown in **Figure 4** where an array of symbols 48 are provided each with a corresponding reference number 50. In this example, 99 individual symbols are provided for the user to make his or her selection of their symbol key, though in practice the greater the number the greater the robustness of the security of the system.

**Figure 3** also shows a section 42 of the transaction slip 30 for user selection of lottery numbers, for example. This selection is also part of the user-generated transaction information which needs to be communicated to the central server 12. The generation of this part of the slip 30 is known from existing lottery terminals. The user, in addition, has the option of filing in a product selection section 44 to select a different function such as money transfer or prize incentive bond (described in our co-pending patent application published as WO2009019602). The specific parts of the transaction slip 30, which are used for specifying the details for the money transfer or prize bond functions are not described, as their provision would be relatively straightforward to the skilled addressee from consideration of this specific description as a whole.

It is to be appreciated that Figures 2 and 3 relate to the part-registered case where the user provides personal information. If the transaction slip is to be used for anonymous purchases and a bearer ticket is to be generated, then the user need only enter their prize draw numbers together with their symbol key. The rest of the transaction slip 30 can either be left blank of a specific cut down version of the transaction slip can be provided. Here the symbol key may be longer and stronger than in the case of a part registered ticket, because no personal information is being provided.

Crucially, the user is instructed to maintain this selected symbol key as his permanent symbol key to be used for verification and identification on this and future purchases. These future purchases can be made with or without a low-security supplier identity card (not shown) and the symbol key can be inculcated into a low-security supplier identity card if desired. Thus, even if there are errors in the surname or initials of a user, a combination of birth date and one or more user-selected pre-existing symbols (making up the unique symbol key) creates a significant degree of uniqueness and hence security in the authentication process against fraud. Each of the name, initial, birth date and security item (symbol key) is algorithmically coded (by application of a scrambling algorithm) and encrypted for transmission back to the central server. The central server 12 can then use this information to generate a unique transaction number and send this back to the terminal for printing on the ticket. The transaction number is derived uniquely from the name, initial, birth date and symbol key received from the terminal. This process is described in greater detail later. Alternatively, the central server 12 can provide a range of possible transaction numbers for the ticket terminal 14 and the transaction number can be generated on the terminal 14 from within that range and merely communicated to the central server 12 in an encrypted form for recordal in the appropriate account file 20.

The surname, initial and birth date are printed on the ticket 22 which is issued by the ticket terminal 14 (in the case of the part-registered user) so that this can be referenced in a future authentication process (typically a redemption process) when identity documents could be compared by a secure individual at a secure location or by a secure authentication method. Alternatively or in addition, a transaction number generated by the central server 12 and sent to the terminal is printed on the ticket 22. The transaction number is uniquely related to the symbol key and personal information previously input by the user at the transaction terminal 14. However, crucially the symbol key is not printed on the ticket 22. The symbol key (at redemption) is provided in the authentication process by the user and the terminal 14 encrypts and algorithmically encodes the symbol key together with the transaction number taken from the ticket 22 for transmission back to the server 12. Once the symbol key and transaction number are decrypted and unscrambled at the server 12, the transaction number is used to determine the symbol key algorithmically coded and encrypted at purchase and this is compared to the symbol key provided at redemption. Authentication is signalled back to the redemption terminal 12 if the symbol keys match.

A user-specific card (not shown), can be generated at a terminal 14, using the same input information and same paper slip method as described above, and includes the symbol key or a set of symbols. Such a user-specific card may be generated at a vending machine or other terminal. The purpose of the card is merely to enable quicker data entry into the terminal 14 at the POS 27 where the factors of ease-of-use and speed of completing the transaction are very important. Thus, a user can specify the generation of such a card by remembering their name, initial and birth date (not a difficult task) and their symbol key which is typically of one or two symbols (again this is not difficult for the user). Symbol selection on a remote vending machine is a simplistic but a secure way of generating a card. The card includes an algorithmic code generated by the vending machine and central server under the same system that has been described in our co-pending International application mentioned above. This code acts as a security item in verifying the ownership of the card when it is not present as well as the symbol, name and initial. An identity document acts as a secure way of regenerating the card if it is lost. The machine-readable card is provided both to enable quick data entry by means of a swipe or scanning wave at manned and unmanned transaction terminals 14 and also to enable the user not to have to re-enter personal details and their symbol key (both of which are stored on the card) at every transaction event. The information is typically stored in a scrambled format on the card which can be unscrambled by a verification process either on the terminal 14 or the central server 12, and can be in the form of a barcode The user-specific card can for subsequent store a reference number which represents a reference to their personal information and symbol key. Use of the reference number is secure as it can always be challenged by asking for the associated symbol key.

Validation or redemption or validation for interim interest or profit payments can be facilitated by the system by the comparison of surname, initial, birth date and symbol key with user-generated information as well as identity documents for the country concerned. In this embodiment, a registration is carried out at a validation centre 17 using a validation terminal 15. The registration process is described later but results in the generation of a registered ticket 19 which is more durable than the POS ticket 22 and is designed to have a much longer life. A relatively inexpensive way of providing this is to provide a reusable user-issued plastic card which has a magnetic strip provided thereon for storing the registered ticket details. Alternatively, a machine-readable barcode or transaction number printed on a plastic substrate and/or a paper substrate in a durable fashion, either by ink printing or laser/light etching/engraving that can be verified by reference to the central server 12, can fulfil the same function. Such a card 19, can hold multiple registered tickets information.

The system allows for a separate account file 20 to be generated at the central server 12 upon each and every purchase, without use of any supplier-generated low-security identity card (not shown). The account file 20 includes the high security of the algorithmically scrambled and encrypted user-selected symbol key, and can be attributed to a single user name file (not shown) corresponding with the name, initial and birth date of the purchaser as entered on the paper entry slip 30. Thus multiple account files 20 can be linked to the same person via the single user name file. The significance of this is that where there are errors in the initial, name or birth date but one or more corresponds with a symbol key that is common to both the name file and the account file 20, a cross-linked entry on the designated central system 10, as per our co-pending international patent application mentioned above can be made. This means that at later reconciliation, registration or redemption, the entries can be aggregated, provided that the purchaser supplies further evidence which would, on its own, would not be enough to aggregate the entries into one entry. In other words, partial proof of purchase at a terminal POS location 27 of purchase or multiple purchases (multiple slips 30) can be accommodated by the present embodiment. This is even the case if multiple transaction slips have been stolen from another purchaser with a similar name, or whose algorithmic transaction numbers have also fraudulently been replicated by another in connivance with the purchaser or without his knowledge. This is because thermographic paper (used in ticket printing by lottery terminals 14) will not last 20 years and so security would reside in the knowledge of the numbers printed on the ticket 22.

The system 10 of the present embodiment, also avoids a fraud opportunity by large criminal organisations which could hack into the secure transmission between terminals 14 and the central server 12 and indulge in terminal ghosting to provide false non-paid entries. Normally, lottery systems 10 for example, have security because a publicly drawn winning ticket number is recorded and associated on a system 10 by production and algorithms with a particular terminal and a particular date, part of which information is provided on the ticket 22. Because in contrast to a lottery, all of the tickets have value irrespective of the prize draw, the unique terminal identification information needs to be either encoded by algorithms and/or encryption at the terminal 14. However, part of the process is available for a common algorithm placed outside the terminal 14 in a secure system (secure loop server 24) that isn't directly accessible. The terminal 14 can therefore both code (encrypt) and generate a hash (scrambled) through an algorithm its date, its terminal number, the so-called 'bet data' (transaction data) and the symbol key selected, together with the surname, initial and birth date information. Also, significantly, the terminal 14 can include an algorithmically generated number for the symbol key which is algorithmically generated outside the terminal/central server connection by the algorithmic server 24. This algorithmic server 24 only sends an encrypted algorithmically-generated number for the symbol key which it has been sent in addition in the open (as well as having been sent the symbol key encrypted and algorithmically hashed by the terminal 14). The algorithm server 24, on being sent the symbol key by the central server 12, will only send back the algorithmically-generated number that corresponds to the symbol key. It will then keep a record of the algorithms related to the terminal numbers related to the symbol keys related to the date in its local store 26. The central server 12 if bulk broken into or attacked by an insider will not keep the algorithm related to the symbol key. Thus, on validation, a second stage of the validation step can include connecting with the algorithm server 24 to establish the correct algorithmically-generated number. The primary purpose of the algo server 24 is to avoid insider fraud as it could conceptually be in a different location/country on a secure loop connection.

The following sets out the different ways (Options A to G) in which the present invention can be embodied. Each Option is described below some with reference to accompanying figures.

### Option A

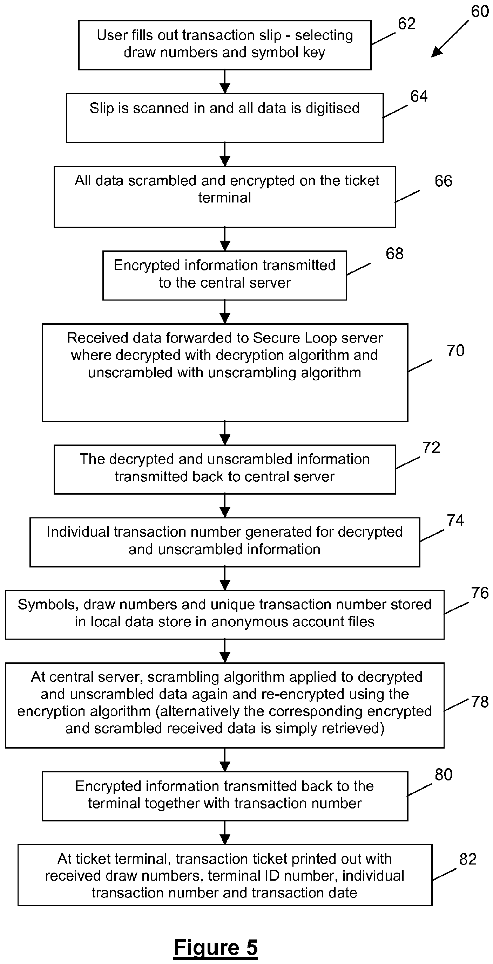

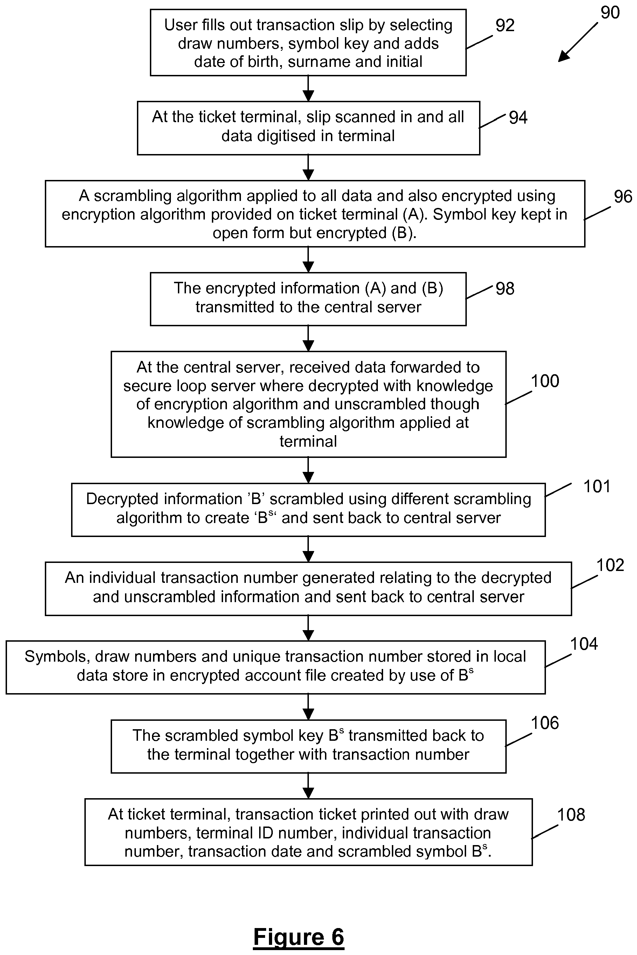

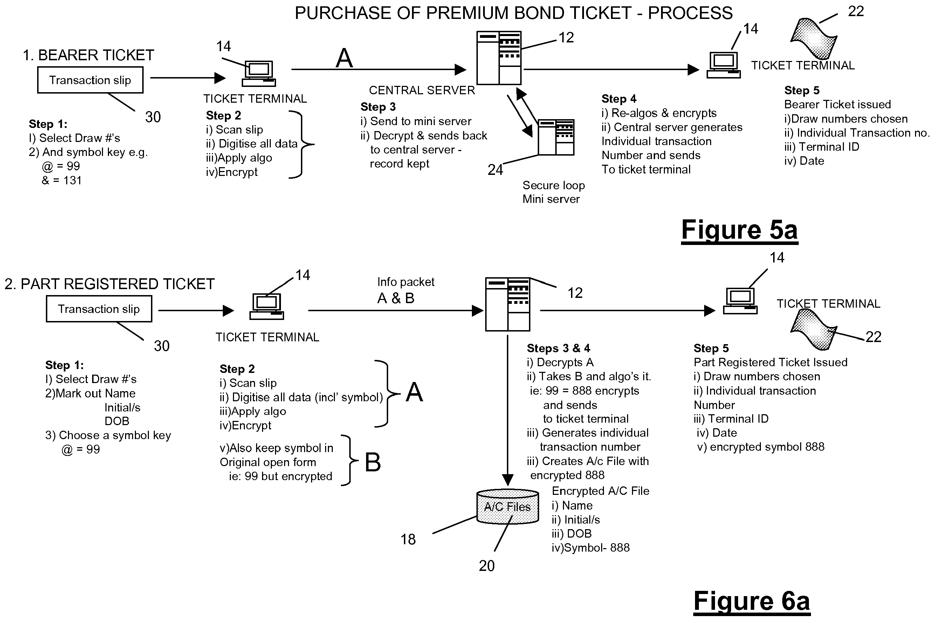

**Figure 5** and **Figure 6** illustrate the steps involved in purchasing a new multi-function ticket 22 described above. For the purposes of this description, an example where the user utilises a lottery function is described for both a bearer only transaction (namely where the user wishes to remain anonymous **Figure 5****)** and a part-registered transaction (where it is requirement that the user be registered in some form to fulfil the money laundering and governmental requirements **Figure 6****).** Referring to **Figure 5****,** the bearer ticket process 60 commences at Step 62 with the user filling out a transaction slip 30 by selecting draw numbers and symbol key. Then, at Step 64, the transaction slip 30 is scanned in at the ticket terminal 14 and all data is digitised. This data includes a unique terminal ID number and the date of the transaction. A scrambling algorithm is applied, at Step 66, to the digitised data and this is then encrypted using an encryption algorithm provided on the ticket terminal 14. This data includes a hashed numerical value form of the symbol key. Using a scrambling algorithm adds another level of security to relying upon the strength of encryption alone. The encryption used in this embodiment is standard 128-bit encryption though alternatively 64-bit or 256-bit encryption could also be used. This scrambled and then encrypted information is then transmitted at Step 68 to the central server 12.

At the central server 12, the received data is forwarded to the secure loop server 24 where it is at Step 70 decrypted with knowledge of the encryption algorithm used by the terminal 14 and unscrambled using knowledge of the scrambling algorithm applied at the terminal 14. An individual transaction number is generated and assigned at Step 72 to the decrypted and unscrambled information. The decrypted and unscrambled information is transmitted back at Step 74 to the to the central server 12. The symbols key, draw numbers and unique transaction number for this transaction are stored at Step 76 in the local data store 18 in anonymous account files 20. In this way, the user-selected symbol key is importantly linked to the transaction number at the central server 12. This is important for later validation of any redemption action.

At the central server 12 at Step 78, a scrambling algorithm is applied to the decrypted and unscrambled data again and it is re-encrypted using the encryption algorithm. Alternatively, it is also possible for the corresponding encrypted and scrambled data, which was received after Step 68, to simply be retrieved for this use. At Step 80, the encrypted information is transmitted back to the terminal together with the newly created unique transaction number. Finally, at Step 82 at the ticket terminal 14, a transaction ticket 22 is printed out with the received draw numbers, a terminal ID number, the individual transaction number and a current transaction date. It is possible in some terminals 14 which have the ability to store transaction data, that the transaction data does not have to be sent back to the terminal from the server. In this case only the encrypted transaction number would be sent back for printing out on the ticket 22.

The method of **Figure 5** is schematically shown in **Figure 5a****.**

Referring to **Figure 6****,** the part-registered ticket process 90 commences at Step 92 with the user filling out a transaction slip by selecting draw numbers and symbol key. Furthermore, the user specifies also at Step 92 using the transaction slip 30, his surname, initial and date of birth. Then, at Step 94, the transaction slip 30 is scanned in at the ticket terminal 14 and all the data is digitised. This data includes a unique terminal ID number and the date of the transaction. A scrambling algorithm is applied, at Step 96, to all of the digitised data and this is then encrypted using a encryption algorithm provided on the ticket terminal 14. This encrypted data constitutes information packet 'A'. Also at Step 94, the unscrambled digital representation of the symbol key is encrypted as information packet 'B'. Information Packets A and B are then transmitted at Step 98 to the central server 12.

At the central server 12, the information packets A and B are forwarded to the secure loop server 24 where they are at Step 100 decrypted with knowledge of the encryption algorithm used by the terminal 14 and unscrambled using knowledge of the scrambling algorithm applied at the terminal 14. Decrypted information 'B' is then scrambled, at Step 101, using a different scrambling algorithm to create 'B^{s}' and this scrambled symbol key is sent back to central server 12. The use of a different scrambling algorithm provides an added level of security to the central authorisation body which enables the symbol key (in scrambled form) to be available for authentication at the central server 12 and to be printed on the ticket 22.

An individual transaction number is then generated at Step 102 relating to the decrypted and unscrambled information packet A and the transaction number is sent back to central server 12. At the central server 12, the symbol key, draw numbers, name, initial, date of birth and unique transaction number are stored at Step 104 in the local data store 18 in an encrypted account file 20 created by use of scrambled symbol key B^{s}. In this way, the user-selected symbol key in a scrambled form B^{s}, is importantly linked to the transaction number at the central server 12. This is important for later validation of any redemption action.

The scrambled symbol key B^{s} is transmitted, at Step 106, back to the terminal 14 together with the transaction number. At ticket terminal, a transaction ticket is printed out, at Step 108, with the draw numbers, the terminal ID number, the individual transaction number, the transaction date and the scrambled symbol B^{s}. The transaction ticket can be a re-usable slip or a vendor supplied card which contains the surname, initial, date of birth and symbol in an scrambled format. This form is particularly helpful for the blind.

The method of **Figure 6** is shown schematically in **Figure 6a****.**

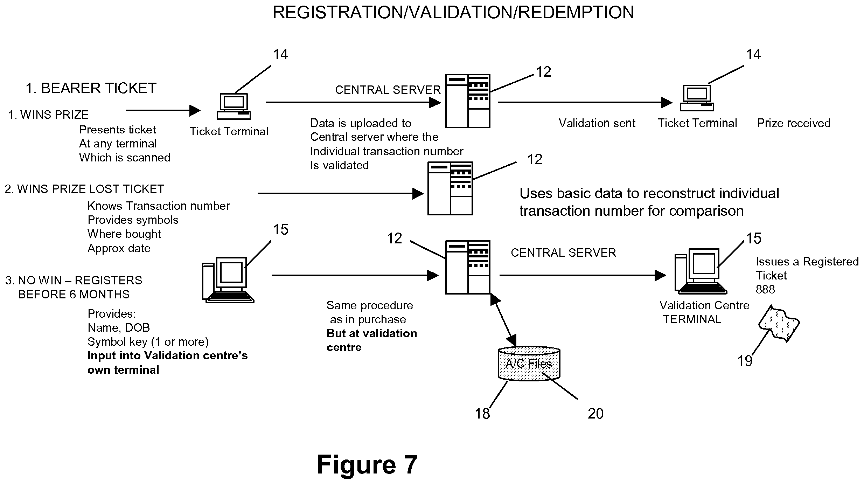

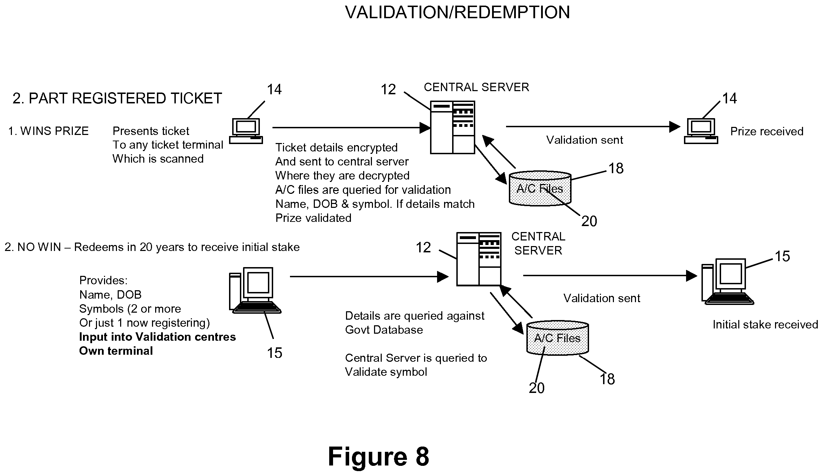

The steps required for full registration/validation/redemption are set out in **Figure 7** for a bearer ticket and in **Figure 8** for a part-registered ticket. Referring to **Figure 7****,** for the bearer ticket 22 there are three possible options. The first is that the user wins a prize. In this case, the user presents the ticket 22 to the POS terminal 14 and the ticket is scanned into the terminal. The user also provides his symbol key to validate this unique identity. The details are encrypted and transmitted up to the central server 12, where the individual transaction number is validated against the stored account files 20. If the correct transaction number has been provided as well as the correct symbol, then the central server 12 sends an authentication message back to the ticket terminal 14 and the prize is issued at the POS terminal 14 to the user.

The second option is when the user has lost his ticket. The user goes to the ticket terminal 14 and provides at least the transaction number, and the symbol key if the ticket was a bearer ticket or if the ticket was a part-registered ticket, then the surname, initial, date of birth, and approximately where purchased and on what date, together with the symbol key is provided. This information is encrypted and sent to the central server 12 where the information can be authenticated and a new ticket can be reissued. The symbol key is the user authentication in conjunction with the other provided data.

Referring now to **Figure 8****,** the validation/redemption of a part registered/registered ticket 22 is now described. In the case where a user having a part-registered ticket 22 wins a prize, the ticket is presented to any POS ticket terminal 14 and is scanned in. Also, the user keys in his symbol key. The ticket details and symbol key are scrambled, encrypted and sent to the central server 12 where they are decrypted and unscrambled. The Account files 20 are queried for corresponding information relating to user surname, initial, date of birth and symbol key and if the details match the ticket is validated for the prize. The validation is then sent back to the POS ticket terminal 14 and the prize is issued to the user.

If however, the part registered-ticket is a losing ticket and has a long-term function associated with it (as in the case of the Sharia'h compliant prize incentive bond), the user can redeem the cost of the ticket at the expiry of the long-term event. To do this he goes to the secure validation centre 19 (which may typically be a bank or post office) and provides his personal details as well as his symbol key which are then encrypted and uploaded to the central server 12. The same procedure as part-registered purchase (described in **Figure 6** above) is used to validate the user's details with the appropriate account file in an appropriate database 26 relating to the long-term event. The symbol key acts as a unique user identifier for the stated person. If the details match, the central server 12 issues a validation, which is sent to the validation centre terminal 17 where the initial purchase price of the ticket 22 can be reclaimed by the user.

The primary feature is authentication of the original bearer of the bearer ticket 22 by use of the unique symbol key with the transaction number input on redemption, which are then compared with the originally stored values corresponding to the original transaction. Once confirmed, the redemption can be authorised. The details as set out in **Figures 7** and **8** will be readily apparent to the skilled addressee and, whilst this has not been provided in this description, they can also be represented by flow diagrams similar to **Figures 5** and **6****.**

In another embodiment, entry into the draw and premium bond purchase by mobile phone and payment by deduction from mobile phone account or pay-as-you-go credit on that mobile phone number would require the same entry of name, initial, birth date and symbol key as have previously been provided to a lottery terminal as described above. The mobile phone or computer would have the same functionality as a terminal 14, configured by software loaded on the phone or provided via a browser window to a terminal functionality emulation website. In the case of a mobile phone, where the user already has a central user account set up, this is not required for the present invention to operate, but could advantageously be used as a cross check to user identity.

This is especially true of long-date premium bonds where identity and airtime contract/mobile phone/SIM card differences are multiplied and the other step related to the extra mathematical permutations offered by the symbol key over PINs is necessary. Crucially, this can be achieved by sending a simple SMS message in which the user would provide the surname, birth date and initials as a series of numbers followed by decimal points followed by numbers which would correspond to the number letter order of the alphabetical transaction slip. For example, the number '3' can be used to represent the letter 'a' in the name Omar and is expressed as 1 .3 etc and the symbol key can be transmitted by a number as allotted on the transaction slip, though typically it would just be the transaction number.

The mobile phone user therefore only has to receive an MMS picture of a transaction slip with the numerals beside the alphabetical letters in the tables such that a Table A would be the surname and a Table B would be the initial etc. This is designed to be easy to send and be easy to use, but nonetheless to be secure in a mobile-phone purchase system. On purchase, in addition to the checking against (querying) an identity card/government database 29, the vendor is able to query a mobile phone database (not shown) to create a second validation system for the short term. The first time the user uses the system 10, he is sent an SMS telling him to delete his first SMS that contained his selected symbol key that corresponded with the number on the virtual transaction slip. When the user has sent an SMS confirming deletion, he is sent his confirmation. If a user of that name and birth date had used the system by phone or by other system before he is sent an SMS with a random list including his selected symbol key, which he is asked to delete again when he has confirmed deletion, he would receive his confirmation. He is always required to delete all SMS messages related to the central number and is able to claim only on presentation of ID and his symbol key. The mobile phone itself would not be sufficient as this might be lost or stolen. This degree of extra security is required to overcome the difficulties in accessing mobile phone databases across borders or in the differences between identity card names on identity card systems and mobile phone systems, and is achieved by the use of the symbol key-based encoded algorithm system 10.

Alternatively, as an extra security the user could be told to implement a transaction the first time on a terminal-based system and also enter his mobile phone number on a space provided (not shown) on the terminal transaction slip 30. The purchaser would subsequently perform the SMS function with the correct symbol key and a false name(pseudonym). On attempted collection of the prize, the purchaser would give his true name and other details and his symbol key together with his phone as proof of his authenticity. This conceptually would allow someone in possession of a mobile phone to feel that they remain totally anonymous as regards the prize element but be sufficiently traceable in countries that require mobile phone companies to check ID on sale of phone numbers for pay-as-you go phones to satisfy money laundering requirements and avoid escheatment laws that could cause the transaction to lose for example Sharia'h law approval by treating purchasers differently.

In another embodiment (not shown), a new product can be provided where an MMS picture is sent with a marked grid to allow for a selection of a spot-the-ball style competition as well as the alternative of a software application that could work with mobile phones that have in-built pointer system. In this case, the user will either generate an exact grid reference based upon the grid included on the MMS picture or generated by the software application, with the pointer being moved over the picture by the software application that is downloaded to the mobile phone and which includes the MMS picture. This product could be incorporated with the abstraction method in countries where spot-the-ball competitions are regarded as gaming. In addition, the spot-the-ball game could be tied to or paid for from the promotional budget of a newspaper or supplier of some other good or service and attached to the lottery-style premium bond draw on the same basis as that used above, i.e. a symbol-based encoding method so as to satisfy long-term security issues related to the change of residential address, Internet address or mobile phone SIM card/telephone number airtime contract or other identity mismatch issues.

In another embodiment, with terminal, mobile phone and Internet supplied products, a second transaction code could be generated and the user required to select another separate symbol key in a separate table so that his secret symbol key can be kept apart from the original permanent non-variable transaction symbol key. Thus, if the premium bond and prize draw also gives the right to a good or service, for example a bottle of Cola, from designated suppliers, the purchaser goes along with the standard transaction code which is available at the supplier as well as his transaction symbol key which will have a related code so that when the supplier enters the purchaser's specific beneficial transaction symbol key into an available terminal, the transaction can be validated for the supposedly free gift of the good of the service.

In another embodiment, premium bond or financial instrument purchase etc, and personal details entry via an Internet site could allow for information to be entered in the same way as it is entered into the paper transaction slip. Again, the problem of a tie-in to an Internet account or site which could change in the medium term together with name information in deed pole countries, which could offer validation difficulties in the medium to long term, is overcome by the user's unique combination of the self-selected pre-printed symbol key. Conceptually, the purchaser may be unbanked (no having a bank account) and as with the mobile phone example described previously, may wish to purchase by phone or Internet but may make payments by cash into a convenient terminal site for the purchase. Linking the Internet and/or mobile phone purchase to a point of sale lottery style central server linked terminal cash payment, the symbol-based name details and date system could allow for pre and retrospective payments for transactions conducted at a different time at the (unbanked non credit card) purchaser's convenience.

The following describes steps, which are included within an algorithm and encryption process that resembles the algorithm process as mentioned in our previously mentioned co-pending patent application (published as WO2009019602). They cover a paper-based and/or card-based purchase system to be used for terminal/mobile phone/Internet site purchase system that can allow for verification of credit card purchases (without signature and or address and/or card authority verification) and/or cash and/or pay-as-you-go mobile phone subtraction from account payment as well as stored card of value without expensive security devices being included in the card. Conceptually, the card could be a simple durable substance designed to last 20 years (i.e. could be heat-etched and sealed plastic) with a series of numbers printed on it not requiring magnetic print readers and expensive encryption in the card itself. It could also be of durable paper and ink. It could be used as well as a reminder for straight code entry into an ATM without a secure bank account or secure bank card for abstraction of cash from the card or conceptually paying in of cash to then card. As such it acts as a form of banking service to the unbanked.

Users generating tickets and/or ID cards using their name, initial, birth date and/or a letter-based password or numeral-based PIN are very vulnerable to criminal gangs bulk force hacking as this scheme would create financial instruments that are open for up to 20 or more years. As such it is very lucrative for criminal gangs to obtain by deceit, fraud or otherwise national listings of birth certificates including name, initial, birth date and enter this information into a bulk force programme that creates random passwords as well as PINs from birth dates. The reason is that many people use variants of their name or common words etc as passwords or indeed their own birth date as their PIN. Please note that name, initial and birth date information in any given country is available to a wide multiplicity of officials and semi-private businesses ranging from lowly-based officials to highly placed ones and the transaction function could be a set of bonds for a given country each with a 20-year term that could cumulatively equate to hundreds of millions if not billions of dollars. This would make it very lucrative for criminal gangs to access this information if only name, initial, birth date and a user-generated numeric or Latin or local script PIN/password was being used. Symbols, on the other hand, are not associated except in the mind of the user and there is no other record than the highly secure internal records (with algorithmic and encryption levels of security) of the user-selected symbol keys.

The options within above-described Option A for the manner in which the user interacts with the terminal 14 are set out below. These options include variations in the user's data input at a terminal 14, the terminal itself and what is provided back to the user in response to interaction with the terminal:

### Option 1 Terminal Sale

Step 1 - Purchaser fills out a transaction slip like that described above
Step 2 - Ticket scanned
Step 3 - Coding and printing as per previously described embodiment.

### Option 2 Terminal Sale with Card Generated

Step 1 - as in Option 1
Step 2 - as in Option 1
Step 3 - as in Option 1, but card printed at terminal which includes algorithmic details of name, initial, birth date, selected symbol etc. (This information is coded on a paper ticket anyway). The only difference with the card is that the card would have a one-time algorithm to encode name, initial, birth date and symbol, whereas on the ticket if this information is proffered each and every time on the basis of a paper transaction slip. Then conceptually a random algorithm could be provided that encodes the name, producing different hashed numerical series for each and every ticket.
Step 4 - card registered at more secured location by registration process. This means that the card will be swiped through a terminal, a ticket printed with name, initial, birth date, but crucially not symbol, and name and birth date will be compared to acceptable local state identity documents. If an extra teller security check is required by local laws to avoid teller fraud even in secure locations, an identity document (passport, ID card) could be scanned, the requisite teller identification number attached and this be sent up the system for manager level second approval. Step 4 can also be restricted to only take place at redemption so that effectively the money is being held in escrow pending full and final registration. This use of the card allows registration for a prize incentive bond to now be moved from 6 months, as described in our co-pending patent application WO2009019602 because of the potential denigration of the thermographic paper, up to 20 years or more according to the life of the substrate of the card. The card can be of a durable plastic with laser etching of the serial number openly available on the top and this serial number would correspond to recorded algorithm generated numbers in the system. The card in plastic or durable paper (such as 'Ruff N' Tuff' by Graytex Papers) can be produced at different locations under sufficient secure conditions to be both easily readable by lottery terminals and central systems and yet not forgeable (i.e. not bypassing the security features built into the lottery terminal encryption process) during different points in the sales process to avoid undermining the speed limitations of lottery systems and POS. The durable paper does not have the standard expensive security features used in banknotes and/or value documents but nonetheless has the security features of a lottery system generated in such a way as not to compromise speed, on the one hand, and make it impossible to incorporate into the system or to speed up and compromise the increased security features required once functions other than a pure lottery are undertaken across a lottery system.
Step 5 - name entry on nominal account held at central server will be signalled as fully registered so that future queries on the system database will notify that the customer is registered.

### Option 2A Terminal Card without Customer Present

Customer fills in transaction slip with all details as in Option 1, but ticks box notifying that he is a registered user. Upon scanning of transaction slip, system reads ticked box and compares details to account entries verifying that the customer is registered if his account is found.

### Option 3 Remote Card Generation

Step 1 - card as described in Option 2 above is generated by user at unmanned vendor machine. The vending machine can be remotely attended so as not to cause choke points (too many users waiting to use terminal 14) at the POS 27. This is useful in places where it is considered that terminal sales could be too prone to choke points if they also generate the card.

The card is user-generated at the remote vending machine, possibly for free, using a keyboard which contains an alphabetic keyboard in the script of the local country as well as a Latin script on a transliterated basis on the same key or potentially as a separate keyboard. Numeric entries are entered on the numeric section of the keyboard and symbol entries are entered on the symbol part of the keyboard. The symbol keyboard represents a new step at the vending machine. The symbol keyboard is best manufactured as a separate keyboard to enable illiterates to use it. Ideally, it has raised symbols so the blind can actually feel the keyboard noting that since there is no Braille version of local script, the raised symbol keyboard can be manufactured for universal use. Conceptually, all keys can have a Braille element, though this would not be manufactured in low turnover countries with individual scripts. This non-manufacture in some countries emphasises the novelty benefits of universal raised non-numeral non-letter symbols understandable by blind purchasers worldwide.

With some electronic vending machines, the symbol might be a graphic on a screen operated by touch pad or could be a pre-etched symbol corresponding to a numeral which is then entered by the numeral keypad. This is less desirable as it cuts out users who are blind or illiterate. The significance being that illiterate and blind users can have a friend fill out the name, initial and birth date details and then cover the symbol keyboard so that the person filling it out will not be able to know the symbol selected. This can give illiterate and blind users a degree of security that whoever helps them does not have an incentive to put in their name or the name of a co-conspirator rather than the name of the person they are supposedly helping.

Step 2 - this information is sent by the vending machine to the central server and algorithms are generated in the same way as on the terminal. Note, the algorithms for name, initial, DOB and symbol are potentially separate and distinct and can be held on different servers or parts of servers so that only a master controller can access all or if this is felt to be too insecure, a separate person for each algorithm server can have access to that server or those parts of a server. Note internal fraud is just as much an issue as external fraud when talking about bonds whose value can stretch into the billions.

Step 3 - the generated card is delivered and is available to go through the same registration process as in option 2.

Please note that the user could have entered his name as J Smith with his birth date and the system could have identified by querying national identity database systems that there are various variants of J Smith, such that J Smith could be John Maynard Kaynes Smith or John Michael Kylie Smith or John Anthony Michael Smith all with the same birth date. The system could allow for an interrogation of the user at a subsequent purchase requiring him to supply all his initials in order to update the account entry on the central server. However, the risks of errors are reduced by the combination of symbols and the possibility of two J Smiths of the same birth date using the same symbol, especially if the symbol key comprises a two or more symbol selection, is miniscule. The chances are made even more miniscule by a user subsequently on another purchase being asked to confirm a range of initials supplied by the system, some of which will be false. This eliminates the chance that a user who has pre-selected a symbol could be faked by someone else who would have to have one of the same surname one of the initials of the real user, the same birth date and the knowledge of the symbol(s)selected.

### Option 4: Purchases at Terminal with Card Present

Step 1 - purchaser presents card and paper transaction slip for scanning at the terminal. If there is a suspicious transaction the terminal can require the purchaser to fill in the name, initial, DOB and symbol information on the paper ticket to reconcile with the card information. Normally, the paper slip only needs to be filled out with a lottery-style so called 'bet slip' information, in this case selection of product plus either self-selected or lucky draw numbers for the prize element.

If the transaction slip is being used for a foreign exchange transfer, then the purchaser presents his card and the transaction slip with the foreign exchange product box ticked and the recipient name, initial, DOB and transaction symbol for this transaction for the recipient of the foreign exchange transaction. A variation of this can be to have a recipient always having the same symbol in order to receive money. Alternatively, he can have the symbol alone, which is varied by the sender for each and every transaction. Note the system can accommodate the name, initial and symbol only for the recipient in cases where the sender may not have a relationship or the recipient may not trust the sender sufficient to supply DOB information.

The recipient would go to a terminal station that is equipped to pay out cash, proffer their name, initial and ID docs together with the transaction symbol entered onto the same type of printed transaction slip also ticking the receiving money box and this could be, conceptually, sufficient to generate the transaction. However, this would represent a relatively low security step. What could also happen to provide higher security, is that the sender on presentation of a card and transaction slip for a money transfer gets a ticket printed with a transaction number which is generated as a hash from a hashing algorithm as described in our co-pending patent application mentioned previously However, now the ticket is a card with the hash and other details. The sender then speaks over the phone to his recipient, tells him to go and present the hash number to a terminal operator or tick off the number or write in the number on a transaction slip 30 and tick the symbol for this to be scanned and verified by the terminal 14. He could also send a notification by SMS to the recipient with the transaction number and subsequently inform him of the symbol or use a pre-agreed symbol on a permanent basis. This method of money transfer represents a very secure way to effect this transaction function.

Option 4 - represents the use of the card combined with a transaction slip to pick a product and self-selected numbers or lucky draw numbers for prizes or to pick products e.g. for money transfer as a relatively speedy process compared to straightforward paper transaction slip entry. Option 4 can be used for any of the product sets presented on the transaction slip.

### Option 5

Card has the ability to be a swipe card and to be multi printed either via a magnetic coding strip or a surface swipe and surface re-print, but preferably not expensive devices such as Chip and PIN or hologram visual security, since the security is in the algorithms held on the central server 12. In this option, the card can be repeat loaded on each and every transaction with transaction data so that the card not only carried name, initial, DOB and symbol algorithm scrambled further encrypted but can have a number of transactions recorded in it. This is to enable it to be scanned at third-party terminals 14 under low security with those terminals 14 having a yes/no verification facility attachment to the central server 12.

This card can be voided if lost and the information replicated on another card by the user going to a registration centre presenting identification and symbol information. This card replication process can take place away from a registration centre 19 so that a person losing his card goes to a terminal 14 without registration facilities or an unmanned vending machine and generates a new card with initial, DOB and the same symbol. The security is that for any prizes won post the generation of the new card, can be on a bearer basis. However, for any transaction prior to the edition of the new card, a re-registration and verification process can take place. The significance is that someone losing the card can continue transactions under the same account and register at their convenience.

Note the use of a symbol is highly advantageous because otherwise criminals could acquire name DOB and initial information for residents of a particular country and then generate identity documents either illegally through forgery or legally through changes of name. Then they could turn up to registration centres 19 and claim cards if the entry was only on the basis of a name, initial, DOB and possible PIN. The present invention assumes that there could be a considerable amount of teller corruption, so that even at a registration centre 19, criminal gangs could try to access the system 10 using a variety of PINS for a particular name, DOB and initial.

### Option 6

A card is generated either from a vending machine or a terminal with paper as in option 2 but an open identity number is printed. This open identity number is to allow transactions to take place on Internet sites and / or mobile phone via SMS. The purchaser would thus simply on the Internet site, tick their symbol and enter their transaction number and alternatively on an SMS, send their name, DOB and initial and transaction number. On the SMS channel, security is maintained even if the phone is lost because the person winning would go to the redemption/prize centre and give their name and the symbol which would not have been included except as a scrambled algorithm number in the SMS message. Again a fraudster is thwarted, because if the mobile phone is lost and a fraudster uses it or criminal gangs attempt to use stolen phones for bulk purchase, the pre-issued card number that is linked with a symbol, provides a secure authentication connection such as: two ends of a piece of string that nobody can link without having the user's actual knowledge.

### Option 7

Card is generated but has a magnetic strip that is capable of cash loading so as to provide a banking service for the unbanked. The advantage of this is that the unbanked can load cash into it and use it for allowable transactions without going through a banking process and can still risk losing the card since they can re-generate a card by going to the appropriate registration centre (in this case required since there is cash in the card). Teller fraud is eliminated because the symbol information cannot be obtained by bulk hacking or teller corruption or state citizen data information misuse.

To illustrate how this product could be used on a new product "Spot the Ball" (described below) on either an Internet site or a mobile phone the following takes place: -

On a mobile phone, a user dials up and downloads an MMS picture-based message of a 'spot-the-ball' style picture with a pre-printed grid of letters and numbers so as to be able to give an exact grid reference to the user's predicted exact position of the centre of the ball which has been eliminated from the picture of a popular football match with only players included. He then sends back an SMS to a pre-registered number (and in the case of a promotion provided by a third party enters the promotion code) so that the SMS will contain the serial number printed on the card, the grid reference and the promotion code if relevant. This simplifies and speeds the mobile phone keyboard entry and allows for pay-as-you-go mobile phones to charge in security without fear of a lost phone/SIM card being misused. The central system can associate the telephone number for an extra level of security but the security is in the serial number of the card which has been provided in the SMS.

On an Internet site, the party would open up an Internet picture, again with grid lines printed, estimate the exact centre of the ball and enter into a box his card transaction number and in the case of a promotion, in a separate box the promotion number. This could be done securely in public e.g. in Internet cafes etc since no name information is entered. In the case of an Internet site, if this was required to be paid for (if not paid for by a third party and done with a promotion code) the card transaction details could allow for the card to be loaded with cash and then used on this transaction.

In countries, where gaming laws would regard such activities as gaming, the abstraction method premium bond could be added to the "Spot the Ball" competition to reduce the risk of the transaction being considered illegal. This would increase the requirement for the transaction card generated as in the options above.

With this 'spot-the-ball' product there is a further benefit of the user-tied transaction card number process as that creates an encrypted name reference which could conceptually allow a query against employee data in a database of anybody generating a promotion scheme so that for example employees of a newspaper running a spot-the-ball competition could be prevented from entering other members of their family etc.

Further embodiments of the present invention are now described:

### Option B: (Anonymous or alias transaction)

The steps involved in implementing this option are described below. The data generated at the POS terminal 14 includes:
Packet A : Name (Surname), DOB, initial
Packet B : Symbol key
Packet C : Bet data (lucky number or self-selected e.g. prize incentive draw numbers)
Packet D : Product Data
Packet E : Identification number
Packet F : Transaction number
Packet G : Terminal number
Packet H : Date

**Step 1:** Fill out transaction slip away from POS terminal 14. The transaction slip 30 includes packets A B C & D / Name, DOB, Initial, Symbol key, Bet data (product data or transaction data).

Name/Initial/DOB/Symbol/Bet data (i.e. self-selected numbers or opting for terminal random generated numbers) product data i.e: money transfer, PB etc.

**Step 2:** Transaction slip 30 scanned at terminal 14.

**Step 3:** Data digitized.

**Step 4:** Digitized data regenerated as hash according to a scrambling algorithm (hashed).

**Step 5:** Hashed digital number is encrypted for communication.

**Step 6:** Encrypted data sent across public transmission lines 16 to algorithm server 24 via central server 12.

**Step 7:** Algorithm server 24 de-encrypts data and applies reverse of scrambling algorithm for appropriate terminal to further decrypt data (retrieve the original data packets). However, it does not decrypt symbol information in info (information) packet B. Info packet A encrypted according to different key and info packet B encrypted sent up to central server 12 on secure loop.

**Step 8:** Central server 12 de-encrypts and creates an a/c (account) file 20 with as much information as is supplied.

The account file can be set up with any name, i.e. can be an alias or can be anonymous.

The A/C File 20 stores a transaction number and a symbol key.

Note user will have to register the transaction number and symbol key and at later stage link it to ID data.

In this variation, an identification number is still created - but the source data for the algorithm is less. So the purchaser/user can provide an alias for the bearer part of the transaction - no name is required but has the user has to have picked a symbol key (of one or more symbols). Alternatively, the user can pick a famous icon (movie star/sports star/politician/cartoon character/ historical figure/famous monument/famous landmark) -which can also be valid symbols to be used in a symbol key. These icons/images e.g. (movie star/sports star/politician/ cartoon character/historical figure/famous monument/famous landmark) can also have attributes added or subtracted by the user at his/her volition.

### Option C: (Transaction capable of being audited for money laundering purposes)

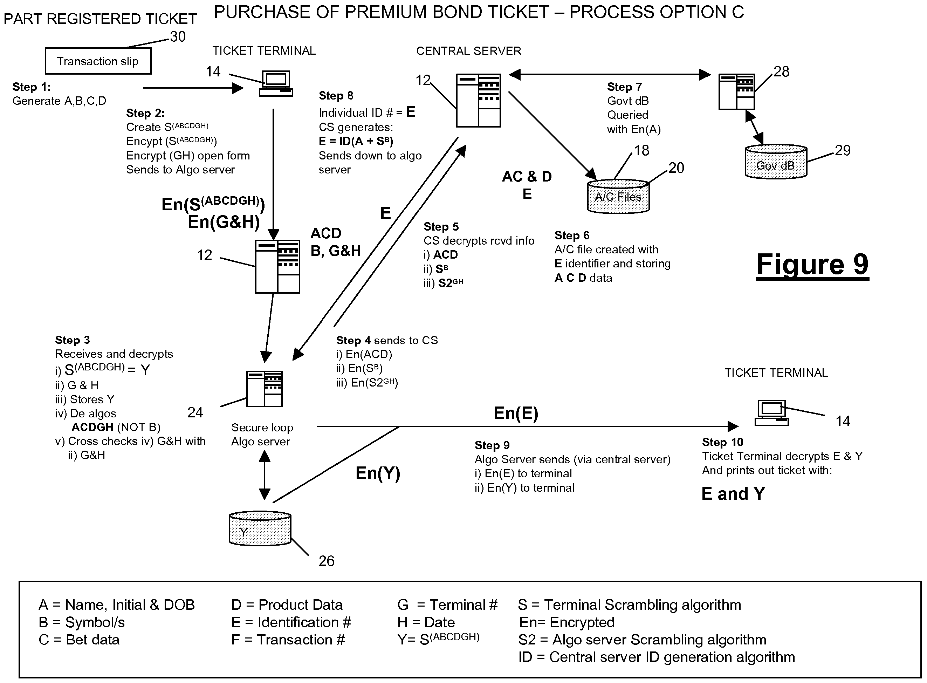

Referring now to **Figure 9****,** the ten steps involved in implementing this option are set out in the Figure and are further described below:
**Step 1:** Fill out transaction slip away from POS terminal. The transaction slip includes packets A,B, C & D (as described above in Option B).
**Step 2:** Transaction slip 30 scanned at terminal 14, packets A B C D G & H generated and then scrambled with scrambling algorithm (S) unique to terminal 14 to generate S^{(ABCDGH)} This algo (algorithm S) was been transmitted by the algo server 24 to the terminal 14 previously and the algo is changed on a pre-determined time basis with a record of all algos according to time and date being stored at the central server 12. This algo can also be changed on a random basis by the terminal for extra security. The terminal also adds packets G & H, in encrypted only format (namely unscrambled form). This whole packet is sent up simultaneously to Algo Server 24 via the central server 12.
**Step 3:** The algo server 24 decrypts all this information and is left with two packets: One of which is A,B,C,D,G & H in algo'd (scrambled) form = S^{(ABCDGH)}. The other of which is G & H in straight digital form (unscrambled) = GH.
   The algo server also keeps a record of the packet S^{(ABCDGH)} (call this Y) so that this can be transmitted in **Step 8** (see later) to the ticket terminal 14 for printing on the ticket 22 for the user to take away.
   The algo server 24 looks up the scrambling algorithm appropriate to G&H (S) and unscrambles ACDG & H (B is not unscrambled). The server 24 then checks if the unscrambled version of G&H matches the decrypted version of G & H which was not scrambled. If they match the algorithm server 24 knows that the received signal it is a valid signal from a valid live terminal 14. (This prevents criminal gangs breaking into the network to create false records of financial instruments).
**Step 4:** The algorithm server 24, on a secure loop, sends the following to the Central Server 12: ACD in encrypted form (En(ACD)) and the terminal algo'd (scrambled) B now encrypted En(S^{B}) and G&H algo'd and encrypted (En(S2^{GH})) according to the algo server's unique local algo which doesn't change but is kept inside the algo server 24.
**Step 5:** The central Server 12 now de-encrypts all info leaving it with:
   a) A, C & D in real form
   b)S^{B}
   c) S2^{GH}
**Step 6:** It uses A C & D to create an account file 20 for example: J Smith, DOB, & Bet Data & Product Data
**Step 7:** The Central Server 12 then transmits the Name & DOB information (A) in a standard encrypted form to a secure Government server 28 and database 29 for a Y/N answer to three options:
   Option i) does J Smith with this DOB exist?
   Option ii) are there any other J Smiths with this DOB?
   Option iii) are there any issues with J Smith with this DOB?
   The Government database 29 stores many individuals personal data (such as driving licence details) and acts as a verification of personal identity. No specific details are given out of its contents. Rather, if queried with an identity it can simply check against the records in its stored database and either confirm or deny the validity of the data it is queried with. The answers from the Government database 29 decide the steps taken, if any, for further validation if any problems with J Smith or more than one J Smith with this DOB and if such steps are required according to local laws and the type of product selected. All communications to and from the Government database 29 are handled by the Government ID server 28.
**Step 8:** The Central Server 12 takes A in real form, S^{B} and uses them as inputs into a ID generation algorithm (ID) which uses them to generate 'E' - the Individual Identification number which is attached to the a/c file 20. E is then encrypted and sent to the algo server 24.
**Step 9:** The Algo Server 24 then:
   i) Sends E in encrypted form to the terminal 14. The terminal 14 will then use a decrypted form of E to print the un-encrypted E identification number on the ticket 22 **(Step 10).**
   ii) Encrypts Y and sends this (record kept in **Step 3c**) to the terminal 14 to print on the ticket 22.
**Step 10:** The Terminal 14 decrypts E and Y and prints ticket 22 with Y and E

### Option D: Bearer purchase - no identification. (This is used where the products are not subject to local laws requiring some degree of user identification.)

**Step 1:** Transaction slip 30 is filled and the symbol key picked along with all other data with the exception of name and date of birth. In other words, this is a totally anonymous bearer transaction at this moment.

**Step 2:** The ticket is scanned and contains packet B and packet C. Packets B, C, G and H are algo'd (scrambled) then encrypted and G and H encrypted. This info is transmitted from the terminal to the Algo terminal and treated the same way as in Option C.

**Step 3 and 4:** the same as before except packet A is missing.

In **Steps 5 and 6:** packet A is also missing. The central server 12 therefore creates a file with the digital transaction number which it encrypts and sends back to the algo server 24 on the same basis as in above described Option C.

**Step 7** (of Option C) is absent as there is no personal data to be checked.

A file is kept at the central server 12 under the transaction number linking the symbol key the bet data and the terminal and data algorithm together. When this information is compared between the algo server 24 and the central server 12, it can either be used to redeem a prize or link in the transaction to a name and date of birth to allow partial or full registration at a later date should the customer change their mind and wish to move the ticket from a bearer to a part registered or full registered item.

### Option E: Use of a Vendor Card

### E.1

A vendor card is issued/purchased at validation centre 19 with a full registration, i.e. inspection of user's ID documents.
i) Documents scanned producing a digital name and initial and date of birth or documents examined by a human teller and the human teller enters in name and initials to create a digital record.
ii) Selection of symbol key at teller terminal 15 or selection of symbol key and entry on paper slip for scanning by validation terminal 15.

### E.2

i) The purchaser enters name, DOB and symbol key information on a ticket and this is scanned at a non-manned terminal 14. The terminal 14 prints a ticket 22 which contains the name (surname), initial and DOB printed openly on the ticket 22 along with a temporary unique identification number which has been generated by the central server on a basis closely akin to Option C. This ticket is taken to a manned terminal where the printed name, DOB and initial can be compared to the identity documents.
ii) Once the teller verifies the ticket and signals, via the terminal 14, the central server 12 that the identification check is okay, the central server 12 issues a permanent identification number which is printed on either a paper ticket 22 which can be photocopied and the transaction number reused or a vendor card with a more permanent plastic substrate.

The vendor card is used as a swipe for future purchases or the transaction number which is printed on the card is entered on a paper ticket (without the symbol information or any other information apart from the bet and product data being entered) the algo functions, encryption etc are now simply encryption of the permanent unique identification number, packets G. and H. and algo of the packets see D. G. and H. and transmission via the algo server to the central server as in option 3. The difference is that the central server 12 now has a permanent file for J. Smith with his date of birth and enters the new transaction data in the file. The central server 12 can create a transaction number which is an algorithm of some of the pieces of information and transmit that back for the printing of a paper ticket 22 or can avoid this step of the customer so wishes and has so indicated by ticking on the relevant box on the ticket.

### E.3: Part-Registered Vendor Card

This is a card that has been generated at a vending machine using either direct entry on the keypad of the vending machine or allowing the vending machine to scan a paper ticket with the name (surname), DOB and symbol information entered on the paper ticket prior to it being scanned by the un-manned vending machine. The vending machine can also have the option of a small Braille pocket i.e. one in which the hand can feel the Braille style symbols but the human eye cannot see them. In this option, the central server is carrying out checks with the government ID server equivalent to the checks in Option 3 so that if the name and date of birth proved to be problematic, part registration could be rejected and the user directed to a validation centre.

### Option F: Money-Laundering and Money Transferring Differences

Here the name, DOB and selected symbol key of the sender of money is put on the transaction slip by the sender along with varying degrees of detail and on the receiver of the money transfer. The local laws in the states concerned with the money transfer govern this. The sender includes their name (surname), DOB and the name and chosen symbol for the receiver so that the receiver only has to prove their name and the symbol key they have been allotted, note the symbol key they have been allotted is different to the sender's permanent symbol key.

### Option G: For purchaser intending to Buy on a Mobile Phone or Private/Public Computer at a later date.

**Step 1:** The transaction slip 30 is filled out with name, DOB and symbol key information with the alternative of a symbol key that is to be used uniquely on the computer or the mobile phone purchase but is different to the identifying symbol to be used at redemption/maturity of the investment or claiming of the prize. As an alternative or an addition, a mobile phone number can be included in the information to be transmitted on the same basis as in Option C and included in the unique identifier number by the central server as in Option C. The inclusion of a mobile phone number only acts as a security step in the transmission of the purchase information but not in the redemption. This is because the phone could be lost, number changed or the contract ended possibly by the time the prize is collected and highly likely by the time of the redemption of the investment which could be up to 20 years. In addition, for use on computer networks an alias name could be included.

The central server 12 creates unique identifying number as in Option C and transmits this to a terminal 14 for printing on a paper ticket 22 (this can also be printed on a plastic substrate card as in the vendor card option above).

**Step 2:** For purchase on a computer network in an alias, the alias name together with the computer symbol key is entered along with the transaction number as a part verification. Note if this is intercepted, it is still useless for prize claiming or investment claiming as the hidden symbol is never revealed. It is an extra security step to frustrate low-level fraud. **Step 2** on a mobile phone involves the transmission of the purchase information, along with the unique identifier number, along with the purchase symbol key which is different to the identification symbol key. This system can therefore transmit to third parties without fear of compromise and allows for the phone to be lost without the purchaser being compromised as his secret symbol key is never revealed until prize claiming or investment redemption, when he himself will reveal it in person.

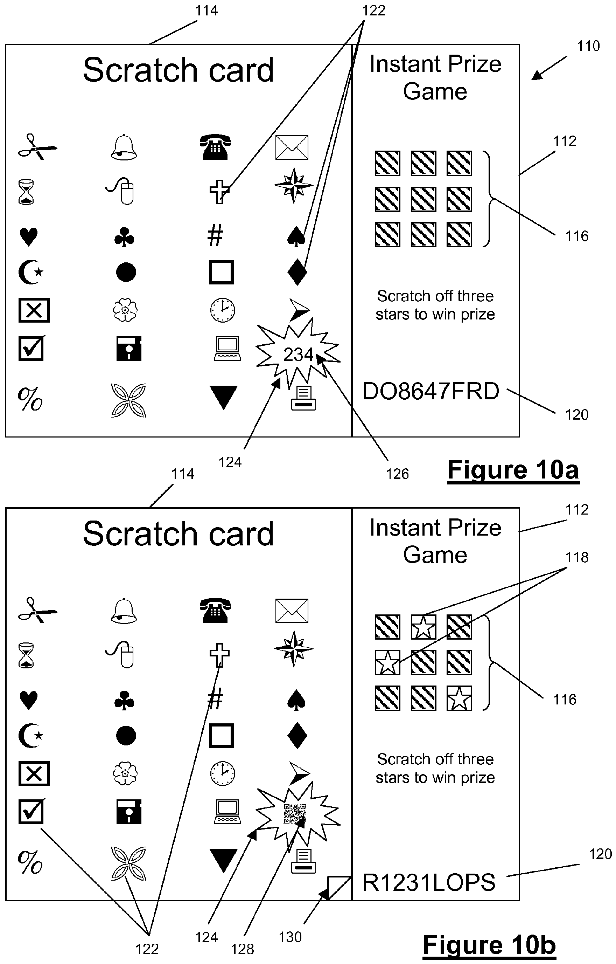

Another set of embodiments of the present invention is now described with respect to Figures 10a, 10b, 11, 11a and 11b. The embodiments are similar to the earlier described embodiments and so only the differences will be elaborated on. Also features described in any of the earlier embodiments can be combined with features of the present embodiment as will be clear to the skilled addressee.

In the following embodiments, the selected symbol is tied to a code which needs to be keyed into or read by a ticket terminal 14. The advantage of this is that the user does not need to refer to a chart 46 as is shown in **Figure 4** or have knowledge of what symbols are available. Rather, these embodiments are directed to use with instantaneous prizes and/or provided with goods and thus are highly attractive to users.

Referring to **Figure 10a****,** there is shown a scratch card 110, which includes an instantaneous scratch off prize game 112 together with a scratch off symbol key panel 114. The instantaneous game 112 can be of any type in which the user scratches off one or more panels 116 to reveal icons/images 118 hidden beneath the scratch-off covering. In this particular case, nine such panels 116 are provided and the object of the game is to choose three panels 116, scratch off the coverings and determine whether the correct combination of icons/images 118 have been revealed (as shown in **Figure 10b****).** Scratching off more than three panels 116 voids the game. This is an example of an instantaneous game that can be played, though any such instantaneous game can be provided on the scratch card 110. For example a spot-the-ball type of instantaneous game can be provided.

Each scratch card is also provided with a unique serial number 120 to enable tracking of the card during manufacture and distribution as well as to enable central validation of a winning scratch card 110. The serial number can also be provided by any machine-readable indicia, such as a bar code.

The scratch-off symbol key panel 114, comprises an array of symbols 122 printed on a scratch off material. Beneath each symbol 122 lies a reference number 126, which is revealed by scratching away at the scratch-off material 124 (see **Figure 10a****).** This number 126 is keyed back into the terminal 14 to represent the user's symbol key as required. The symbol key may comprise more than one symbol and so a multiple-element symbol key may be created by scratching off the required number of symbols 122 to make up the correct length symbol key.

**Figure 10b** shows a similar but slightly different scratch card 110 to that shown in **Figure 10a****.** The main difference is that rather than having reference numbers 126 provided under each scratch-off symbol 122, a machine-readable two-dimensional bar code 128 is provided. Each bar code 128 can enhance the standard security of a scratch card as it can store a great deal of information including data pertaining to the manufacture process, distribution and retail sales outlet through which this card 110 was intended to be sold. This information can be used to validate the authenticity of the card and thus the user's symbol key determined by use of the scratch card 110. In order to read the 2D barcode 128 the terminal 14 is fitted with a 2D barcode scanner (see **Figure 11****).**

The scratch card 110 is also provided with an adhesive peel-off layer 130 for security purposes. Once the user has selected his or her symbol key, and this has been keyed into or read by the terminal 14, the peel-off layer can be stripped off to reveal all of the bar codes 128 beneath each of the symbols 122. In this way, a used scratch card 110 can be prevented from giving away any information about the user's selected symbol key. Alternatively, the scratch card can be provided with instructions (not shown) for the user to scratch off further symbols after use to prevent the used card from giving away information relating to the selected the symbol key.

The scratch card 110 can also provide a means for entry into a prize draw. This would be effected by the user registering the scratch card 110 once the outcome of the instantaneous game has been determined (it does not matter what the outcome of the instantaneous game was for entry into the prize draw) . The user's symbol key would be entered at this point and would be linked to the ticket serial number. If this serial number ticket were to win the prize draw, the input of the correct symbol key would be required in order to redeem the prize. This adds to the security of the scratch card embodiment. The user may also be asked for their personal details when registering for the prize draw event, though this is not essential and when not provided this embodiment falls under another different aspect of the present invention. The use of the symbol key provides a way of ensuring any prize draw winner would be the correct person who made the initial entry by way of the symbol key.

Referring now to **Figure 11****,** a more detailed description of the system 10 of **Figure 1** including terminals 14 and the central server 12, and their interaction, is now provided. The system 10 shown in **Figure 11** comprises several different types of terminals 14. There is a standard lottery terminal 14 which is provided at a POS 27. A lottery terminal with an integrated barcode scanner 14a is provided for reading scratch cards 110 having standard or preferably 2D barcodes 128 or transaction slips 30 having machine readable components in the form of barcodes. A ticket terminal with built-in image capture device 14b is also provided for capturing an image of a transaction slip 30 or scratch card 110 once it is presented for validation or redemption. A ticket terminal with built-in display 14c is also provided which enables real-time information to be provided to the users from the central server 12. This serves to provide a real-time feedback channel to the user to provide information at the POS 27 which may assist in the user's interaction with the system 10.

It is to be appreciated that sale of a scratch card 110 usually requires its validation at POS to notify the central server 12 of its now 'live' status. This event causes a real-time prize pool (see detailed description below) to be updated with the contribution made by sale of that scratch card. However, the sale of the scratch card can be carried out in two stages in order to ensure speed of operation. It is possible for a user to purchase a scratch card 110 in a first stage and not register the same at that point with the central server 12. This may be because there are too many people at the POS 27 or the POS does not have a facility to connect to the central server 12. In stage two, once the instantaneous game has been played (regardless of outcome) it can be taken to a terminal 14 which does have a connection to the central server and can be activated for another function of the scratch card.

The system also provides another type of feedback channel from the central server 12 to the POS 27 to provide real-time information to the user. The information is sent from the server 12 via the communications channels 16 to a television or cable broadcast station 132. The information is relayed and broadcast on a particular channel 133 to a monitor 134 which is provided at the POS 27 for the users to see. In this way, real-time or near-real time information can be provided to the users at the POS 27.

The ticket terminal 14b with built-in image capture device can be provided by an optical reader connected to the terminal 14. The image capture device is arranged to take an image of transaction information provided on the transaction slip or scratch card (possibly including the signature of the user). The terminal acts digitise the information and thereafter to compress the same into a transmittable size and sends this to the central server 12 for storage in the appropriate account file 20. The symbol key is not put on the transaction slip or scanned in. However, it is entered into the terminal and is scrambled and encrypted before transmission to the central server. If an image of the transaction slip is sent to the central server 12, image recognition software programs can be provided at the central server 12 to determine part of what was written on the transaction slip 30 which was scanned into the terminal 14b, for example the user's name, initial and date of birth, but not the symbol. It is also possible to take a photo of the user at the terminal and sending this to the central server to store in the appropriate account file 20. At redemption, the corresponding account file 20 linked to the transaction number can be retrieved and used to validate a winning ticket 22 or registration of a ticket 22 in a long-term bond. The photos could be used to enhance security by making them available on validation and/or redemption.

The system also has a real-time prize incentive pool 136. Unlike other conventional lottery systems for example, the value of the pool is updated in real-time and can be provided to the users via any of the above-described real-time feedback channels. The value of the prize incentive pool 136 is updated with each ticket 22 sale made via a ticket terminal 14. This is because each ticket is electronically validated on sale and this makes the ticket 'go live' for the purposes of the system 10. The contribution that a live ticket makes to the prize can then be added to the value of the prize itself in real-time. This is in stark contrast to the known prior art systems where the closest one gets to a real-time value of the prize pool is an estimate of the prize pool made on experience of what the likely ticket sales will be. Otherwise, scratch card and other instant lotteries for example tend to work to fixed prizes.

In existing lottery systems which use different media channels, the prize pools are separate. For example, the prize pool of a conventional national lottery system is separated from that of scratch card instant ticket systems. Also whilst national lottery systems may have a floating jackpot, scratch cards always have fixed prize amounts. There is an element of risk associated with the fixed prizes as they are based on predicted buying patterns of users which in turn generates the value of the nominal prize. However, with the validation of scratch cards now possible via the present embodiment, lottery tickets and scratch card tickets can now share prize pools and these can be extra-territorial as well as across different products and communications channels. This is a complete departure from previous systems and is counterintuitive. However, this is possible because of the provision of a symbol key on the scratch card which enables it to be validated at a terminal during or after sale.

Furthermore, a completely new concept of scratch cards 110 having real-time floating prizes associated therewith is now possible. For example, in such an arrangement, the user would purchase the scratch card 110 and when it was registered (went live) it would be time stamped and the value of the prize fund at that time would be available for the user if they won. The price of the scratch card 110 could also vary with time to encourage users to purchase and register tickets early rather than wait until the prize fund had increased t its largest size. The registration of the scratch card 110 would be from a terminal 14 which provided a time stamp for the activation of the scratch card 110. Another way in which the off-line scratch card could be used is that it is purchased at a remote outlet, and subsequently activated (taken on-line) at a central communications centre either via a separate scanning facility and/or optical device in a vending machine showing it is whole prior to "scratching" (avoiding insider vendor agent fraud of scratching prior to purchase to find a winning ticket and then claiming losses or theft). Alternatively, with phone activation, a card serial number could be read in by phone and/or SMS to an automated system and the purchaser could also be designated to scratch off one the panels that doesn't contain a prize match item but nonetheless is in the prize match item area of the card. This would mitigate against insider scratching to find a winner as the validation panel might be accidentally exposed rendering the card invalid as three matching symbols etc are revealed but in fact one of them is an invalid validation symbol that only the central system would know where is located on the prize scratch off area of the card. So, a user buys the scratch card1 10, he scratches it off, he does not actually enter into the lottery at that time, but later on when he happens to be in town, he takes the scratch card 110 into a particular POS place, sees what the prize fund is (by viewing the prize fund TV channel displayed at the POS), and effectively gets it to be part of the process.

The scratch card embodiment described above could also be used for a PB (described in our co-pending International patent application (published as WO2009019602). This would create a new premium bond product which has which can have a floating prize incentive - (the lottery premium bond) and which could readily be sold via lottery terminals 14.

It is also possible to use the feedback channel to provide a different way of communicating symbols to users to enable them to select their desired symbol keys. In particular, rather than providing a static chart 46 at the POS 27, or printing the symbols and equivalent numbers on the back of the transaction slip (as has been described in earlier embodiments), it is possible to provide a broadcast of a set of symbols on a given day either with reference numerals attached thereto or in a grid layout. The user can then select his symbol or symbols and write down their numerical equivalents or grid references for keying in later that day. The central server 12 will know what set of symbols it sent to the TV Station 132 for broadcast that day and constantly change the daily set of symbols 122 in a random fashion. The user when providing their symbol key and personal details (surname, initial and data of birth) can also provide the date (or this can be provided by the POS terminal 14 via a time stamp). Then the Server 12 can check the stored files of what symbols were broadcast on a given day to determine the user's symbol key.

In another embodiment, it is possible to register scratch cards over the phone. In this case, the game section would provided with 1-50 numbers. So the user scratches out their number choices and will thus generate another code from underneath the scratched surface. Thus, the scratch card will generate D which is the symbol key and E which is the user's selected game numbers. All they have to do now is call the phone line, and read a series of numbers into a call centre and that generates their entry into the lottery draw. This then becomes the same as a terminally issued lottery ticket which is a more secure bearer type ticket in view of the need to provide the corresponding symbol key on claiming a prize.

An example of such real-time information would be the value of the prize pool 136 which is provided at the central server 12 relation to the prize incentive. The value of the prize pool 136 is updated with the registration of sales of scratch cards 110 and this value is then communicated via the feedback channel to the POS 27. In another embodiment, the registration can actually occur on claiming a winning card 110. However, whilst this embodiment would be easier for the user to use, it would not be able to provide the real-time update of the prize pool 136 as described above.

It is also possible to purchase the scratch cards from a vending machine 138. The vending machine 138 is not connected to the central server 12. In this case, each scratch card 110 sold would be inactive until it was registered. Once registered, the system would know if its existence and could update the prize pool 136 accordingly. Thus this would represent an off-line purchase (at the vending machine 138), followed by a later on-line activation (at the terminal14, 14a, 14b, 14c). Also it is possible for each scratch card to have both a short term prize (instant win game) and a longer term conventional lottery. The instant win could be for a fixed prize if required whereas the longer-term prize would require the user to register the scratch card with the user's symbol key security. Alternatively, the vending machine could have a telecommunications link to allow it to act as an unmanned terminal for the purpose of rendering the card as live.

The advantage about this type of scratch card 110 is that it has a high-security characteristic which enables it to be sold anywhere in the world. It does not matter if the scratch cards 110 go missing or are stolen because they have not been registered and if the cards are not registered they cannot be used. It is possible to ensure that card activation is only on one telephone number which enables a central registry check to be carried out for stolen cards. This helps to prevent theft and forgery.

It is also possible to introduce Braille on the scratch cards 110 so that a blind person could feel and pick the symbol(s) they want for their symbol key. When they have selected their symbol key, the user peels off an adhesive peel-off layer 130 which removes all of the symbols provided on the card. Then the user gets someone to read the card details over the phone to an appropriate operator. The symbols which can be in raised form by thermographic, sunk or embossed printing or intaglio ink each have a number in Braille so the blind person can feel and recognise his symbol key but only communicates the associated Braille number of the symbol key to a person assisting him. The person assisting can't steal the transaction slip 30 or issued ticket 22 from the blind person because they won't know which symbol was picked, typically they won't be able to read Braille or the blind person will cover up the number as they read it out. When the blind person wins the game and goes to collect their winnings, he/she could vocally say what their symbol key was or they could key it into a special keypad suitable for Braille. Also it is possible for the redeeming blind person to reverse the process and once again feel read a board of symbols printed in raised form by thermographic, sunk or embossed printing or intaglio ink and only communicate the Braille reference number of the symbol key for validation. This number association with the symbol by Braille can also be used by the blind in redemption processes as described elsewhere in this document.

**Figure 11** shows a system which is not restricted to the provision of scratch cards 110. It can also be used for generating transaction tickets 22 as has been described in the earlier embodiments.

Referring now to **Figures 11a** and **11b** other ways in which a scratch card 110 can be embodied are shown. **Figure 11a** shows a can of Ralph Cola 140 which also includes an array 142 of symbols 122. Not shown in **Figure 11a** is a gaming panel which can be an instant prize game (similar to that shown in **Figures 10a** and **10b****)** or a lottery prize incentive game. The functionality of the gaming panel (not shown) and the symbol array 142 which is provided on the reverse side of the can 140 is the same as if they had been provided in a ticket 22 or scratch card 110. The purchase of the goods 140 comes with the added feature of being able to take part in a prize incentive game. The provision of an array of symbols enables the user to select a symbol key and hence enable greater security to be obtained in respect of the value of any prize associated with the can of cola 140.

**Figure 11b** shows a mobile phone 150 which can be used to implement a virtual scratch card. The mobile phone 150 shows a symbol select screen 152 in which an array 142 of symbols 122. In use, the user selects one or more symbols 122 to be his symbol key using the navigation controls of the mobile phone 150. Selecting a given symbol 122 causes a simulation of a scratched portion 124 to appear on the screen in place of the scratched symbol and the number 126 (or barcode 128) to be revealed. The symbol select screen 152 also has a virtual peel off sheet button 130a which when selected exposes all of the numbers 126 or barcodes 128 beneath the symbols 122.. Not shown in **Figure 11b** is a gaming panel screen which can be an instant prize game (similar to that shown in **Figures 10a** and **10b****)** or a lottery prize incentive game. The functionality of the gaming panel (not shown) and the symbol array 142 which is provided on the symbol select screen 152 is the same as if they had been provided in a ticket 22 or scratch card 110. However, in this case there is no need for a terminal as the information relating to a ticket purchase can be transmitted in encrypted format to the central server 12 via an appropriate SMS gateway (not shown) for example. Other channels of communication can be used to communicate the selected information to the central server without the use of a ticket terminal 14, such as via WAP (Wireless Application Protocol), or WiFi. Alternatively, the mobile phone can be taken to the proximity of a POS terminal 14 and the ticket information can be communicated to the terminal via Blutooth to Infrared wireless link, for onwards transmission to the central server.

The functionality of the mobile phone could easily be adapted to implement a virtual scratch card. This could readily be carried out by installing a download on the mobile phone, for example an 'App' for the Apple iPhone® could readily implement this.

It is possible also to implement the scratch card as a scratch panel which can be affixed to any article. For example, the scratch panel can be fixed to a toy such that the user purchasing the toy also has the opportunity to take part in a prize incentive draw by registering the entry with a ticket terminal. The registration involves use of the selected symbol to ensure the correct level of security, particularly if the prize incentive also has a fixed bond element as in a PB. This toy could then be marketed towards children which there parents would buy. This toy would contain a scratch off element which would turn it into a premium bond. The toy would be cheap and collectible.

Other embodiments of the present invention, which relate to use of the symbol key to authenticate two individuals in a transaction are now described. The particular uses of this technique are for money transfer between parties in different countries and for payroll payment from an employer to employees. Referring, firstly to money transfer, this is where a user wishes to transfer money from his ownership in one country to an individual in another country. The problems with money transfer have been discussed previously and primarily relate to authenticating the recipient identity as well as meeting money laundering requirements both of which require the sender to provide his identity and to use a conventional secure transmission and reception centres.

The present embodiment overcomes these problems by providing a simple secure way of defining an intended recipient's identity in order to release funds to that person. Of key importance is that the user does not have to provide proof of identity documents in order to meet the money laundering requirements and as such the technical process is quicker than existing methods. This enables the money transfer to take place via an automated teller machine (ATM) or a lottery terminal in such a manner as to be automated and quick. This in itself provides a far greater number of points of service for affecting a money transfer than has previously been possible.

The money transfer can be affected in several different ways. Some of these are described below with reference to **Figure 12****.** The infrastructure shown in **Figure 12** is of a money transfer system 160 which uses components of the previously described authentication system 10. Accordingly, to avoid unnecessary repetition only the differences will be expanded on. The system 160 comprises the central server, local data store 18 and the set of account files 20 as has previously been described. Further, a government ID server 28 together with it Government ID database 29 is provided for Identity checking. The user has various different terminals, which can be used to access the system's money transfer functionality. At the transmitting end for the money transfer, a touch screen Visual Display Unit (VDU) 162 can be used by the user as can a local Automated Teller Machine (ATM) 164. Furthermore, it is even possible to access the system 160 using a PC/Mac 166 with a web connection and a browser. All of these are connectable to the central server 12 via a local country communications network 16.

At the receiving end, a remote ATM terminal 168 is provided which can be accessed via the non-local country communications network 170, which is also connected to the local country communications network 16.

It is possible for users wishing to transfer money to be able to do this from their on-line bank account and, accordingly, the system 160 also includes the on-line bank account server 172 of the sender, together with its bank account database 174.

The first time a user uses the system 160, a unique number is attached to where they have put their surname, initial, birth date and symbol. Anytime they use these, the system 160 reproduces that customer number. It is just like an account number, which is held on the system 160 in the data store 18. Subsequent to issuance of the customer number (which can be in the form of a barcode) instead of the user re-keying in his name, initial, birth date and symbol, the customer number can be used. However, the first time the system 160 is used, it is typically used in the same way the user would purchase a lottery ticket, and so there will be no identity step, no signature or creation of an account. They would just enter a transaction slip.

The user wishing to transfer funds from one country to another, goes to a terminal which can be a local ATM 164, a lottery terminal 14 (not shown in Figure 12), a touch screen VDU 162 at a POS 27 with a printer. The user (sender) either selects the money transfer option on the ATM 164 or the VDU 162 or selects the option 44 in the transaction slip 30 (see **Figure 2****).** The user enters data into the terminal 162, 164, 14 or fills out the transaction slip 30 with his personal information name, initial and birth date in this embodiment, and similar identity information about the intended recipient. The sender puts in his symbol key and picks a transaction symbol for the recipient. The advantage of putting the sender's personal information as well as symbol is that the sender then has a way to track the transaction, if it goes wrong, and he needs to query it. The sender picks a box for the product code on the transaction slip, for his money transfer. He also optionally writes in his mobile phone number, if he has one, and optionally writes in the recipient's mobile or landline number, if they have one. These telephone numbers can be useful for prompting the user to pick up the money transfer if required or confirming the completion of the money transfer, by simple SMS message. He then provides his money to the terminal 14 or at an ATM 164 and indicates, via his bankcard, his on-line bank account. This data can be used to access an on-line sender bank account server 172 via the local communications network 16 this in turn checks the sender's bank account details stored in a database 174 and authorises the stated amount for transfer. The sender receives a transaction ticket 22 (much like a lottery ticket) which has the transaction number on it, and his customer number (if he has one). The details are all stored at the central server in the data store 18.

Once the user has obtained the transaction ticket 22, he contacts the intended recipient (in the non-local country) and communicates to him via a separate channel (SMS message, mobile or landline phone call, e-mail, fax, etc) the symbol key that has been selected for the recipient for this transaction together with the transaction number on his transaction ticket 22. The sender may also provide the recipient with the amount of the transfer. The symbol key and the transaction number is the minimum information, which is required for the recipient to retrieve the funds which have been transferred. The recipient goes to a remote ATM terminal 168 and selects the money transfer option. The ATM 168 is connected to the account files 20 of the central server 12 via the local country communications network 16 and a non-local country communications network 170. The recipient is asked for his personal identify information, surname, initial and date of birth and the specific transaction number to which this transfer relates. Then he is asked for the specific transaction symbol key for this transaction and he may be asked for the amount of the transfer. Once this is provided, the transaction number can be used to look up all of the stored information and recipient-entered information can be verified against the information stored temporarily in the account file 20 relating to this transaction. If they correspond, the funds are released by the ATM terminal 168 to the recipient. Further details on what can be provided at the ATM terminal 164 are described later with reference to **Figure 13****.**

In this process, the user has not provided any more than his surname, initial and date of birth in order to affect a money transfer. No official identity documents are required and the process advantageously can take place at an unmanned lottery terminal or an ATM in a relatively speedy manner. There is no requirement for either the sender or the recipient to have a bank account. If cash is provided to the terminal, then no bank details need be provided by the sender. Further, for the recipient there is the ability to withdraw the funds from an ATM 168 or lottery terminal 14 using simply his knowledge of the security of the transaction. There is no requirement for the recipient to provide identity documents or to visit a secure money transfer outlet. Rather, the unique symbol key for the recipient provides the required security for the money transfer. Finally, no security devices are required for effecting the money transfer transaction and so the cost of the transaction is very low.

Currently, there is no way to withdraw money from an ATM without having an account set up somewhere be it a bank account or a credit card account. Also, currently a user is required to have a physical card to put into the ATM to get it to work. However, in this particular embodiment, no card goes into the ATM 162, 164 and there does not have to be a user bank account 174 as such. There is an account file 20 used in the data store 18 of the central server 12, though this is just a temporary account, which simply facilitates the transaction and is not used thereafter for further transactions. ATMs 164, 168 can be reprogrammed to work without a card and link through to the temporary account file 20 to authorise the transaction without requiring a bank account.

Also there is the symbol key information either in the head of the recipient, or on his mobile phone. And, in a variation of the present embodiment to be absolutely safe, the series of symbols is sent to the mobile phone, and the recipient calls up a free phone number and identifies which symbols constitute his symbol key.

Money laundering issues are addressed by the provision of the Government ID server 28 and its associated ID database 29. The recipient's name, initial and date of birth are sent to the standard government database 29 for that country. Where that person exists (so money laundering rules are not being broken), the transfer can proceed. For further security the sender's name, initial and date of birth can be checked against the Government database 29. The recipient has got a series of checks on the ATM 168 to complete before he can receive the funds, For example, he has to enter in the amount of the transfer and he has to identify or specify data which relates to the symbol key associated with the recipient for this transaction.

In another embodiment of the present invention, it is also possible to execute a money transfer from a PC with an Internet connection 166 (this can actually be any telecommunications device, such as a mobile phone, with an Internet connection). The sender has to have an on-line electronic bank account 174 which can be used to apportion funds to the transfer. The user simply accesses via the computer's browser a website with the money transfer options. The user then carries out the steps of providing the recipient's surname, initial and date of birth (and if required the sender's surname, initial and date of birth) and selects a symbol key for the recipient. The sender may already have a symbol key if they have previously used the service or if they do not, a new symbol key can be generated for the sender by selection of symbols from a given web page. The general ability to select a symbol from a website in a secure way is now described.

It is also possible to use the PC 166 with a web connection and a browser to select a symbol key. In this embodiment, the user utilises a computer to access a website 167 either via a public or personal computer 166 (the computer may be any computing device such as a PDA, mobile phone, laptop, which has the ability to browse the Internet) The user accesses the website 167 and is presented with a series of symbol categories, for example movie stars, politicians, sports personalities, animals, objects etc. The user selects a preferred category, and picks his permanent symbol key from an array of possible symbols presented to him. On completion of the category selection, a transaction number appears on the screen, which is recorded by the user onto a piece of paper. The position of the symbol is also recorded by the user without interaction with the website167. This avoids fraud because if somebody has hacked into the user's computer, they will be unable to determine the details which have been recorded on a slip. This VDU programme, connected to the central server 12 which links to the relevant transaction number, and knows where the symbols are by number.

One variation of the above embodiment relates to the provision of the recipient's name, initial and date of birth by the sender to the terminal. It is possible for the recipient to select their own symbol and not provide this to the sender for greater security. In order to do this the recipient effectively inputs their date of birth, surname and initial into an ATM 164, 168, a lottery terminal 14, a touch screen VDU 162, or a computer 166, selects a personal symbol key and generates a transaction number. In this case, the transaction number links together the recipient's personal details and the symbol key in a machine-verifiable way. This transaction number effectively becomes the recipient's verifiable identity. Also in issuing the transaction number, the recipient's personal details can be checked against the government database 29 to clear the identity of the recipient for money laundering purposes.

The variation is for the recipient to provide his transaction number to the sender to use in the first step of the money transfer authorisation described above. The sender provides the recipient's transaction number as a substitute for the recipient's symbol and the recipient's personal details. Thus the transaction number generated by the sender (sender transaction number) will be linked to the recipient transaction number and so the sender will only have to inform the recipient of the sender transaction number in actioning the money transfer as described above. On receipt of the sender transaction number, this is entered into the ATM 168 or equivalent together with the recipient's transaction number and they recipient's symbol. If these all match the stored information, then the money transaction is authorised and the funds are released.

An alternative to the above way of effecting money transfer is to provide a terminal-generated linking code from the intended recipient which indirectly references the intended recipient's personal details which do not change from transaction to transaction. This linking number is sent in place of the transaction number mentioned above and changes for each transaction. This way provides an enhanced security feature so that the sender and the receiver can communicate whilst keeping personal detail identifiers totally personal and secret.

In implementing this embodiment, the recipient's name and initial and date of birth has been entered into the computer. This then enables this personal information to be sent to and compared with data in standard government databases 29 for that country. Where that person exists (thereby not breaking money laundering rules), the transfer can proceed. The recipient may have a series of checks on the ATM to complete before he can receive the funds, For example, he has to enter in the amount, identifying number, he has to pick his symbol corresponding to a number on the screen which is moving around randomly.

The user has his permanent four-digit number which represents him, but he can't verify that on the card so he has a four-digit number which has to be tied something else, namely the user's name, initial, data of birth and his selected symbol. This information is provided from anywhere to the system via any public computer terminal, for example.

The above-described manner of effecting a money transfer transaction without requiring personal identification documents such as a passport or ID card, can also be used to carry out payroll payments. The advantage here is that the employee does not need to have a bank account to receive pay. This is particularly useful for workers who normally get paid in cash or workers in developing countries where they are less likely to have need for bank accounts. Furthermore, workers can be paid in a speedy fashion via lottery terminals 14 or ATMs 168 without the need for providing personal ID, such as an ID card.

The process is similar to that described above in relation to money transfer function and so only the differences are described in detail hereinafter. The first difference is that the sender needs to have an on-line bank account 174 which is accessible via an on-line bank server 172. Also, whilst not essential, it is highly likely that the sender (employer) has a list of employee records, and each record stores at least the surname, initial, date of birth of the employee recipient. Alternatively, the employer can have a set of unique employee transaction numbers (as has been described above) which act as identities for the employees for payroll purposes. Also the employer's side of the transaction is carried out on a computer 166 which can be linked via the communications network 16 to the website 167 of the central server 12.

As before the sender chooses a symbol key for himself and for the recipient. Either the worker's payroll information is entered into a computer, or a reference to a file containing this information is provided. The amount to be paid is also specified. Once the central server 12 has received all of the information it debits the on-line bank account 174 of the employer generates a transaction number which links together all of the identities and symbol keys. The transaction number is typically e-mailed back to the employer and can be in the form of a barcode, for example a 2D barcode. This transaction receipt 22 can then be printed out by the employer and handed to the employee to act as a replacement to cash wages. The employee then can take the transaction receipt and provide it to an ATM 164 or a lottery terminal 14 and either has it scanned in or enters the transaction number into the terminal. When authorised, the terminal can approve payment to the employee of actual cash itself or can provide a credit which can be added to an electronic cash card (see later). This can also be considered to be like an on-line cheque which needs no bank account to be cashed.

The receipt is more secure than cash as it is only convertible into cash by the person who has knowledge of the symbol key associated with the transaction number provided on the receipt. Thus even if it is lost it is worthless to any third party (unlike cash). The employee can always have the transaction receipt re-issued if it gets lost, by simply providing his personal information and, if necessary, his symbol or transaction number which are already known to the system 160. Also once the cash has been claimed, the central server 12 updates the corresponding account file 20 and the transaction is considered to be completed. Any subsequent claims by the employee for the same payroll transaction will be invalid.

This embodiment of the present invention relating to payroll transactions can be used to generate a store of value card (not shown) which is provided to users who have no bank accounts and which to carry money but do not wish it to cash which is purely bearer and totally insecure. Therefore, a store of value card is a card, which can hold money to be used for transactions without recourse to a bank account or credit card account. However, unlike convention store of value cards, such a London Oyster travel card for example, the store of value card would be extremely cheap to manufacture. The card would not need any RFID capability, any magnetic stripe and any Chip and Pin on-card processor. Rather, it would simply be a durable card, which could have printed on it a 2D barcode. It would be generated at an ATM and using such a card would involve taking the card to any retail outlet and scanning in the 2D barcode into the POS terminal and then entering in the user's symbol key relation to that card. Any loss of the card would be inconsequential as it would be useless without the symbol key, which is in the user's head.

The way in which a payroll transaction would be implemented would be for a payer issuing a payment to someone (which could be on his computer) indicates or accesses his on-line bank account, provides the recipients name and symbol. This transaction is then printed up as a barcode/transaction number on a receipt ticket to him and is given to he receiver, and the receiver goes to an ATM and using his symbol identification gets cash or uses barcode to be effected as a store of value account card to use part of the payment to buy goods.

Referring now to **Figures 13** and **14****,** the recipient (of a money transfer or payroll payment) can interact with the ATM 164, 168 in a number of different ways. One specific way is now described with reference to **Figures 13** and **14****.** At the ATM machine 164, 168, the recipient pushes a product button on the screen 180, which immediately tells the ATM 168 that there is no card to be received. The recipient enters his personal information in the form of surname, initial and date of birth and selects his symbol key as has been described in any of the previous embodiments. Alternatively, the user can enter a transaction number (given to him by the sender) or his customer number relating to the transaction. The customer number would simply be a number which is given to the user on first use of the system to refer to data stored regarding his personal details. In this case, entry of the customer number would be easier for the user in terms of required data entry at an ATM. A series of symbols, and blank keypads for entering information come up on the screen which are shown in **Figure 13****.** On the mobile phone, or on the transaction ticket 22, which the sender had printed at the sending ATM terminal 164 or the touch screen VDU 162, and what he can fax to the recipient, there is a cheat sheet calculator with numbers scrambled on it, which is shown in **Figure 14****.**

Referring in more detail to Figure 13, the ATM screen 180 comprises three panels, a symbol list panel 182, a number keypad array 184 for entering numbers, and a letter keypad array 186 for entering letters. The symbol list 182 sets out a series of symbols 122 together with a corresponding reference numeral 188. Keying in the reference numeral 188 in the number keypad array 184 indicates selection of the correct symbol 122 for the symbol key.

The number keypad array 190 comprises an array of blank number buttons 192. These blank number buttons provide no indication as to which actual number has been assigned to each button 192. For each user, a different assignment can be generated and recorded on their cheat sheet (see **Figure 14** later). Thus, every user has a different relationship of the buttons to the actual numbers. Any third party eavesdropping on a user's interaction with the ATM screen 180 will be unable to work out that relationship. This provides a high level of security for the use of possibly insecure ATMs for example and against 'shoulder surfing' fraud.

Similarly the letter keypad array 194 comprises an array of blank letter buttons 196. These blank letter buttons 196 provide no indication as to which actual letter has been assigned to each button 196. For each user, a different assignment can be generated and recorded on their cheat sheet (see **Figure 14** later) which provides eavesdropping protection at insecure ATMs and 'shoulder surfing' fraud protection. As the set of letters is greater than the set of blank letter buttons provided, a subset of the possible set of letters is assigned to the letter keypad array. These letters are chosen to cover the surname and initial of the user. For any free blank letter buttons, other letters are provided to increase the security of the assignment.

Whilst not shown in **Figure 13****,** the ATM will also provide instruction screens to enable the user to know how to interact with the ATM screen 180 and to provide the correct information at each screen. For example, the user could be asked to first enter the relevant transaction number or customer number using the numerical keypad. Secondly, the user could then be asked to enter in their surname and initial using the letter keypad array 194. Finally, the user could be asked to enter in their date of birth, the numbers corresponding to their symbol and finally the number corresponding to their pseudonym. It is to be appreciated that a pseudonym is a user selected identity label which can be added to an account of a user who has already been checked for valid surname and initial and date of birth. The pseudonym can subsequently be used by the user to identify himself to the system without having to enter in his personal details time and time again.

A cheat sheet 200 is a rendition of a calculator pad with numbers scrambled on it, so that when a blank calculator pad, or even a calculator pad with numbers shown on a screen (for example the screen of an ATM 164, a computer 166 or a touch screen VDU 162), the real number of entry is different to the one selected on the screen. Neither the machine, nor an onlooker would know which is the real symbol the user is agreeing is his.

Each cheat sheet is individual to a user and is printed off at an ATM 164,168. It can be designed to last 3 months or 20 years depending on the substrate which is available for printing and the desired level of security.

The cheat sheet 200 comprises four main sections. The first is a keypad array 202 of symbols 122. The symbols 122 include one or more of the user's selected symbols for the symbol key. The purpose of the keypad array of symbols is to act as an 'aid-memoir' without giving away what the symbol key actually is. In this way, the security of the user's symbol key is not compromised if a third party gets hold of the cheat sheet 200.

Similarly, the cheat sheet 200 is provided with a number keypad array 204 of numbers 206, which is used to positionally translate the location of a desired number onto a blank keypad on the ATM screen 180. Thus, the user wishing to type in the number '3' which would normally be keyed in at the top right hand corner 208 of the array 204 (without any positional translation), would using his personal cheat sheet 200, translate this from the top right hand corner 208 of the number array 204 to the bottom central position 210 of the number array 206,

For letter translation, a third part of the cheat sheet 200 is provided, namely a letter array 212. The letter array is in the form of a keypad with selected letters 214 of the alphabet provided in the array. The letters 214 are selected on the basis that they cover the required input surname and initial. In the example shown, the surname is 'Ahmad' and the initial is 'S'. Other letters 214 are added to the remaining squares of the letter array 212. In this figure, the letters that will be used are highlighted in grey, though in practice there is no visual distinction between a letter to be used 216 and a letter which is not to be used 218.

Finally, the last section of the cheat sheet 200 comprises a list of pseudonyms 220, which lists a user's pseudonym together with nine other possible pseudonyms. The purpose of the keypad array of pseudonyms 220 is to act as an 'aid-memoir' without giving away what the pseudonyms actually is. In this way, the security of the user's selected pseudonym is not compromised if a third party gets hold of the cheat sheet 200.

The use of a cheat sheet 200 is important and advantageous because it means that a central server 12 who is protecting its user details avidly, can afford to link to an ATM 168 in a country where there are some doubts as to the security of the terminal 168. It is advantageous to connect to those terminals 168 for the money transfer function but concerns over the security of user information need to be addressed. The cheat sheet 200 overcomes this problem by effectively keeping all intermediate communications in a scrambled form until they have reached their destination. In other words, the cheat sheet 200 provides a high level of security between the user and the central server12. For any terminal 168 where there is uncertainty about its security, the cheat sheet can be used to stop 'shoulder surfing' (third parties watching your interaction with the ATM to find out your security information). In addition, the cheat sheet makes sure that there is nobody unscrupulous at the foreign ATM 168 who is recording all the information for use later on.

A variation of the embodiments described above would be to allow the user to have access to a fifth panel in the slip 30 in which a memorable date could be included. This is useful if the purchaser is also purchasing a security on behalf on a third party or starting a process for a currency transfer to a third party. In addition, a sixth panel could be provided which would allow for the provision of one or more symbols for the target of the purchase or money transfer. An important element is that as the symbols are preselected for printing on the entry slip, the entry slip could be filled by the user away from the terminal, thereby reducing the amount of time spent by the user at the terminal which in turn reduces clogging at the terminal point of sale. The symbol key is selectable by a simple process of circling or ticking a box next to the symbols making up the key thereby eliminating scanning errors and overcoming problems that could occur in scanning the surname, initial and birth date information. Validation could thus require only the validation of the symbol key of the purchaser and one other item from birth date, name or initial. This validation would have a tolerance to be within a given range of mathematical error generated from a variation from the mean which can be preset for initial or surname scanning errors. The difficulty is that if the system were to allow for teller verification of differences in name and initial such as 'Umar' for 'Omar' this would open the system to the risks of large-scale fraud when financial instruments are being recorded and held for up to 20 or more years.

Another verification could be made available by allowing a seventh panel into which the user generates the last four or more digits of a readily identifiable telephone number. This however can only be a supplementary method as well as only optional for the user as there are several problems which are created by verification using partial or full telephone numbers whether they be landline, satellite or GSM or otherwise mobile. These have to do with the differences in name recording according to airtime contract, landline account and identity documents standards as well as the fact that airtime contracts or landline contracts may not last 20 more years and therefore be extended for validation. The same problem occurs with trying a mobile phone purchase to the same card or mobile phone number identification which itself may be difficult to access even in the short term, due to pay-as-you-go style systems. They are included to give the user and the government a greater sense of security but have a considerable number of problems if they are not tied to a secret secure method as offered by the symbol key selection process described above.

It is also to be appreciated that rather than the symbols which have been described in the above embodiments, names of memorable places, famous people such as celebrities (film stars, sports stars, cartoon characters, politicians, etc), and memorable events can be used. In this case the symbol chart shown in **Figure 4** would be replaced by a chart showing images of the famous person, event or place such that this could be then selected by the user. This is particularly of assistance to an illiterate person who needs to select the symbol key unaided. In this regard, the word 'symbol' as used herein is to be considered to be broad enough to cover such images. Alternatively, though less advantageously, the names of the memorable places, persons or events could be displayed next to its associated numerical code for data entry.

Another variation would be to allow the user who is unbanked to enter their surname, initial and date of birth, as well as their symbol key information and buy or pay into a newly created virtual savings account for the user. The account would be set up on provision of the above data in a partial registration manner. In order to meet money laundering regulations, the money paid in would legally and technically be in escrow until such time as the user- completed formal full registration elsewhere which may involve providing multiple utility bills and other forms of proof of identity. This is effectively banking the unbanked. This method of allowing payments to be made into the system and held in escrow on behalf of a partially registered customer can advantageously be used for buying insurance or making advance payments to an insurance policy or paying utility bills. The user could also gain interest on the money in the account. However, the money would not be able to be withdrawn (in cash) or used to purchase other types of goods and services which are not linked to a future even or tied to a residential address, until the user had fully registered to meet the strict money laundering requirements. Also any withdrawals would, in accordance with the present invention, require the user to provide his symbol key for authentication.

Another variation would be to allow the fully registered but unbanked to cash a cheque equivalent to money held in his suspense account pending clearance of the cheque. The problem that can be solved here is that terminals which are insecure (such as lottery terminals) could receive, hold and transfer cheques to a secure location but would have no means of clearing a cheque and advancing funds against it. Alternatively the cheque could be received and the user create an account for himself as has been described above into which the money is paid into a suspense account and only advanced once the cheque is cleared. This would also allow a cheque cashing service for the unbanked.

Another variation concerns a scratch card with symbols. The scratch card 110 would have a machine-readable serial number provided as well as possible a further function, such a lottery number selection. The symbols would be provided in a randomly generated order on the scratch card, and each symbol would have a corresponding unique machine readable number under the scratch off coating.

In use, the set of symbols making up the user's symbol key are scratched off revealing a previously hidden set of machine-readable numbers. The exposed numbers representing the symbol key, and the serial number of the scratch card are scanned at a terminal together with the symbol key and the information transmitted to a central authenticating server. Alternatively, the numbers representing the serial number and symbol are manually entered into the terminal and transmitted.

Prior to transmission, the serial number and symbol key numbers are scrambled by use of a scrambling algorithm. On receipt at the central server 12, the information is decoded (unscrambled) with knowledge of the scrambling algorithm used at the terminal 14, and the results are checked against a list of existing serial numbers. If a match is found, the serial number is considered to be genuine and the following steps are carried out. The serial number is re algoed (scrambled again by another different scrambling algorithm) at the central server 12 as is the symbol and transmitted back to the terminal as a transaction number. The terminal 14 then prints out the transaction number on the ticket 22. The user only needs to remember their symbol key to verify that they are the correct owner of the original scratch card.

The above-mentioned does not distinguish between the order in which the symbols of the symbol key are entered and this may be an acceptable level of security. However, a high level of security would be afforded by the scratch off card inputting the symbols in correct order. This would be implemented by having several groups of symbols, with one symbol in each group being required to be scratched off in order of the symbols key. Thus, selection of a symbol from a first group would represent the first symbol in the symbol key; selection of a symbol from a second set would represent a second symbol of the symbol key, and so on. The server would have the knowledge of the order of the groups of symbols provided on each card (by looking up the symbols stored against that serial number).

It is also possible to enable the scratch off card 110 to be used for functions requiring at least partial registration as has been described in other embodiments. In this case a section of the scratch off cards may be provided for the user to enter in name, initial and DOB and this information could be scanned in for creating the user account (as described previously). Bet information could also be provided in this section if required. Alternatively, tick boxes could be provided for user entry of this information as has been described above though the size of the scratch card would need to be considerably smaller.

Another variation of the above is to provide an electronic device at the terminal to provide a selection of symbols to the user on a display for a given entry. Selection of symbols from the display (such as a touch screen) could either be unordered as mentioned above or alternatively, ordered. In the latter case, the ordering of user input would be recorded according to an in-built time-sensitive function. The entry could be provided on a ticket which has a machine-readable serial number is provided on it. In use, the user picks the symbol key, the device generates a corresponding code and this, together with the serial number scanned in or generated for this entry, is sent by computer, mobile phone (SMS) or other communications device to the central server in a scrambled form as described above.

In another variation a user buys a scratch card from an unmanned vending machine that is telecommunically connected to the central server (12) and picks a symbol key prior to the card being dispensed from a manual terminal or a VDU terminal connected to the mechanical vending machine. The vending machine then (prior to physically dispensing the card) prints a code in a space provided on the card that corresponds to the symbol as stored on the central server and dispenses the card for scratching. Payment can be by entering a code obtained by SMS on a mobile phone in the ordinary way as a telephone payment function, or by coin, banknote or credit card. All forms of redemption and/or prize validation if it is a bond and/or a bond with prize or simply a lottery with dispensing can be done with reference to the marrying of the code with the symbol that will be known to the customer and the central system alone. Personal information can be entered on a letter keypad on the vending machine as an extra security if required.

There are two further problems which the present invention addresses:
First, the growing issues over problem gamblers may need anyone buying a lottery ticket to provide a name in a quick way that doesn't jam up points of sale and can be quick query against a list of problem gamblers held on a central server (database). The use of the symbol key in combination with the name (surname) allows for the user, on a quick basis, to provide name information on an unregistered basis. This can then be checked in the process of transmitting data to the central server, against a list of problem gamblers held on the central server or elsewhere. At prize redemption, the name identity info is checked and reconciled with the true purchaser, who will also have provided the symbol and the name.

The addition of the requirement of a constantly used set of symbols increases the difficulty for problem gamblers to bypass the safeguards. For example, a problem gambler won't be able to provide a false identity without finding non problem gamblers to act as stooges. As a non-problem gambler may be willing to act in collusion with a problem gambler, namely to allow them to "borrow" their name and stand ready to turn up and claim a prize, but most likely will not be willing to provide them with a unique symbol attached to their name that has to be reused. This is especially true if this process is being used for other financial transactions.

The second problem. The use of the premium bond/ financial instrument method as a means of removing consideration from a gambling transaction would need a process that would reveal the identity of the purchaser to the provider of the gaming. In previous models, the provider of the premium bond and the gaming opportunity were the same or had a secure relationship built round access to the central server.

However, the provider (issuer) of the premium bond may wish to use the services of third parties in supplying chance-based prize-winning schemes, especially those akin to online gaming/ gambling in other jurisdictions. These may not be secure enough to allow such sensitive identity information to be provided and there may be local legal restrictions against transferring such data across borders.

The use of the name which is bound up via an algorithm in a transaction number and also linked to a symbol key, means that a third party can be given a transaction number with extra security and the name and symbol key information kept secret and linked to the bond. Visa versa, the online gambling site will be able to use the transaction number handover to keep its side secret (also allowing for it to stay clear of cross border issues) and allow for a second symbol key selection process so as to allow anonymous winning under secure conditions.

It is possible for the terminal to print a transaction ticket 22 in different forms. One possible form is to have the transaction number printed as a barcode (typically a 2D bar code). The barcode contains the surname, initial, birth date and selected symbol. The barcode can be taken to a scanning site, scanned to the system and then printed on the skin of the customer, namely tattooed. Alternatively, rather than tattooing which would require a form of surgical intervention to remove it is printed on the user's skin with time-indelible ink , i.e. an ink that lasts for about two to three months on human skin. In this regard, the ink could be a henna-based ink, or a non-toxic ink that will have relative long-term lifespan on human/animal skin and/or elsewhere on other non animal materials.

In another variation, the user purchases his prize incentive bond or lottery ticket with the minimum of input information at the lottery terminal 14. The lottery terminal generates a transaction number (a reference number), which is printed on a transaction ticket. Whilst the user has the personal information, which also needs to be put in, this is deferred to the later stage. The user then at a later stage goes to a separate terminal and enters in his transaction number, picks his symbol key, so that the symbol key is picked after the sale but before the occurrence of the prize draw and enters in his personal information. The linking of the transaction number to the symbol key and personal information therefore would in this case be after issuance of the transaction number. Therefore, this forms an intermediary stage between bearer and registration, which is still bearer but allows for post point of sale attributes of a symbol key to be added in order to avoid crowding at kiosks/lottery terminal that are small.

Also the transaction can be split between various different systems by having the pure bearer function with the handover of money at one POS system and the remaining longer processes occurring at another POS system which is unmanned to put in the symbols. The symbol entry process and linking in with the transaction number at a later date, can be done by mobile, PC, ATM or other lottery terminals in less crowded circumstances or other operators lottery terminals.

The two-stage purchase described above can be considered to comprise a Stage 1 SALE in which the user goes to a lottery terminal and purchases ticket for bond as well as a lottery. This would be quick as the amount of information provided would be minimal. In this stage, the user would receive a transaction number provided on a ticket. The user may perhaps only select lottery numbers in order for this stage to work like a conventional lottery.

The purchase would also describe a second stage 'POST SALE' in which the user would go to another POS and activate the ticket by selecting a symbol key, entering his surname, initial and date of birth. Stage 1 or Stage 2 can be carried out via automated vending machine. Stage 2 can be carried out via PC, mobile phone (SMS) ATM or other freer lottery terminal.

It is also possible for a user to have a floating symbol key. This means that either the user has one symbol permanent and one open to variation or the one symbol or all of the symbols are semi-permanent and can be periodically updated, added to, changed completely and or revalidated by the user during the life of the instrument by secure means at a secure registration centre or by a secure registration channel. This also would mean keeping the basic symbol but changing the attribute or reversing the addition or subtraction process. This effectively is intended as an extra fraud prevention and/or client validation process to fulfil KYC (know your client legislation/requirements. The period could be set by internal policy and/or by reference to bond interest payment periods and/or by reference to local laws to detect dead or inactive accounts.

The symbol key can be a floating symbol key, i.e.: valid for a specified period of time. For validation purposes you can have one symbol key, which can be changed on a regular basis requiring the user to go in for revalidation. This married up with long-term investments, keeps a check that the user is still alive, and hasn't been subjected to what is known in the store of value card industry as breakage. Breakage being the user abandoning the card and the issuer being entitled to the money stored in the card. It is to be appreciated that if the user has provided their mobile phone number they can be sent an SMS from the central server asking them to select a new symbol key to associate with the already stored personal and transaction data in their account file 20. If the user has a customer account, the revised symbol can be attached to that account.

Thus in the two-stage approach the transaction ticket can be considered to be a combination of a lottery ticket and a registration receipt.

In some variations, the user only picks one symbol as part of his symbol key and the other required symbols have been generated round by the system automatically. In this case, a bankteller will not know the symbol he has picked but may be able to see other random symbols. All symbols will be needed for identification process at a later date.

When one of the above-described embodiments of the present invention is used to generate a transaction, which also includes a lottery or prize draw, the selection of prize draw or lottery numbers can be carried out in one of three ways. Firstly, all of the numbers are manually selected by the user and entered into the terminal. Secondly, all of the numbers are generated automatically and randomly by the terminal on request (a lucky dip function). Thirdly, the user selects a number which is then input into the terminal and used by an algorithm running on the terminal to generate automatically the draw or lottery numbers. This third solution is not considered to be gambling as it provides a sense of self-selection that is Islamic, i.e. not pure gambling on numbers.

In the third option, the user can self select and the terminal alters or the user can self select and add a birth date and the terminal alters, or the user can use the birth date to generate the draw number, or the user can add a favoured person birth date and the machine alters, or the user can select and add a favoured birth date and the terminal alters. There is an extra security as at redemption, only the user knows the draw number. The symbol key is still needed as users typically will either use birth dates - too easy to crack or will be liable to forget the original draw number for verification. All these draw numbers can also become part of the unique identifier number.

The major problems that the present embodiments address are to do with the type of instruments that the lottery system is trying to handle above its primary functionality of lottery. These other functions have a higher degree of information requirement than ordinary lottery transactions which could conceptually, without the present invention, slow down the process.

Some of the solutions are automation sales through vending machines that are connected online or the symbol process occurring away from the point of sale that nonetheless in an automated machine connected online to avoid the automated machine having to receive money.

An extra security for the scratch card 110 embodiment described above can be to obtain a code from a vendor (changed daily) or by obtained the vendor phoning in so as to combine with the user registration to avoid theft claims typically by vendors.

Having described particular preferred embodiments of the present invention, it is to be appreciated that the embodiments in question are exemplary only and that variations and modifications such as will occur to those possessed of the appropriate knowledge and skills may be made without departure from the scope of the invention as set forth in the appended claims.

## Claims

1. A method of generating a personal authenticated transaction ticket with a registered-user redemption functionality, the method being implemented using a remote transaction information device (14) and a central authentication system, the method comprising:
receiving data at the remote transaction information device from a user, the data including:
i. a symbol key comprising at least one symbol selected by the user from a plurality of distinguishable symbols, which symbols are presented to the user on a chart at the remote transaction information device; and
ii. personal information identifying the user, the personal information including at least the user name;
digitising and encrypting the symbol key and the personal information;
transmitting the encrypted data to a central server (12);
receiving a unique transaction number associated with the symbol key and personal information; and
providing the unique transaction number to the user as part of the transaction ticket, the unique transaction number confirming the registration of the user and the authentication of the transaction ticket with the central server.

2. A method according to Claim 1, further comprising selecting or enabling selection of transaction-specific data relating to a transaction; and the receiving step comprises receiving the transaction-specific data at the remote transaction information device and the digitizing and encrypting step comprises digitising and encrypting the transaction-specific data.

3. A method according to Claim 1 or 2, further comprising selecting a symbol key from a plurality of possible symbols and the receiving step comprises receiving a data element relating to the selected symbol key at the remote transaction information device.

4. A method according to Claim 3, wherein the plurality of possible symbols are provided on an opaque removable film with the corresponding data elements provided underneath the removable film, and the selecting step comprises selectively removing a portion of the film to reveal the corresponding data element and inputting the data element into the transaction information device; and wherein
the removable film is provided on a removable peel-off layer and the method further comprises removing the removable peel-off layer after the inputting step to obscure knowledge of the selected symbol key.

5. A method according to Claim 3, wherein the transaction information device is arranged to display or print the plurality of possible symbols for user selection.

6. A method according to any of Claims 3 to 5, wherein the plurality of possible symbols comprises a set of images of readily recognisable people, cartoon characters, articles or locations.

7. A method according to any preceding claim, wherein the personal information received in the receiving step comprises a user surname, initial and date of birth.

8. A method according to any preceding claim, wherein the encryption step comprises:
applying a scrambling algorithm to the digitised symbol key and the personal user information, to transform the data into a form where each data element can only be understood by knowledge of the function of the scrambling algorithm;
encrypting the scrambled data using a one-time encryption key, wherein the encryption process applied to the scrambled data is changed each time it is used; and
encrypting an identifier of the scrambling algorithm in an unscrambled form and combining this with the encrypted scrambled data to form the encrypted data; and
the scrambling algorithm identifier comprises an identifier of the remote transaction information device and a current date/time.

9. A method of registering a personal transaction ticket with a registered user redemption functionality, the method being implemented using a remote transaction information device (14) and a central authentication system, the method comprising:
receiving data in an encrypted format from the remote transaction information device the data including:
i. a symbol key comprising at least one symbol selected by a user from a plurality of distinguishable symbols, which symbols are presented to the user on a chart at the remote transaction information device; and
ii. personal information identifying the user, the personal information comprising at least the user's name;
decrypting the symbol key and the personal information;
storing the received data in a user-specific account file;
generating a unique transaction number corresponding to received data in the account file, the unique transaction number confirming the registration of the user and the authentication of the transaction ticket with a central server (12): and
sending the unique transaction number associated with the account file to remote transaction information-device for provision to the user as part of the personal transaction ticket.

10. A method according to Claim 9, wherein the receiving step further comprises:
receiving encrypted user-selected transaction-specific data relating to a transaction; and
the decrypting step comprises decrypting the transaction-specific data and the storing step comprises storing the transaction-specific data in the user-specific transaction file.

11. A method according to Claim 9 or 10, wherein at least part of the received data is in a scrambled format and the decrypting step comprises:
applying an unscrambling algorithm to the received data to transform the data into a form where at least one of the data elements can be understood, the unscrambling algorithm utilising knowledge of the function applied to scramble the received data initially, the method further comprising:
applying a central scrambling algorithm to the decrypted symbol key to create an encoded version of the symbol key which is only able to be decoded by the central authentication system; and wherein
the sending step comprises sending the encoded symbol key to the remote transaction information device with the unique transaction number for provision as part of the personal transaction ticket.

12. A method according to any of Claims 9, 10 or 11, wherein at least part of the received data is in a scrambled format and the decrypting step comprises:
applying an unscrambling algorithm to the received data to transform the data into a form where at least one of the data elements can be understood, the unscrambling algorithm utilising knowledge of the function applied to scramble the received data initially; and wherein
the received data includes a scrambling algorithm identifier in a scrambled and an unscrambled format, and the method further comprises:
using the scrambling algorithm identifier to retrieve a complimentary unscrambling algorithm to scrambling algorithm;
applying the unscrambling algorithm to the received data; and
comparing the received unscrambled scrambling algorithm identifier with the results of applying the complimentary unscrambling algorithm to the scrambling algorithm identifier in a scrambled format

13. A method according to any of Claims 9 to 12, further comprising crosschecking the validity of the identity of the user by sending the decrypted personal information identifying the user to a secure personal identity database.

14. A method according to Claim 13, wherein the crosschecking step comprises confirming that the personal information relates to an owner of the ticket independently of the authentication of the ticket.

15. A method according to any of Claims 9 to 14, wherein the symbol key is a floating symbol key which is valid for a specified period of time, and the method further comprises:
sending a notification to the user to select a replacement symbol key and communicate the same to the central server.

## Patentansprüche

1. Verfahren zum Erzeugen eines authentifizierten Transaktionsticket mit einer Einlösungsfunktionalität für einen registrierten Benutzer, wobei das Verfahren unter Verwendung einer entfernten Transaktionsinformationsvorrichtung (14) und eines zentralen Authentifizierungssystems implementiert wird, wobei das Verfahren umfasst:
Empfangen von Daten an der entfernten Transaktionsinformationsvorrichtung von einem Benutzer, wobei die Daten enthalten:
i. einen Symbolschlüssel, der wenigstens ein Symbol umfasst, das von dem Benutzer aus einer Mehrzahl von unterscheidbaren Symbolen ausgewählt wird, die dem Benutzer auf einem Diagramm an der entfernten Transaktionsinformationsvorrichtung präsentiert werden; und
ii. persönliche Informationen, die den Benutzer identifizieren, wobei die persönlichen Informationen wenigstens den Benutzername enthalten;
Digitalisieren und Verschlüsseln des Symbolschlüssels und der persönlichen Informationen;
Übertragen der verschlüsselten Daten an den zentralen Server (12);
Empfangen einer eindeutige Transaktionsnummer erhalten, die mit dem Symbolschlüssel und den persönlichen Informationen assoziiert ist; und
Bereitstellen der eindeutigen Transaktionsnummer für den Benutzer als Teil des Transaktionstickets, wobei die eindeutige Transaktionsnummer die Registrierung des Benutzers und die Authentifizierung des Transaktionstickets mit dem zentralen Server bestätigt.

2. Verfahren nach Anspruch 1, ferner umfassend das Auswählen oder Ermöglichen der Auswahl von transaktionsspezifische Daten, die sich auf eine Transaktion beziehen; und wobei der Empfangsschritt das Empfangen der transaktionsspezifische Daten an der entfernten Transaktionsinformationsvorrichtung umfasst und der Digitalisierungs- und Verschlüsselungsschritt das Digitalisieren und Verschlüsseln der transaktionsspezifischen Daten umfasst.

3. Verfahren nach Anspruch 1 oder 2, ferner umfassend das Auswählen eines Symbolschlüssels aus einer Mehrzahl von möglichen Symbolen umfasst, und wobei der Empfangsschritt das Empfangen eines Datenelements, das sich auf den ausgewählten Symbolschlüssel bezieht, an der entfernten Transaktionsinformationsvorrichtung umfasst.

4. Verfahren nach Anspruch 3, wobei die Mehrzahl der möglichen Symbole auf einer undurchsichtigen, entfernbaren Folie mit den entsprechenden Datenelementen bereitgestellt sind, die unter dem entfernbaren Folie bereitgestellt sind, und der Auswahlschritt das selektive Entfernen eines Abschnitts der Folie, um die entsprechendes Datenelement aufzudecken, und das Eingeben des Datenelements in die Transaktionsinformationsvorrichtung umfasst; und wobei
die entfernbare Folie auf einer entfernbaren Abziehschicht bereitgestellt ist, und das Verfahren ferner das Entfernen der entfernbaren Abziehschicht nach dem Eingabeschritt umfasst, um die Kenntnis des ausgewählten Symbolschlüssels zu verdecken.

5. Verfahren nach Anspruch 3, wobei die Transaktionsinformationsvorrichtung angeordnet ist, um die Mehrzahl der möglichen Symbole für die Benutzerauswahl anzuzeigen oder zu drucken.

6. Verfahren nach einem der Ansprüche 3 bis 5, wobei die Mehrzahl der möglichen Symbole einen Satz von Bildern von leicht erkennbaren Personen, Zeichentrickfiguren, Artikeln oder Standorten umfasst.

7. Verfahren nach einem vorhergehenden Anspruch, wobei die persönlichen Informationen, die in der Empfangsschritt empfangen werden, den Nachnamen, den Anfangsbuchstaben und das Geburtsdatum des Benutzers umfassen.

8. Verfahren nach einem vorhergehenden Anspruch, wobei der Verschlüsselungsschritt umfasst:
Anwenden eines Verschlüsselungsalgorithmus auf den digitalisierten Symbolschlüssel und die persönlichen Benutzerinformationen, um die Daten in eine Form umzuwandeln, in der jedes Datenelement nur durch die Kenntnis der Funktion des Geheimverschlüsselungsalgorithmus verstanden werden kann;
Verschlüsseln der geheimverschlüsselten Daten unter Verwendung eines einmaligen Verschlüsselungsschlüssels, wobei der Verschlüsselungsprozess, der auf die verschlüsselten Daten angewendet wird, bei jeder Verwendung geändert wird; und
Verschlüsseln einer Kennung des Geheimverschlüsselungsalgorithmus in eine nicht geheimverschlüsselte Form und Kombinieren dieser Kennung mit den verschlüsselten geheimverschlüsselten Daten zum Ausbilden der verschlüsselten Daten; und
der Geheimverschlüsselungsalgorithmus eine Kennung der entfernten Transaktionsinformationsvorrichtung und ein aktuelles Datum/eine aktuelle Uhrzeit umfasst.

9. Verfahren zum Registrieren eines Transaktionstickets mit einer Einlösungsfunktionalität eines registrierten Benutzers, wobei das Verfahren unter Verwendung einer entfernten Transaktionsinformationsvorrichtung (14) und einem zentralen Authentifizierungsservers implementiert wird, wobei das Verfahren umfasst:
Empfangen von Daten in einem verschlüsselten Format von der entfernten Transaktionsinformationsvorrichtung, wobei die Daten enthalten:
i. einen Symbolschlüssel, der wenigstens ein Symbol umfasst, das von einem Benutzer aus einer Mehrzahl von unterscheidbaren Symbolen ausgewählt wird, die dem Benutzer auf einem Diagramm an der entfernten Transaktionsinformationsvorrichtung präsentiert werden; und
ii. persönliche Informationen, die den Benutzer identifizieren, wobei die persönlichen Informationen wenigstens den Benutzername enthalten;
Entschlüsseln des Symbolschlüssels und der persönlichen Informationen;
Speichern der empfangenen Daten in einer benutzerspezifischen Kontodatei;
Erzeugen einer eindeutigen Transaktionsnummer, die den empfangenen Daten in der Kontodatei entspricht, wobei die eindeutige Transaktionsnummer die Registrierung des Benutzers und die Authentifizierung des Transaktionstickets mit einem zentralen Server (12) bestätigt, und
Senden der eindeutigen Transaktionsnummer, die mit der Kontodatei assoziiert ist, an die entfernte Transaktionsinformationsvorrichtung zum Bereitstellen an den Benutzer als Teil des persönlichen Transaktionstickets.

10. Verfahren nach Anspruch 9, wobei der Empfangsschritt ferner umfasst:
Empfangen von benutzerausgewählten, transaktionsspezifischen Daten, die sich auf eine Transaktion beziehen; und
der Entschlüsselungsschritt das Entschlüsseln der transaktionsspezifischen Daten umfasst und der Speicherschritt das Speichern der transaktionsspezifischen Daten in der benutzerspezifischen Transaktionsdatei umfasst.

11. Verfahren nach Anspruch 9 oder 10, wobei wenigstens ein Teil der empfangenen Daten in einem geheimverschlüsselten Format vorliegt und der Entschlüsselungsschritt umfasst:
Anwenden eines Geheimentschlüsselungsalgorithmus auf die empfangenen Daten, um die Daten in eine Form umzuwandeln, in der wenigstens eines der Datenelemente verstanden werden kann, wobei der Geheimentschlüsselungsalgorithmus die Kenntnis der Funktion nutzt, die angewendet wurde, um die empfangenen Daten anfänglich zu geheimverschlüsseln, wobei das Verfahren ferner umfasst:
Anwenden eines zentralen Geheimentschlüsselungsalgorithmus auf den entschlüsselten Symbolschlüssel, um eine codierte Version des Symbolschlüssel zu bilden, die nur durch das zentrale Authentifizierungssystem dekodiert werden kann; und wobei
der Sendeschritt das Senden des kodierten Symbolschlüssel an die entfernte Transaktionsinformationsvorrichtung mit der eindeutigen Transaktionsnummer zum Bereitstellen als Teil des persönlichen Transaktionstickets umfasst.

12. Verfahren nach einem der Ansprüche 9, 10 oder 11, wobei wenigstens ein Teil der empfangenen Daten in einem geheimverschlüsselten Format vorliegt und der Entschlüsselungsschritt umfasst:
Anwenden eines Geheimentschlüsselungsalgorithmus auf die empfangenen Daten, um die Daten in eine Form umzuwandeln, in der wenigstens eines der Datenelemente verstanden werden kann, wobei der Geheimentschlüsselungsalgorithmus die Kenntnis der Funktion nutzt, die angewendet wurde, um die empfangenen Daten anfänglich zu geheimverschlüsseln; und wobei
die empfangenen Daten eine Geheimverschlüsselungsalgorithmuskennung in einem geheimverschlüsselten und nicht geheimverschlüsselten Format enthalten und das Verfahren ferner umfasst:
Verwenden der Geheimverschlüsselungsalgorithmuskennung, um einen Geheimentschlüsselungsalgorithmus zu erhalten, der zu dem Geheimverschlüsselungsalgorithmus komplementär ist;
Anwenden des Geheimentschlüsselungsalgorithmus auf die empfangenen Daten; und
Vergleichen der empfangenen nicht geheimverschlüsselten Geheimverschlüsselungsalgorithmuskennung mit den Ergebnissen des Anwendens des komplementären Geheimentschlüsselungsalgorithmus mit der Geheimverschlüsselungsalgorithmuskennung in einem geheimverschlüsselten Format.

13. Verfahren nach einem der Ansprüche 9 bis 12, ferner umfassend das Gegenprüfen der Validität der Identität des Benutzers durch Senden der entschlüsselten persönlichen Informationen, die den Benutzer identifizieren, an eine sichere persönliche Identitätsdatenbank.

14. Verfahren nach Anspruch 13, wobei der Gegenprüfungsschritt das Bestätigen umfasst, dass sich die persönlichen Informationen auf einen Besitzer des Tickets beziehen, unabhängig von der Authentifizierung des Tickets.

15. Verfahren nach einem der Ansprüche 9 bis 14, wobei der Symbolschlüssel ein schwebender Symbolschlüssel ist, der für einen spezifischen Zeitraum gültig ist, und das Verfahren ferner umfasst:
Senden einer Benachrichtigung an einen Benutzer, um einen Ersatzsymbolschlüssel auszuwählen und denselben dem zentralen Server mitzuteilen.

## Revendications

1. Procédé de génération d'un billet de transaction authentifié personnel avec une fonctionnalité de réclamation de prix d'utilisateur enregistré, le procédé étant mis en œuvre en utilisant un dispositif d'informations de transaction à distance (14) et un système d'authentification central, le procédé comprenant :
la réception de données au dispositif d'informations de transaction à distance à partir d'un utilisateur, les données incluant :
i. une clef de symbole comprenant au moins un symbole sélectionné par l'utilisateur à partir d'une pluralité de symboles distinguables, lesquels symboles sont présentés à l'utilisateur sur un tableau au dispositif d'informations de transaction à distance ; et
ii. des informations personnelles identifiant l'utilisateur, les informations personnelles incluant au moins le nom d'utilisateur ;
la numérisation et le chiffrement de la clef de symbole et des informations personnelles ;
la transmission des données chiffrées à un serveur central (12) ;
la réception d'un numéro de transaction unique associé à la clef de symbole et aux informations personnelles ; et
la fourniture du numéro de transaction unique à l'utilisateur en tant que partie du billet de transaction, le numéro de transaction unique confirmant l'enregistrement de l'utilisateur et l'authentification du billet de transaction auprès du serveur central.

2. Procédé selon la revendication 1, comprenant en outre la sélection ou la permission de sélection de données spécifiques de transaction concernant une transaction ; et l'étape de la réception comprend la réception des données spécifiques de transaction au dispositif d'informations de transaction à distance et l'étape de la numérisation et du chiffrement comprend la numérisation et le chiffrement des données spécifiques de transaction.

3. Procédé selon la revendication 1 ou 2, comprenant en outre la sélection d'une clef de symbole à partir d'une pluralité de symboles possibles et l'étape de la réception comprend la réception d'un élément de données concernant la clef de symbole sélectionnée au dispositif d'informations de transaction à distance.

4. Procédé selon la revendication 3, dans lequel la pluralité de symboles possibles sont prévus sur un film amovible opaque avec les éléments de données correspondants prévus en dessous du film amovible, et l'étape de la sélection comprend l'enlèvement sélectif d'une portion du film pour révéler l'élément de données correspondant et l'entrée des élément de données dans le dispositif d'informations de transaction ; et dans lequel
le film amovible est prévu sur une couche décollable amovible et le procédé comprend en outre l'enlèvement de la couche décollable amovible après l'étape de l'entrée pour dissimuler la connaissance de la clef de symbole sélectionnée.

5. Procédé selon la revendication 3, dans lequel le dispositif d'informations de transaction est agencé pour afficher ou imprimer la pluralité de symboles possibles pour la sélection par l'utilisateur.

6. Procédé selon l'une quelconque des revendications 3 à 5, dans lequel la pluralité de symboles possibles comprend un ensemble d'images de personnes, de caractères de dessin animé, d'articles ou de lieux facilement reconnaissables.

7. Procédé selon une quelconque revendication précédente, dans lequel les informations personnelles reçues dans l'étape de la réception comprennent le nom de famille, l'initiale et la date de naissance de l'utilisateur.

8. Procédé selon une quelconque revendication précédente, dans lequel l'étape du chiffrement comprend :
l'application d'un algorithme d'embrouillage sur la clef de symbole numérisée et les informations d'utilisateur personnelles, pour transformer les données en une forme où chaque élément de données peut seulement être compris par connaissance de la fonction de l'algorithme d'embrouillage ;
le chiffrement des données embrouillées en utilisant une clef de chiffrement non réutilisable, dans lequel le processus de chiffrement appliqué sur les données embrouillées est changé à chaque fois qu'il est utilisé ; et
le chiffrement d'un identifiant de l'algorithme d'embrouillage sous une forme non embrouillée et l'association de celui-ci aux données embrouillées chiffrées pour former les données chiffrées ; et
l'identifiant d'algorithme d'embrouillage comprend un identifiant du dispositif d'informations de transaction à distance et une date/heure actuelle.

9. Procédé d'enregistrement d'un billet de transaction personnel auprès d'une fonctionnalité de réclamation de prix d'utilisateur enregistré, le procédé étant mis en œuvre en utilisant un dispositif d'informations de transaction à distance (14) et un système d'authentification central, le procédé comprenant :
la réception de données dans un format chiffré à partir du dispositif d'informations de transaction à distance, les données incluant :
i. une clef de symbole comprenant au moins un symbole sélectionné par un utilisateur à partir d'une pluralité de symboles distinguables, lesquels symboles sont présentés à l'utilisateur sur un tableau au dispositif d'informations de transaction à distance ; et
ii. des informations personnelles identifiant l'utilisateur, les informations personnelles comprenant au moins le nom de l'utilisateur ;
le déchiffrement de la clef de symbole et des informations personnelles ;
le stockage des données reçues dans un fichier de compte spécifique d'utilisateur ;
la génération d'un numéro de transaction unique correspondant à des données reçues dans le fichier de compte, le numéro de transaction unique confirmant l'enregistrement de l'utilisateur et l'authentification du billet de transaction auprès d'un serveur central (12), et
l'envoi du numéro de transaction unique associé au fichier de compte au dispositif d'informations de transaction à distance pour la fourniture à l'utilisateur en tant que partie du billet de transaction personnel.

10. Procédé selon la revendication 9, dans lequel l'étape de la réception comprend en outre :
la réception de données chiffrées spécifiques de transaction sélectionnées par utilisateur concernant une transaction ; et
l'étape du déchiffrement comprend le déchiffrement des données spécifiques de transaction et l'étape du stockage comprend le stockage des données spécifiques de transaction dans le fichier de transaction spécifique d'utilisateur.

11. Procédé selon la revendication 9 ou 10, dans lequel au moins une partie des données reçues est dans un format embrouillé et l'étape du déchiffrement comprend :
l'application d'un algorithme de désembrouillage sur les données reçues pour transformer les données en une forme où au moins un des élément de données peut être compris, l'algorithme de désembrouillage utilisant la connaissance de la fonction appliquée pour embrouiller les données reçues initialement, le procédé comprenant en outre :
l'application d'un algorithme d'embrouillage central sur la clef de symbole déchiffrée pour créer une version encodée de la clef de symbole qui est seulement capable d'être décodée par le système d'authentification central ; et dans lequel
l'étape de l'envoi comprend l'envoi de la clef de symbole encodée au dispositif d'informations de transaction à distance avec le numéro de transaction unique pour la fourniture en tant que partie du billet de transaction personnel.

12. Procédé selon l'une quelconque des revendications 9, 10 ou 11, dans lequel au moins une partie des données reçues est dans un format embrouillé et l'étape du déchiffrement comprend :
l'application d'un algorithme de désembrouillage sur les données reçues pour transformer les données en une forme où au moins un des éléments de données peut être compris, l'algorithme de désembrouillage utilisant la connaissance de la fonction appliquée pour embrouiller les données reçues initialement ; et dans lequel
les données reçues incluent un identifiant d'algorithme d'embrouillage dans un format embrouillé et désembrouillé, et le procédé comprend en outre :
l'utilisation de l'identifiant d'algorithme d'embrouillage pour récupérer un algorithme de désembrouillage complémentaire à l'algorithme d'embrouillage ;
l'application de l'algorithme de désembrouillage sur les données reçues ; et
la comparaison de l'identifiant d'algorithme d'embrouillage désembrouillé reçu aux résultats de l'application du algorithme de désembrouillage complémentaire à l'identifiant d'algorithme d'embrouillage dans un format embrouillé.

13. Procédé selon l'une quelconque des revendications 9 à 12, comprenant en outre la contre-vérification de la validité de l'identité de l'utilisateur par l'intermédiaire de l'envoi des informations personnelles déchiffrées identifiant l'utilisateur à une base de données d'identité personnelle sécurisée.

14. Procédé selon la revendication 13, dans lequel l'étape de la contre-vérification comprend la confirmation que les informations personnelles concernent un propriétaire du billet indépendamment de l'authentification du billet.

15. Procédé selon l'une quelconque des revendications 9 à 14, dans lequel la clef de symbole est une clef de symbole flottante qui est valide pendant une période spécifiée, et le procédé comprend en outre :
l'envoi d'une notification à l'utilisateur pour sélectionner une clef de symbole de remplacement et communiquer celle-ci au serveur central.
